Europäisches Patentamt

European Patent Office

Office européen des brevets

(19)

(11) **EP 1 130 510 A2**

(12) ## EUROPEAN PATENT APPLICATION

(43) Date of publication:
05.09.2001 Bulletin 2001/36

(51) Int Cl.⁷: **G06F 9/46**

(21) Application number: 01100136.9

(22) Date of filing: 15.01.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: **14.01.2000 EP 00100739**
**14.01.2000 EP 00100211**
**14.01.2000 EP 00100740**
**14.01.2000 EP 00100212**
**14.01.2000 EP 00100738**

(71) Applicant: **SUN MICROSYSTEMS, INC.**
**Palo Alto, California 94303 (US)**

(72) Inventors:
• **Hütsch, Matthias**
**22111 Hamburg (DE)**
• **Hofmann, Ralf**
**22143 Hamburg (DE)**
• **Sommerfeld, Kai**
**21149 Hamburg (DE)**
• **Schulz, Torsten**
**25421 Pinneberg (DE)**
• **Eilers, Bernd**
**21107 Hamburg (DE)**
• **Pfohe, Thomas**
**22143 Hamburg (DE)**
• **Hönnig, Michael**
**22143 Hamburg (DE)**
• **Meyer, Markus**
**21423 Winsen/Luhe (DE)**

(74) Representative: **HOFFMANN - EITLE**
**Patent- und Rechtsanwälte**
**Arabellastrasse 4**
**81925 München (DE)**

(54) **Method and system for remote control and interaction with a run time environment component**

(57)    A user device, a first computer system, includes a lightweight component that receives user input actions for a runtime environment component that is executing on a second computer system. The lightweight component sends a remote input action command to a user interface infrastructure that is executing on the second computer system. In response to the remote input action command, the user interface infrastructure sends a local input action command to the runtime environment component that processes the command, and issues a local output command to the user interface infrastructure that in turn sends a remote output command to the lightweight component on the user device. In response to the remote output command, the lightweight component causes an output on the user device.

Fig. 1

EP 1 130 510 A2

**Description**

BACKGROUND OF THE INVENTION

Field of the Invention

The present invention relates to runtime environment component services, and in particular to a runtime environment component services provided by a first computer system to a second computer system over a communication network.

Description of Related Art

Today, many computer networks are arranged as client-server systems. In a client-server system, a potentially large number of smaller computer systems, like laptops or handhold organizers, called clients, are, temporarily or permanently connected to a larger computer system, called server. The connection between the clients and the server may be effected, for example, via the Internet.

In client-server systems, a client typically has limited storage and processing capabilities. Nevertheless, many software programs are executed on the clients. One prior art way to make a software program on the server available to clients was to use a browser on the client. The browser was used to transfer a relatively large software program or a relatively large part thereof from the server to a client so that the software program could be executed locally on the client. This method required that the software program or a part thereof be stored and processed on the client.

For this purpose, the client must have sufficient storage capacity and processing capability to execute the software program locally. These requirements may conflict with the aim of having smaller and smaller clients, including cellular telephones, which may not have enough storage capacity or processing capability for storing or processing, respectively, large software programs or large parts of software programs.

Frequently, a software program requested by a client for execution is transferred every time the software program is executed. The speed of this download depends on the available data transfer capacity of the network connecting the server and the client. Here, frequently the available bandwidth of the network connection is decisive. In many instances the described client-server systems would be undesirably slow in executing a software program, because the download takes too much time.

Therefore, software programs, which are called frequently for execution on a client, may be permanently, or at least for some time, stored on the client. This leads, however, to the task of regularly, and maybe even individually, updating a potentially large number of clients, if relevant software programs are amended or updated. Considerable administration efforts for client-server systems may be the consequence.

It is also known to include into a software program executed on a client procedures, which are executed on a server. A prior technique to implement this used CORBA. For example, certain more complicated calculations, the result of which may be needed on a client, were carried out on a server connected with the client over a network. However, this required that the program developer include particular commands into the code of the software program to be executed on the client for calling the software program to be executed on the server, in the given example the calculation program. This was not only cumbersome, but also led to incompatibilities when the software program to be executed on the server was amended.

It is further known to allow a user to initiate execution of a program server from a client and to review the results of the program execution on the client. This approach is used in the UNIX X-Windows system. However, this approach did not permit the client to control the program and did not permit integration of server side functionality into the client side environment at the level of function calls.

SUMMARY OF THE INVENTION

It is an object of the present invention to provide improved access from a first computer system to resources available at a second computer system.

The object of the invention is achieved by the features of the independent claims.

According to one embodiment of the present invention, a user device, a first computer system, includes a lightweight component that receives user input actions for a runtime environment component that is executing on a second computer system. The lightweight component sends a remote input action command to a user interface infrastructure that is executing on the second computer system.

In response to the remote input action command, the user interface infrastructure sends a local input action command to the runtime environment component that processes the command, and issues a local output command to the user interface infrastructure that in turn sends a remote output command to the lightweight component on the user device. In response to the remote output command, the lightweight component causes an output on the user device. This output could be redrawing a display, playing a sound, or perhaps routing information to a local printer.

All the management of components in the user interface, management of data and so on is performed on the second computer system and so the lightweight component only has, for example, to update the display to reflect the state of the runtime environment component as indicated by the remote output command received. It appears to the user that the runtime environment component is executing locally on the user device despite that fact that the user device is only functioning as an input/output device for the runtime environment component.

In one embodiment, a method for presenting a runtime environment component service by a first computer system to a second computer system over a communication network is performed by the first computer system. The method includes generating a user interface infrastructure on the first computer system. The user interface infrastructure receives graphic user interface events from the second computer system and sends remote graphic user interface commands to the second computer system. The user interface infrastructure is used to initialize the runtime environment component service. The runtime environment component service sends graphic user interface commands to the user interface infrastructure.

In another embodiment, the first computer system receives a remote input action command for a runtime environment component service via a communication network. The remote input action is being generated in the second computer system by a lightweight component corresponding to the runtime environment component service. A local input action command is transmitted to the runtime environment component service in response to the remote input action command. The local input action command is processed by the runtime environment component service, and a local output command is generated by the runtime environment component service for a graphical user interface. A remote output command is transmitted to the lightweight component in response to the local output command.

In yet another embodiment, a method for enabling a user device to run a runtime environment component on another computer includes running a browser on the user device. A lightweight component is run within the browser. The lightweight component receives user input actions on the user device and generates corresponding user interface events to the another computer for processing by the runtime environment component.

A computer program product, in one embodiment, comprises computer code including a remote frame window class that in turn includes a remote output device interface and a remote frame window interface. The computer code optionally includes any or all of a bean frame class comprising a frame interface; a bean window class including an event handler interface and a window peer interface; and an abstract windowing toolkit.

According to a further embodiment a method is provided for presenting runtime environment component services by a first computer system to a second computer system over a communication network, said method being performed by said first computer system, and comprising the steps of:

a) receiving a request for a runtime environment component service via said communication network, said request being generated by a lightweight component in said second computer system, wherein the lightweight component corresponds to the requested runtime environment component service,

b) accessing a runtime environment component being able to provide said requested runtime environment component, service,

c) executing said runtime environment component on said first computer system for producing a result according to said received request for a runtime environment component service,

d) transmitting, over said network, a response comprising said result to said second computer system.

The invention comprises also a method for providing runtime environment component services from a first computer system over a communication network to a second computer system, said method being executed on said second computer system and comprising the steps of:

a) generating a request for a runtime environment component service by means of a lightweight component of said second computer system, wherein the lightweight component corresponds to the requested runtime environment component service,

b) transmitting said request for said runtime environment component service to said first computer system over said communication network, and

c) receiving a response comprising a result according to said requested runtime environment component service, said result being produced by a runtime environment component executed on said first computer system and transmitted with said response by said first computer system over said network.

Thus, the runtime environment component services are presented by a first computer system to a second computer system over a communication network, whereby upon receiving a request for a runtime environment component service transmitted by said second computer system over said communication network, the first computer system executes a runtime environment component for producing a result according to said received request, and transmits - over said network - a response comprising said result to said second computer system.

In the context of the present invention a lightweight component is a software program which is able to request a runtime environment component service, wherein the lightweight component corresponds to this runtime environment component service, and wherein the lightweight component is tiny enough to be downloaded from the first computer system onto the second computer system via the network connecting the first with the second computer system within a time t significantly smaller than the time it would take to download the whole runtime environment component to which it corresponds.

The time t shall particularly, but not necessarily, be less than $(8 N / C_B) + t_1$, wherein N is the size of the runtime environment component in bytes, $C_B$ is the average bandwidth of the network connection between the first and the second computer system, and $t_1$ is the time needed to initialize the runtime environment component providing the requested service in its respective local environment on the first computer system. In today's commonly available network connections between servers and clients the time t will typically be about ten seconds.

When using networks commonly used at present for the connection of clients and servers this time condition amounts to a scope of the lightweight component which is - measured in necessary storage space - less than ten or even less than five percent of the scope of the totality of the runtime environment components which can be requested by it, including any auxiliary software programs which these runtime environment components need to be executed in the first computer system.

Correspondence of the lightweight component with the runtime environment component service means, in this context, that the lightweight component must offer the second computer system access to the runtime environment component service made available by it. If a plurality of runtime environment component services is made available by the lightweight component, which will frequently be the case, the lightweight component corresponds to this plurality of runtime environment component services in the explained sense.

The inventive methods enable a second computer system to use results produced by a first computer system. The load of holding, maintaining and administrating these runtime environment components, as well as executing these runtime environment components, is burdened onto said first computer system. Nevertheless, said second computer system can profit from these runtime environment component services as if the relating runtime environment components were present locally on said second computer system. Therefore, additional functionality is provided even to those computer systems which are not powerful enough to store and / or execute the full range of runtime environment components, as for example notebooks, handheld computers, organizers and mobile telephones. Since said first computer system and said second computer system exchange requests for services and responses to said requests, rather than exchanging programming code to perform the services, the amount of data transfer between both computer systems is considerably reduced. This shortens communication time (on-line time) and leads to faster running software programs on the second computer system.

The inventive methods are particularly interesting for use with a client/server environment. In that case, the first computer system takes over the role of a server, whereas the second computer system is one of the clients. The network may be a local network or a wide-area network, as for example the Internet.

As an example, said runtime environment component services may relate to graphic functions, word processing functions, document editing functions, mathematical functions, table calculation functions, or printing functions. Said runtime environment components may be, for example, of the form of application programming interfaces or runtime components.

The runtime environment component services offered by the first computer system are requested, according to the present invention, by means of a request generated by a lightweight component on the second computer system. This lightweight component may issue this request in response to a call of a software program being executed on the second computer system. However, the lightweight component may also be or have a user interface, so that no additional software programs need to be executed on the second computer system.

The runtime environment components as well as possible software programs calling for their services may comprise compiled program code to be executed or script code to be interpreted.

As a general advantage of the invention, all the characteristics of the runtime environment components residing on said first computer system, for example a program interface and a runtime environment, can be made fully available for use by said second computer system. If new components or releases of components are added to said first computer system, these can be made immediately available to the second computer system without any significant modifications or additions required on said second computer system. This central administration of runtime environment components reduces the load of administration on said second computer system and on a client/server system in general.

Said request and / or said response sent over said communication network may be compliant with a predetermined communication protocol, in particular with the Internet protocol.

In particular, if the communication network is an open wide-area network, said request and / or said response may be transmitted over secure channels. For example, encryption / decryption technologies may be applied for the communication between said computer systems.

Said request and / or said response may comprise identification data of said first computer system, identification data of said second computer system, identification data of said runtime environment component service, and input data to said runtime environment component service.

It is to be understood that said first computer system may present said runtime environment component services to an arbitrary number of second computer systems independently from each other. On the other hand, a second computer system may transmit its requests selectively to different first computer systems. The communication network may be of any type suitable for communication between computer systems, including wired and partially or totally wireless. The computer systems may be of any type of processing environments, and of any size. They may be embedded into other systems.

The invention can be implemented by a computer system comprising computer program code or application code. Computer program code or application code may be embodied in any form of a computer program product. A computer program product comprises a medium configured to store or transport computer-readable code, or in which computer-readable code may be embedded. Some examples of computer program products are CD-ROM disks, ROM cards, magnetic disks or tapes, service on a network, and carrier waves. The computer program product may also comprise signals which do not use carrier waves, such as digital signals transmitted over a network. The computer program product may then be implemented as any transmission link, such as a connection to the Internet, or any LAN, WAN, telephone network, or the like.

Further, the invention comprises runtime environment components for use with a method according to the invention. In particular, the invention also comprises a data base comprising runtime environment components relating to said services according to any of the inventive methods.

BRIEF DESCRIPTION OF THE DRAWINGS

| | |
|---|---|
| Fig. 1 | is an illustration of one embodiment of the present invention with a plurality of user devices that each can execute a lightweight component that corresponds to at least one component on the server computer system; |
| Fig. 2 | is a more detailed illustration of one embodiment of the present invention with a representative user device that executes a lightweight component that corresponds to at least one component on the server computer system; |
| Fig. 3 | is a process flow diagram for one embodiment of the present invention; |
| Fig. 4 | is an architecture diagram for one embodiment of the present invention; |
| Figs. 5A to 5D | are a sequence diagram for a JAVA-based implementation of one embodiment of the present invention; |
| Fig. 6 | is a class diagram for the embodiment of the present invention illustrated in Figs. 5A to 5D; |
| Fig. 7 | is a cross-reference between Tables in the description and selected interfaces in Fig. 6; |
| Figs. 8A to 8C | are a cross-reference between Tables in the description and selected interfaces in Fig. 6; |
| Fig. 9 | is a cross-reference between Tables in the description and selected interfaces in Fig. 6; |
| Figs. 10A and 10B | are a cross-reference between Tables in the description and selected interfaces in Fig. 6; |
| Fig. 11 | gives a general overview of an implementation of the invention; |

Fig. 12          illustrates the processing of a request by a remote server framework;

Fig. 13          illustrates an implementation of a lightweight component;

Fig. 14          illustrates the transparent access via an object component model;

Fig. 15          illustrates an implementation of a visual lightweight component;

Fig. 16          illustrates remotely drawing;

Fig. 17          illustrates accessing an API;

Fig. 18          illustrates the creation of a Java bean lightweight component;

Fig. 19          illustrates relating a StarOfficeBean frame window;

Fig. 20          gives a flow chart for an example using the present invention;

Fig. 21          illustrates a client's view of a non-visual lightweight component; and

Fig. 22          illustrates a client's view of a visual lightweight component;

Fig. 23          shows a schematic representation of the inventive method in overview;

Fig. 24          shows a flow chart: initial communication of a first and a second software program;

Fig. 25          shows a flow chart: creation of a stub;

Fig. 26          shows a flow chart: creation of a proxy;

Fig. 27          shows a flow chart: arranging a stub and a proxy;

Fig. 28          shows a schematic representation of a computer system to be used in the scope of the present invention;

Fig. 29          shows a representation of a client-server system to be used in the scope of the present invention;

Fig. 30          shows a flow chart: calling of a stub;

Fig. 31          shows a flow chart: calling of the second program through the stub;

Fig. 32          shows a flow chart: binding a stub and a proxy;

Fig. 33          shows a flow chart: calling the second software program from a first software program via a proxy and a stub;

Fig. 34          shows a flow chart: transforming and transmitting a command from the first software program to the second software program;

Fig. 35          shows a schematic representation of an interceptor arranged between a stub and a proxy; and

Fig. 36          shows a flow chart: use of an interceptor function in an arrangement of stub and proxy.

In the drawings and the following detailed description, elements with the same reference numeral are the same element. Also, the first digit of a reference numeral for an element indicates the first drawing in which that element appeared. A word in italics and the same word not in italics represent the same element. The italics are used only for convenience and not to denote different embodiments or elements.

## DETAILED DESCRIPTION

According to one embodiment of the present invention, a user can access and use applications or services, e.g., application 112 in a suite of applications 120, on server computer system 100 from almost any available device, e.g., any one of a portable computer 102A, a mobile telephone 102B, a workstation 102C, a home personal computer (PC) 102D, a personal digital assistant 102E, or an Internet café machine 102F. No longer is a user limited to using either workstations and/or portable computers with suite of applications 120 installed thereon.

For example, a user on a vacation overseas suddenly realizes that the presentation her boss is going to deliver the next morning contains a critical error. The user drops by an Internet café and from any machine 102F at the café accesses the presentation via server computer system 100, and makes the necessary corrections using applications written, for example, in a visual basic programming language and/or the C++ programming language even though only a browser is available on machine 102F.

In another scenario, the user is having dinner at a friend's house, and gets an urgent call saying that a report that can be assessed via server computer system 100 must be revised that evening. The revisions will not require much work, but the trip to the office and back is a very unwelcome prospect. Using the friend's PC 102D and the friend's Internet service provider, the user works on the report without leaving his friend's home even though no software for accessing application suite 120 is available on PC 102D. The user interface on PC 102D and the application capability is that same as if the user were executing the application at the office.

Another user is expecting an important document, but the user has a business appointment outside the office. The document arrives by e-mail while the user is in transit. Using a PDA 102E while on the train, the user accesses the e-mail using server computer 100, reviews the document, and then re-directs the document to the fax machine at the site to which the user is going.

A customer would like to meet with a user tomorrow. The user thinks he will be available, but the user doesn't know whether anyone scheduled the time while the user was away from the office, and now the office is closed. Using a mobile telephone 102B, the user accesses his up-to-the-minute calendar via server computer system 100 and schedules the appointment.

Hence, in one embodiment, using a web browser and an Internet connection, the user simply logs on to a web server 111, and proceeds as though everything were locally resident on his/her machine. While execution actually takes place on server computer system 100, this fact is transparent to the user. Similarly, local services available on a client system, including devices like printers and local storage, can be utilized in a transparent manner.

In addition to using browsers, users can access applications on server computer system 100, sometimes called server 100, from Wireless Application Protocol (WAP) devices, which include mobile phone 102B and perhaps PDA 102E. Because of the limited capabilities of devices 102B and 102E, functionality is not as extensive as from a system that can run a full browser. Accordingly, in one embodiment, users are able to view their mail and data, but users don't have full editing capabilities in this embodiment. However, users can use mobile phones and PDAs to manage their data and the users can direct the movement of information to other devices.

Hence, a user of any one user device 102i, where i is A to G, of a plurality of devices 102A to 102G can use an application 112, or any other application in suite 120 that can include for example a word processing application, a spreadsheet application, a database application, a graphics and drawing application, an e-mail application, a contacts manager application, a schedule application, and a presentation application, as if that application were executing locally on user device 102i. One office application package suitable for use with this invention, is the STAROFFICE Application Suite available from Sun Microsystems, 901 San Antonio Road, Palo Alto, CA. (STAROFFICE is a trademark of Sun Microsystems, Inc.) The user has access to the functionality of application 112 even in situations where user device 102i has neither the memory capacity nor the processing power to execute application 112.

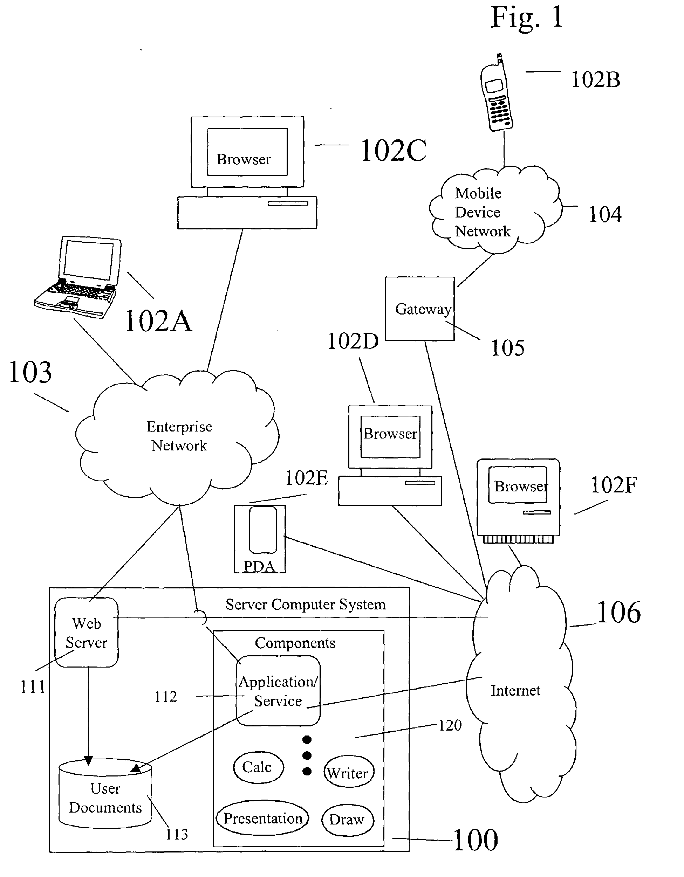

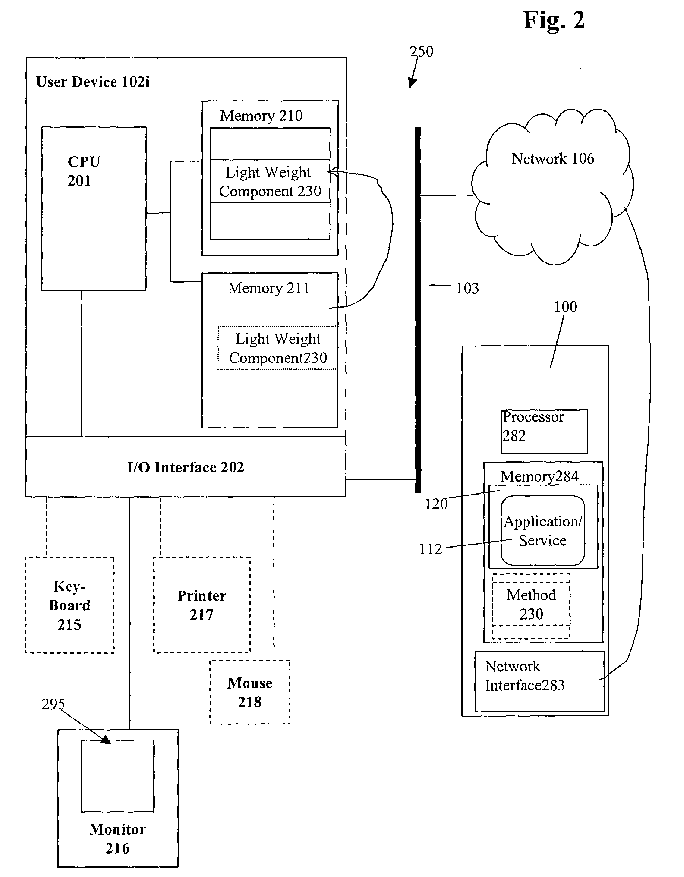

As explained more completely below, in each of the above examples, a lightweight component 230 (Fig. 2) is either stored locally in a memory of user device 102i, or is downloaded from server computer system 100(Fig. 2) to memory 211 in user device 102i. Lightweight component 230, in the embodiment, is loaded in a browser, to communicate over a network, e.g., enterprise network 103, Internet 106, or a combination of the two 103/106, with application 112 that is executing on server computer system 100.

Lightweight component 230, as explained more completely below, is not a prior art software program. Rather lightweight component 230, in one embodiment, maps visual display instructions from application 112 executing on server computer system 100 to a platform dependent graphic layer that in turn generates a user interface on display screen 295 of monitor 216. The user interface for application 112 is similar to the user interface that the user would see if application 112 were executing locally on device 102i. The interfaces may not be identical if user device 102i has limited input/output capability, e.g., user device 102i is a mobile telephone.

When lightweight component 230 receives an input event from the windowing environment executing on user device, e.g., the JAVA Abstract Windowing Toolkit (AWT), lightweight component 230 transmits the event to application 112 for processing. Here, the input event could be selection of a menu item, configuration of a menu, a keyboard input, a mouse input, or any other input event supported by application 112.

Application 112, executing on server computer system 100 processes the event received from lightweight component 230 and performs any operations required on server computer system 100. Output instructions from application 112 are directed to lightweight component 230 on user device 102i.

When lightweight component 230 receives the output instructions, lightweight component 230 executes the instructions. For example, if the instructions are to update the display, lightweight component 230 maps the instruction to a platform dependent graphic layer that in turn redraws the display. All the management of components in the user interface, management of data and so on is performed on server computer system 100 and so lightweight component 230 only has to update the display to reflect the state of application 112 as indicated by the output instructions received from application 112.

Consequently, it appears to the user that application 112 is executing locally on user device 102i despite that fact that user device 102i is only functioning as an input/output device for application 112. Lightweight component 230 on user device 102i routes the output to an output device of device 102i, e.g., a display unit 216 or a locally connected printer 217.

As used herein a lightweight component 230, sometimes called a thin client, is software, which, upon execution, is able to provide input to and receive output from a runtime environment component, e.g., an application or service 112 that is sometime called a runtime environment component 112. Lightweight component 230 is tiny enough to be downloaded from first computer system 100 onto second computer system 102i via a network 103 and 106 within a time significantly smaller than the time required to download the whole runtime environment component 112.

In one embodiment, the download time t is particularly, but not necessarily, defined as

$$t < (8 \, N \, / \, C_B) + t_1,$$

where N is the size of runtime environment component 112 in bytes, $C_B$ is the average bandwidth in bits per second of the network connection between first computer system 100 and second computer system 102i, and $t_1$ is the time needed to initialize runtime environment component 112 in its respective local environment on first computer system 100. In today's commonly available network connections between servers and clients, time t is typically be about ten seconds.

When using networks commonly used at present for the connection of clients and servers, this time condition gives a lightweight component 230, which is - measured in necessary storage space - less than ten or even less than five percent of the scope of the totality of the runtime environment components 120, which can be requested by lightweight component 230, including any auxiliary software programs which these runtime environment components need to be executed in first computer system 100.

Correspondence of lightweight component 230 with runtime environment component 112 means, in this context, that lightweight component 230 must offer the second computer system 102i access to the runtime environment component service made available by component 112. If a plurality of runtime environment component services 120 is made available by the lightweight component 230, which will frequently be the case, lightweight component 230, in this embodiment, corresponds to this plurality of runtime environment component services in the explained sense.

Hence, in this embodiment, the software system includes two parts, a first part 230 executed on a client device 102i, and a second part 120 residing and executed on server computer system 100. Second part 120 on server 100 makes up the runtime environment, which, in this embodiment, comprises a plurality of runtime environment components, which are able to provide services. Furthermore, second part 120 on server computer system 100 provides the necessary communication tools in order to communicate with client device 102i, sometimes called user device 102i.

The other part 230, being executed on client device 102i, performs communication between client device 102i in requesting a runtime environment component service being executed on server 100. The server's part of the software system is by far larger in size than the client's part thereof. This latter part is referred to as lightweight component 230. A typical size of the software system's part 120 on server computer system 100 may be 50 to 100 Megabyte, e.g., an office software package, whereas lightweight component 230 on client device 102i has a typical size of 400 Kilobyte, and uses minimal system resources (CPU power, memory).

Lightweight component 230 provides an application-programming interface (API) for any application program the implementation of which on client device 102i is allowed by an implementation framework on server computer system 100. Various types of lightweight components 230 are possible. In one embodiment, the lightweight component accesses a particular functionality, e.g., a mathematical calculator on server 100, which provides a specific result to user device 102i for use. In another embodiment, lightweight component 230 handles visual functionality.

Hence, in more general terms, runtime environment component services are presented by a first computer system 100 to a second computer system 102i over a communication network 103/106. Upon receiving a request for a runtime environment component service transmitted by second computer system 102i over communication network 103/106, first computer system 100 executes a runtime environment component 112 for producing a result according to the received request, and transmits, over network 103/106, a response comprising the result to the second computer system 102i.

Herein, computer software programs and parts thereof, which are called during execution of a lightweight component 230, are herein referred to as runtime environment components 120. The functionality provided by runtime environment components 120 to lightweight component 230 are herein referred to as runtime environment component services. The size of runtime environment components 120 renders a distribution over Internet 106 difficult. Runtime environment components 120 may be implemented in any suitable form. Runtime environment components 120 may consist of compiled software program code to be executed or of script code in any programming language to be interpreted before execution by a compiler. Runtime environment components 120 are typically stored and administrated on server computer system 100.

Lightweight component 230 makes runtime environment component services, that means the functionalities provided by runtime environment components 120, available for use without integrating components 120 into lightweight component 230 and without distributing components 120 together with lightweight component 230 to the place of execution of lightweight component 230, for example, client device 102i.

Further, the full functionality of the runtime environment components 120 is available for all kinds of client devices independent of whether the client devices are powerful enough to store or to execute a runtime environment component 112. Further, the user of a client device is not charged with the problem of whether a specific runtime environment component 112 is available on client device 102i.

The holding, maintaining and administrating runtime environment components 120, as well as executing runtime environment components 120, is placed on first computer system 100. Nevertheless, second computer system 102i can profit from these runtime environment component services as if the corresponding runtime environment components 120 were present locally on second computer system 102i. Therefore, additional functionality is provided even to those computer systems, which are not powerful enough to store and / or execute the full range of runtime environment components 120, as for example notebooks, handheld computers, organizers and mobile telephones.

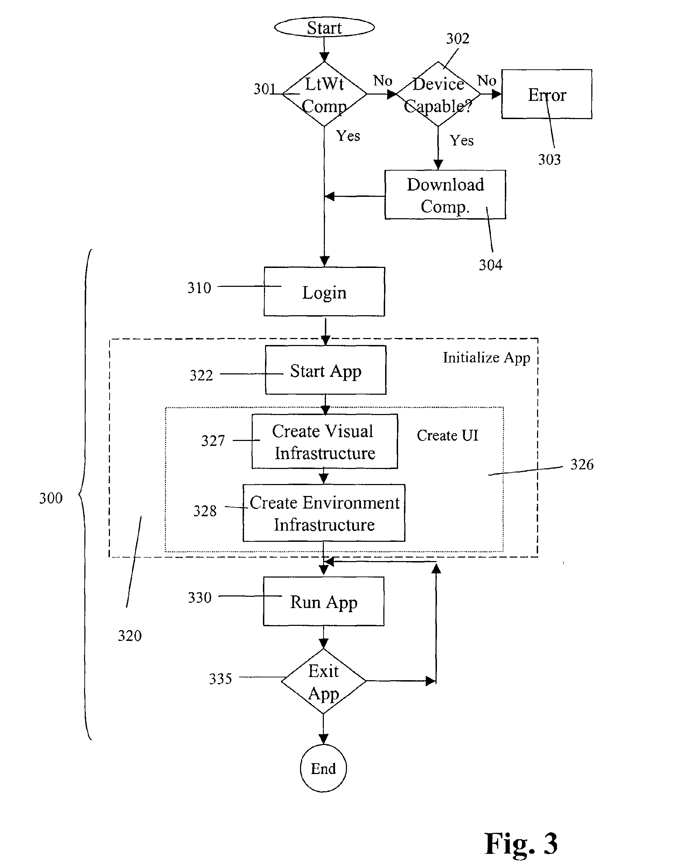

Figure 3 is a process flow diagram for one embodiment of method 300 of this invention. Initially, a user of device 102i issues a request to use applications 120 over network 103/106 to web server 111. The transmission of the request over the network 103/106 is performed according to a predetermined transmission protocol. In response to the request from user device 102i, web server 112 determines in lightweight component available check operation 301 whether the request was from lightweight component 230. If the request was from lightweight component 230, processing transfers to login operation 310 and otherwise to device capability check operation 302 Device capability check operation 302 determines whether user device 102i can execute and use lightweight component 230, e.g., is there a lightweight component 230 available for the general type of user device 102i, and is the operating system, processor, and memory of specific user device 102i sufficient to execute and support lightweight component 230. This information may be included in the initial request, a process on server computer system 100 may communicate with user device 102i to obtain the information, or alternatively, the request may include an identifier that is used to access a database to determine the capabilities of user device 102i.

If user device 102i is capable of executing and supporting lightweight component 230, processing transfers to download component operation 304 and otherwise to return error operation 303. Return error operation 303 sends an appropriate error message to user device 102i to inform the user of the incompatibility between requested application 112 and user device 102i.

Download component operation 304 downloads, and installs if necessary, lightweight component 230 on user device 102i. Thus, prior to starting login operation 310, lightweight component 230 is available on user device 102i.

In response to the request to access applications 120, in login operation 310, a connection is established over network 103/106 to a daemon executing on server 112.
The daemon returns a handle to a daemon service factory to lightweight component 230.

Upon receipt of the handle to the daemon service factory, lightweight component 230 issues a request to the service factory to initiate execution of a login service on server computer system 100. Upon activation of the login service, lightweight component 230 transmits a user identification, a password, and options for runtime environment components 120 to the login service. The login service on server 100 validates the user login in login operation 310 and transfers to initialize application operation 320.

Start application operation 322 within operation 320 activates a service factory for runtime environment components 120 on server 100 and returns a handle to this service factory to lightweight component 230. Operation 322 transfers processing to create user interface operation 326 within initialize application operation 320.

In create user interface operation 326, lightweight component 230 issues a request to the runtime environment components service factory to start an infrastructure generation service. In response to the request, the service factory, executing on server computer system 100, activates the infrastructure generation service, and returns a handle to this service to lightweight component 230. Processing transfers to create visual infrastructure operation 327.

In operation 327, lightweight component 230 issues a request to start the infrastructure generation service, and passes a handle to a client factory to the service. Lightweight component 230 next issues a request to create a visual infrastructure on server computer system 100 for processing the visual portion of the user interface.

In response to the request from lightweight component, 230, the infrastructure generation service first issues a request to the client factory on user device 102i to create a remote frame window, and then this service creates a corresponding server window object on server computer system 100. The server window object queries the remote frame window on user device 102i to determine the fonts, display parameters, etc. on user device 102i. Alternatively, the server window object can obtain identifier information from user device 102i and then use this identifier information to access a database that includes the display capabilities of device 102i. Upon completion of the queries, operation 327 transfers to create environment infrastructure operation 328.

In operation 328, the infrastructure generation service creates a frame object that controls the environment of the server window object and creates a direct connection between the frame object and lightweight component 230. Operation 328 transfers to run application operation 330.

In run application operation 330, lightweight component 230 sends a command to the frame object to load a particular document in application 112. In response, the frame object initializes application 112 and loads the document in application 112.

Application 112 reads the loaded document, and generates a display layout that is sent to the server window object. In turn, the server window object sends the display layout to the remote frame window in lightweight component 230. The remote frame window generates commands to a device dependant graphic layer, e.g., the JAVA AWT, which in turn generates the user interface on display screen 295 of monitor 216, in this embodiment.

If user device 102i has limited input/output capability, the user may be able to only read the document, or perhaps direct the document to a local output device if application 112 includes such a capability, e.g., a capability to write to a local printer or to write to a fax printer. If as in Figure 2, user device 102i includes multiple input/output devices, the user can utilize the full functionality of application 102i. For example, if the user utilizes mouse 218 to scroll down in the document. The scroll action is interpreted by the windowing environment on user device 102i and a scroll command is set by the windowing environment to the remote window frame of lightweight component 230.

The remote window frame, in turn, sends a scroll command over network 103/106 to the server window object on server 100. The server window object processes the event received and generates an application event that in turn is processed by application 112. In this example, application does a re-layout based on the scrolling, and redraws the display in the server window object that in turn sends a redraw command to the remote frame window on user device 102i.

In one embodiment, the transmissions over network 103/106 between lightweight component 230 and server 100 are encrypted according to known technologies. Further, in another embodiment, digital signatures are used to provide certification of the request mechanism being established on the client for this runtime environment component services system.

The size of a lightweight component 230 does not increase with the number of accessed runtime environment components of the implementation server framework. This introduces the ability to offer runtime environment components, which expose only services designed for a special purpose and hide the complexity of the implementation framework.

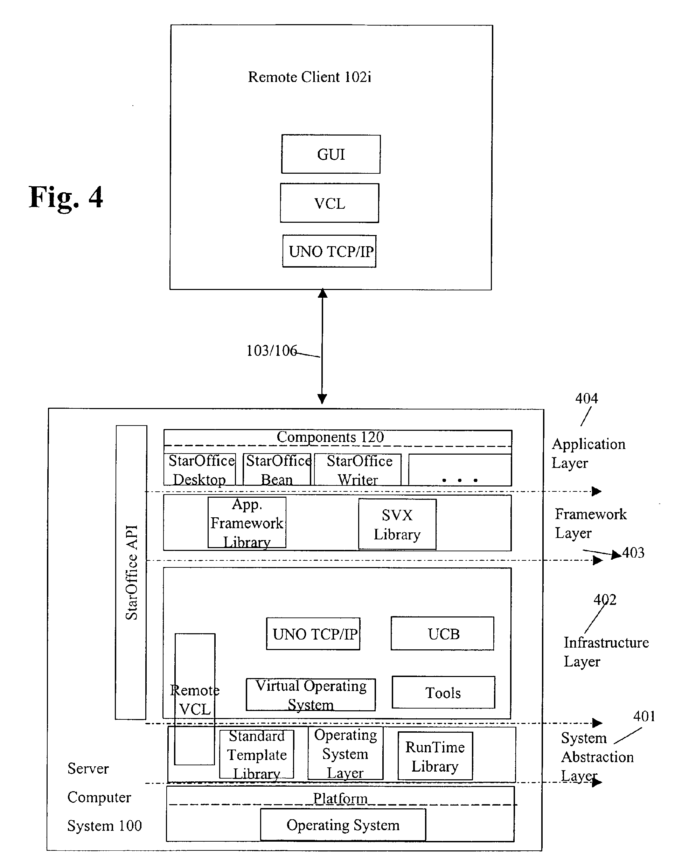

In one embodiment of the invention, the STAROFFICE application suite is utilized as runtime environment components 120 on server computer system. Figure 4 is an illustration of a layer architecture of the STAROFFICE application suite used in this embodiment.

System abstraction layer 401 encapsulates all system specific APIs and provides a consistent object-oriented API to access system resources in a platform independent manner. All platform dependent implementation is below this layer, or is part of optional modules. To reduce the porting effort, the functionality provided by system abstraction layer 401 is reduced to a minima set available on every platform. Also, for some systems, layer 401 includes some implementations to emulate some functionality or behavior. For example on systems where no native multi threading is supported, layer 401 can support so called "user land" threads.

The operating system layer (OSL) within layer 401 encapsulates all the operating system specific functionality for using and accessing system specific resources like files, memory, sockets, pipes, etc. The OSL is a very thin layer with an object oriented API.

The runtime library within layer 401 provides all semi platform independent functionality. There is an implementation for string classes provided. Routines for conversion of strings to different character sets are implemented. The memory management functionality resides in this module.

As a generic container library with layer 401, the standard template library is used. This library supplies implementations for list, queues, stacks, maps, etc.

The remote visual class library (VCL) is shown as bridging infrastructure layer 402 and system abstraction layer 402. Remote VCL receives all user interface events and sends responses to user interface events over network to lightweight component 230 on another computer, which then displays the actual output as described above. Remote VCL encapsulates all access to the different underlying GUI systems on different client devices. Remote VCL is a high level definition of a graphic device defined as a set of interfaces. Remote VCL is based completely on a component infrastructure. This gives remote VCL the ability to map functionality, which a client system is unable to support, to a service component on the server side emulating this functionality.

The implementation of remote VCL is platform independent and includes an object oriented 2D graphics API with metafiles, fonts, raster operations and the whole widget set use by the STAROFFICE application suite. This approach virtually guarantees that all widgets have the same behavior independently of the used GUI system on the different platforms. Also the look & feel and the functionality of the widgets are on all platforms the same. Remote VCL includes a mapping to the interface of the lightweight component that is described more completely below. Since this mapping is platform independent, remote VCL does not access any native window system.

Infrastructure layer 402 is a platform independent environment for building application, components and services. Layer 402 covers many aspects of an object oriented API for a complete object oriented platform including a component model, scripting, compound documents, etc.

To make the usage of system resources like files, threads, sockets, etc. more convenient the virtual operating system layer encapsulates all the functionality of the operating system layer into C++ classes. The tools libraries are different small libraries building up a set of tool functionality. This includes a common implementation for handling date and time related data. There is an implementation for structured storages available. Other implementations provide a generic registry, typesafe management and persistence of property data.

Universal network objects are a component technology that does not depend on any graphical subsystem, but are heavily based on multithreading and network communication capabilities. The system consists of several pieces. An IDL-Compiler, which generates out of the specified definition of an interface a binary representation and the associated C-Header or JAVA technology files. The binary representation is platform and language independent and is at runtime used to marshal arguments for remote function calls or to generate code on the fly for a specific language to access the implementation provided by the interface. Many parts of the UNO technology are implemented as UNO components. This helps to create a very flexible system and also the extension of the system at runtime. For example, by providing new bridges or communication protocols, UNO provides transparent access to components over the network or locally. For a more complete description of bridges, see commonly filed and commonly assigned European Patent Application, entitled "A METHOD AND SYSTEM FOR DYNAMICALLY DISPATCHING FUNCTION CALLS FROM A FIRST EXECUTION ENVIRONMENT TO A SECOND EXECUTION ENVIRONMENT," of Markus Meyer (Attorney Docket No. 85882), which is incorporated herein by reference in its entirety. For the communication over the network, IIOP can be used. If the components are realized as shared libraries, the components can be loaded into to the process memory of the application and every access of the component is just like a function call without any marshalling of arguments which is required for remote function calls.

The Universal Content Broker (UCB) allows all upper layers to access different kind of structure content transparently. The UCB includes a core and several Universal Content Providers, which are used to integrate different access protocols. One implementation provides content providers for the HTTP protocol, FTP protocol, WebDAV protocol and access to the local file system.

The UCB not only provides access to the content, but also the UCB provides the associated meta information to the content. Actually, synchronous and asynchronous modes for operations are supported. A more complete description of the UCB is provided in copending, cofiled, and commonly assigned European Patent Application, entitled "A NETWORK PORTAL SYSTEM AND METHODS" of Matthias Hütsch, Ralf Hofmann and Kai Sommerfeld (Attorney Docket No. 85880), which is incorporated herein by reference in its entirety.

Framework layer 403 allows the reuse of implementations in different applications. Layer 403 provides the framework or environment for each application and all shared functionality like common dialogs, file access or the configuration management

The application framework library in layer 403 provides an environment for all applications. All functionality shared by all applications and not provided by any other layer is realized here. For the framework every visual application has to provide a shell and can provide several views. The library provides all basic functionality so only the application specific features have to be added.

The application framework library is also responsible for content detection and aggregation. The template management is provided here and the configuration management too. The application framework library is in some areas related to the compound documents, because of the functionality for merging or switching menu- and toolbars. Also, the library provides the capability for customization of all applications.

The SVX library in layer 403 provides shared functionality for all applications, which is not related to a framework. So part of the library is a complete object oriented drawing layer, which is used by several applications for graphic editing and output. Also a complete 3D-rendering system is part of the drawing functionality. The common dialogs for font selection, color chooser, etc. are all part of this library. Also the whole database connectivity is realized here.

All applications are part of application layer 404. The way these applications interact is based on the lower layers. All applications like the word processor application, spreadsheet application, presentation application, charting application, etc. build up this layer. All these applications are realized as shared libraries, which are loaded by the application framework at runtime. The framework provides the environment for all these applications and also provides the functionality for how these applications can interact.

In one embodiment, the user interface library is implemented using native compiled computer code using the visual class library (VCL) that encapsulates all access to the GUI system on user device 230 by application 112 that is executing on server computer system 100. In another embodiment, the user interface library that includes the VCL functionality is implemented in the JAVA programming language.

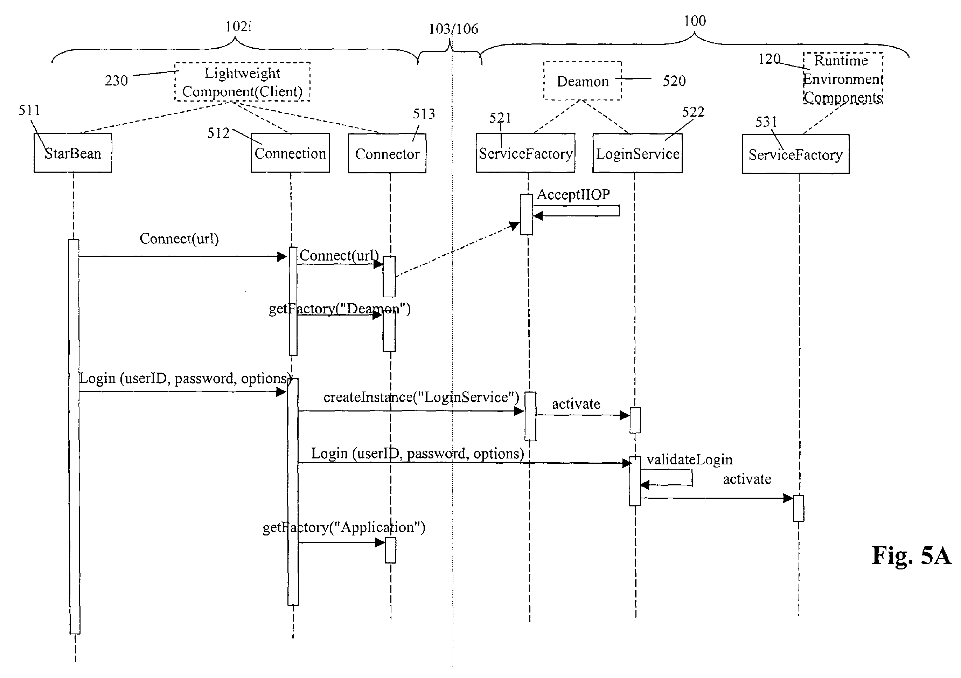

Figures 5A to 5D are a sequence diagram for one embodiment the present invention. Along the horizontal axis are individual objects, where each object is represented as a labeled rectangle. For convenience, only the objects needed to explain the operation are included in each Figure. The vertical axis represents the passage of time from top to bottom of the page. Horizontal lines represent the passing of messages between objects. A dashed line extends down from each rectangle, and a rectangle along the dashed line represents the lifetime of the object. Moreover, brackets are used to show which objects exist on client device 102i and which objects exist on server 100.

In one embodiment, lightweight component 230 is embedded in a graphical environment that includes a display software program with a graphical user interface (GUI). The graphical user interface is referred to as a panel. An example of one implementation is a Java bean, which is embedded in an HTML page and rendered by a browser. This Java bean represents a view (in a window) of an office application component (e.g. STAROFFICE Writer) or another visual office component. In this environment, the user is using a browser on user device 102i that utilizes the JAVA Abstract Window Toolkit (AWT). In another embodiment, a native C-programming language plug-in is used in the browser on user device 102i to implement this invention. As is known to those of skill in the art, the AWT is a set of JAVA classes and interfaces that are mapped to a concrete implementation on each different platform. The sequence displayed in Figures 5A to 5D is for a JAVA-enabled system.

When the user requests an application on the server, a JAVA bean, an object StarBean 511, is instantiated. Object StarBean 511 automatically issues a call to a method connect in the API of an object connection 512. The call to method connect includes a URL to server 100 on which application suite 120 is located.

In response to the call to method connect, object connection 512 calls method connect in object connector 513. In this embodiment, server 100 runs a daemon process 520, sometimes called daemon 520 that includes an object ServiceFactory 521 that accepts Internet Inter-OrB Protocol (IIOP) connections. In response to the call to method connect, connector object 513 makes a connection with daemon process 520 on server 100 and stores a handle object ServiceFactory 521 of daemon 520.

Upon completion of the connection to daemon process 520, connection object 512 calls method getFactory ("Daemon") in the API of object connector 513 to obtain the handle for object ServiceFactory 521.

Next, object StarBean 511 calls method login in the API of object Connection 512 with a user identification, a password, and options for application suite 120 on server 100, which in this embodiment is the STAROFFICE suite of components. In response to the call to method login, object Connection 512 calls method createInstance in the API of object ServiceFactory 521 of daemon 520, and specifies that an instance of the login service is needed.

Object ServiceFactory 521 instantiates object LoginService 522 by calling method activate in the API of object LoginService 522. Object ServiceFactory 521 returns a handle to object LoginService 522 to object connection 512.

Object connection 512 calls method login of object LoginService 522 with the user identification, password, and options. In response to the login call, object LoginService 522 runs method validateLogin to validate the login request. If the login request is valid, object LoginService 522 starts application suite 120 as a new process on server 100 with the rights of the user with userID. Object LoginService 522 calls method activate of the API of object ServiceFactory 531 to instantiate object ServiceFactory 531.

Finally, to proceed with creating the infrastructure needed for application suite 120 and lightweight component 230 to work together, object connection 512, sometimes called connection object 512, calls method getFactory in object connector with an argument "Application" to get the handle to object ServiceFactory 521 that in turn is stored in object Connection 512. Upon activation of object ServiceFactory 531 and return of its handle to object Connection 512, a connection is established between application suite 120 and lightweight component 230 so that the application suite 120 and lightweight component 230 can communicate directly over network 103/106.

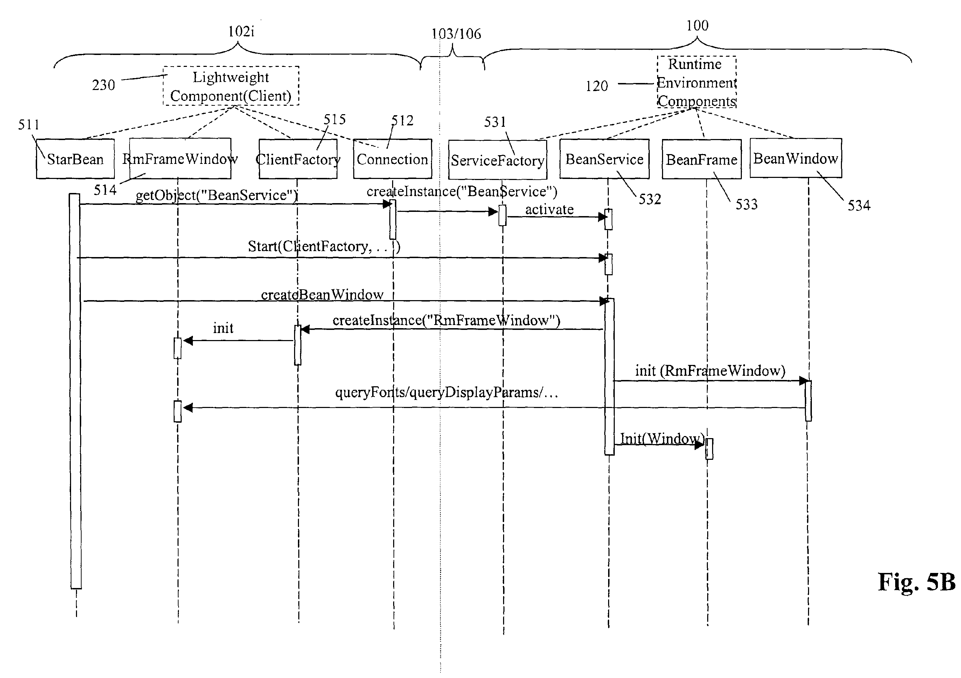

Upon object Connection 512 returning processing to object StarBean 511, object StarBean 511 calls method getObject("BeanService") in the API of object Connection 512. In method getObject, connection object 512 calls method createInstance("BeanService") (Fig. 5B) in object ServiceFactory 531 and in turn object ServiceFactory 531 instantiates object BeanService 532 by calling method activate in the API of object BeanService 532. A handle to object BeanService 532 is returned to object StarBean 511 and is stored by object StarBean 511.

Next, object StarBean 511 calls method start in the API of object BeanService 532. A handle to object ClientFactory 515 is passed in the call to method start so that application suite 120 can create windows and any other components on client device 102i needed by application suite 120.

To create the infrastructure needed to run application suite 120 on server 100, object StarBean 512 calls method createBeanWindow of object BeanService 532. Object BeanService 532 then calls method createInstance ("RmFramewindow") in the API of object ClientFactory 515 and object ClientFactory 515 initializes remote frame window object 514 on user device 102i.

Following creation of remote frame window object 514 on user device 102i, object BeanService 532 calls initialize method init(RmFrameWindow) to create an instance of object BeanWindow 534 to support remote frame window object 514. To further initialize object BeanWindow 534, object BeanWindow 534 sends one or more queries to object RmFrameWindow 514 to determine the display capabilities of user device 102i.

Finally, object BeanService 532 calls method init(Window) to instantiate and initialize object BeanFrame 533 for application suite 120. Object BeanFrame 533 controls the environment for this instance of application suite 120. For example, object BeanFrame 533 controls the lifetime of components of the user interface on client device 102i used by application suite 120, the loading of such components, and so on. A handle to object BeanFrame 533 is returned to and stored by object StarBean 511.

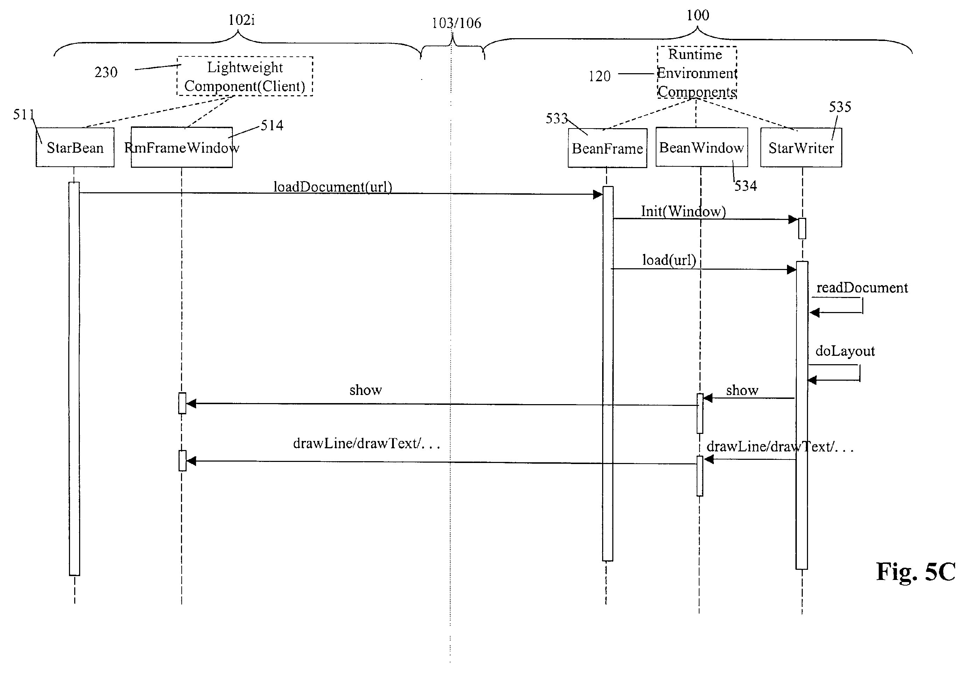

Upon receiving the handle to object BeanFrame 533, object StarBean 511 calls method loadDocument(url) in the API of object BeanFrame 533 (Fig. 5C). Here, url is an address, e.g., a uniform resource locator, of the document requested by the user. Object BeanFrame 553 can determine which component is requested in a number of ways. For example, object BeanFrame 533 can ask the underlying transport component for a content type, or perhaps look at the first few bytes of an available number. As a last resort, the extension of the address is used by object BeanFrame 533 to determine which component within application suite 120 to launch. Independent of the technique used to identify the requested runtime environment component, after identifying the component in this embodiment, object BeanFrame 533 calls method init(Window) in component StarWriter 535 in the STAROFFICE application suite.

In this embodiment, the component initialized by BeanFrame 533 must use the remote VCL and only it to handle user interface input/output. However, no other modifications are required to work in this environment. Any prior art application that works in a windowing graphic user interface could be used in place of component StarWriter so along as it included the functionality provided by the remote VCL and used only that functionality to handle user interface input/output.

After component StarWriter 535 is initialized, object BeanFrame 533 calls method load(url) in the API of component StarWriter 535. Component StarWriter 535 loads the document at the address specified in method load and performs methods readDocument and do Layout. Upon completing the window layout, component StarWriter calls method show in the API of object BeanWindow 534, and in response, object BeanWindow 534 calls method show in the API of object RemoteFrameWindow 514. Object RemoteFrameWindow 514 causes the window generated by component StarWriter 535 to be displayed on display screen 295 of user device 102i.

Similarly, as the user of user device 102i performs an input action on the information displayed, the appropriate input event is transmitted from object RmFrameWindow 514 to object BeanWindow 533 and in turn to component StarWriter 535. Conversely, each call to a method in the graphic user interface, e.g., method drawLine, method drawText, etc., is made to the API of object BeanWindow 533 and a corresponding method call is made to a method in the API of object RmFrameWindow 514 by object BeanWindow 533.

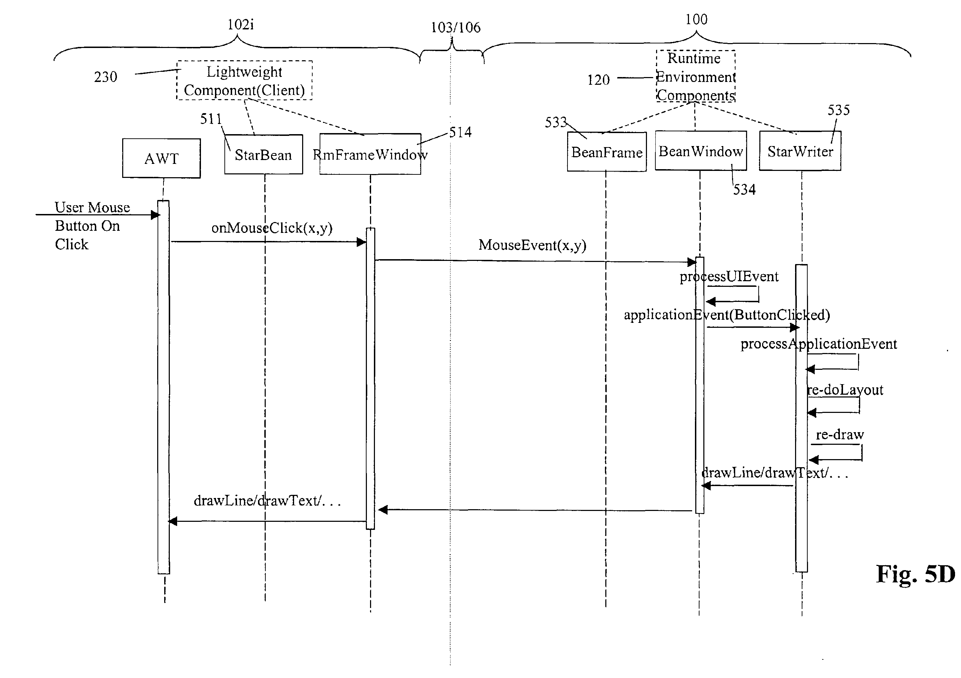

Figure 5D is an example of the processing of a mouse click by the user. In this example, the mouse click event is handled by the AWT panel, which in turn calls method onMouseClick(x,y) of object RmFrameWindow 514. Remote frame window object 514, in response, calls method MouseEvent(x,y) of object BeanWindow 534.

Object BeanWindow 534 runs method processUIevent to determine the particular event that occurred, and calls an appropriate method in the API of component StarWriter 535. In this example, object BeanWindow 534 calls method applicationEvent(ButtonClicked) in the API of component StarWriter 535.

In response to the method call, component StarWriter 535 runs methods processApplicationEvent, re-layout, and re-draw. Method re-draw calls the appropriate methods in object BeanWindow 534 that in turns issues corresponding method calls to object RmFrameWindow.

In the embodiment of Figures 5A to 5D, objects 531 to 534 are an example of a user interface infrastructure that receives graphic user interface events from user device 102i, and that the runtime environment component service sends remote graphic user interface commands. Here, commands are the calls to the various methods in the interfaces of the objects. A local command is one on system 100. A remote input action command is a command sent from lightweight component 230 on user device 102i to the user interface infrastructure on system 100 in response to a user input. A remote output command is a command sent by the user interface infrastructure on system 100 to lightweight component 230 on user device 102i. Similarly, object BeanFrame 533 is an example of a local frame object, and object BeanWindow 534 is an example of a local window object. Thus, objects and actions on system 100 are considered local, while objects and actions on user device 102i are considered remote.

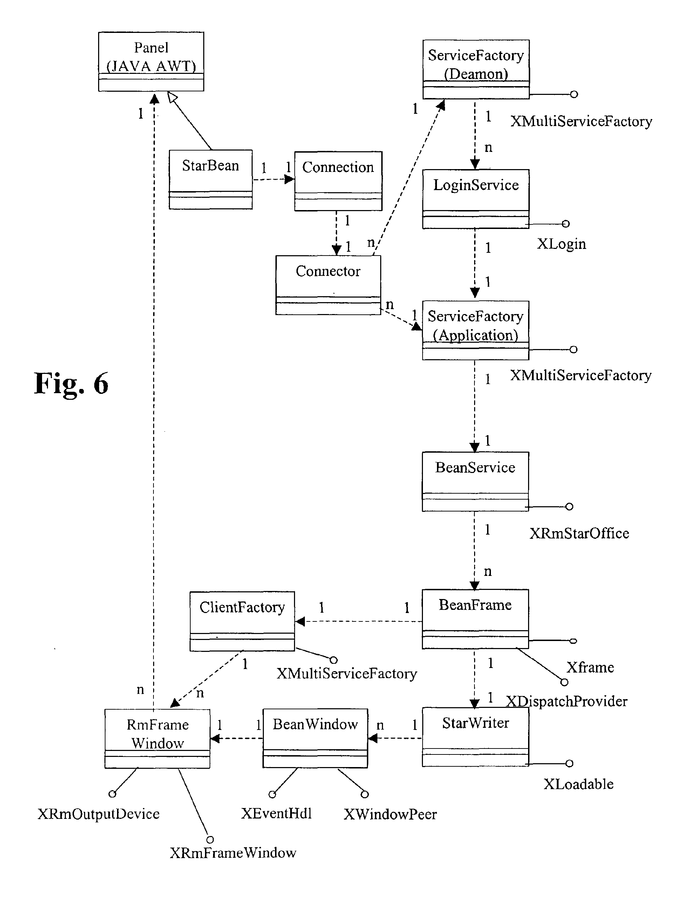

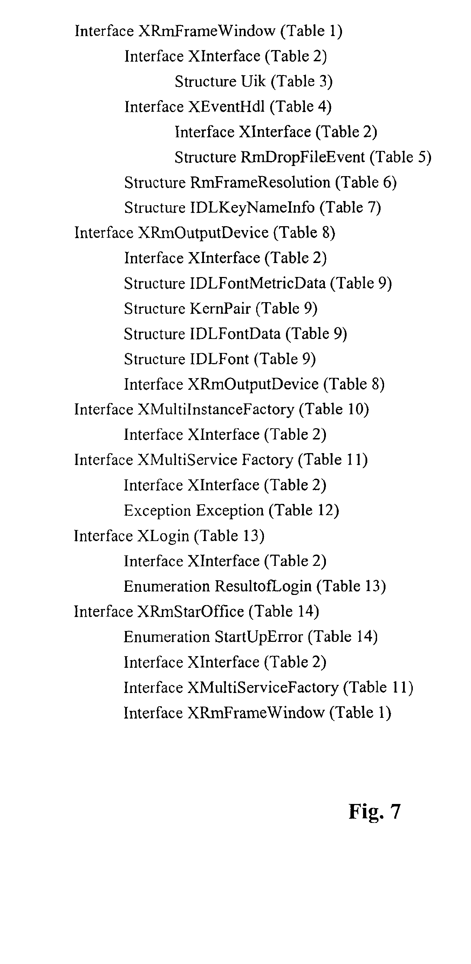

Figure 6 is one embodiment of a class diagram for the sequence diagram of Figures 5A to 5D. Figures 7, 8A to 8C, 9, 10A and 10B illustrate one embodiment of interfaces, structures, enumerations and exceptions associated with each interface illustrated in Figure 6 and give a corresponding Table number for each in the description that follows. The names of elements, e.g., interfaces, structures, exceptions, enumerations, strings, constants, etc., are indicative of the nature of the particular element.

In this embodiment of the invention, remote frame window class RmFrameWindow (Figure 6) includes a remote frame window interface *XRmFrameWindow* (Table 1) and a remote output device interface *XRmoutputDevice* (Table 8). Interface *XRmFrameWindow* inherits from interface *XInterface* (Table 2 and Fig. 7) and uses interface *XEventHdl* (Table 4). Interface *XRmFrameWindow,* in the embodiment of Table 1, includes methods Create, ReleaseWindow, SetTitle, Show, SetClientSize, GetClientSize, SetWindowState, GetFontResolution, GetFrameResolutions, ToTop, StartPresentation, SetAlwaysOnTop, ShowFullScreen, CaptureMouse, SetPointer, SetPointerPos, Beep, GetKeyNames, Enable, SetIcon, SetMinClientSize, MouseMoveProcessed, and KeyInputProcessed. (Herein, an italicized phrase and the same phase that is not italicized are the same phrase.)

Method ReleaseWindow notifies the client, that the window connected to this interface is not needed by the server anymore. Whether the real window is destroyed and a new one created on the next call of Create or the real window is cached is up to the client implementation.

TABLE 1.: Interface *XRmFrameWindow*

```
typedef sequence< IDLKeyNameInfo, 1 > KeyNameSequence;


interface XRmFrameWindow :
      com::sun::star::uno::XInterface
{
[oneway] void  Create( [in] unsigned long nWinBits,
      [in] XEventHdl xEventInterface, [in] any
      aSystemWorkWindowToken, [in] XRmFrameWindow
      xParent );
[oneway] void  ReleaseWindow();
[oneway] void  SetTitle( [in] string rTitle );
```

```
[oneway] void  Show( [in] boolean bVisible );
[oneway] void  SetClientSize( [in] short nWidth, [in]
      short nHeight );
void GetClientSize( [out] short rWidth, [out] short
      rHeight );
string    GetWindowState();
[oneway] void  SetWindowState( [in] string aState );
void GetFontResolution( [out] long nDPIX, [out] long
      nDPIY );
RmFrameResolutions  GetFrameResolutions();
[oneway] void  ToTop( [in] unsigned short nFlags );
[oneway] void  StartPresentation( [in] boolean
      bStart,[in] unsigned short nStartFlags );
[oneway] void  SetAlwaysOnTop( [in] boolean bOnTop );
[oneway] void  ShowFullScreen([in]boolean bFullScreen);
[oneway] void  CaptureMouse( [in] boolean bMouse );
[oneway] void  SetPointer( [in] unsigned short
      ePointerStyle );
[oneway] void  SetPointerPos( [in] short nX, [in] short
      nY );
[oneway] void  Beep( [in] unsigned short eSoundType );


void GetKeyNames( [out] KeyNameSequence rKeyNames );
[oneway] void  Enable( [in] boolean bEnable );
[oneway] void  SetIcon( [in] short IconID );
[oneway] void  SetMinClientSize( [in] short Width, [in]
      short Height );


[oneway] void       MouseMoveProcessed();
[oneway] void       KeyInputProcessed();
};
```

Interface *XInterface* (Table 2) is the base interface for other interfaces and provides lifetime control by reference counting. Interface *XInterface* also provides the possibility of querying for other interfaces of the same logical object. Logical object in this case means that the interfaces actually can be supported by internal, i.e., aggregated, physical objects.

Method *query Interface in* interface *XInterface* queries for a new interface to an existing object. Method *acquire* increases a reference counter by one, while method *release* decreases the reference counter by one. When the reference counter reaches a value of zero, the object is deleted.

TABLE 2.: INTERFACE *XInterface*

```
//====================================================
interface XInterface
{
//----------------------------------------------------
      /** queries for a new interface to an existing
      object.

          @param aUik
              specifies the Uik of the interface to
              be queried.

          @param ifc
              returns the new interface if the method
              succeeds.

          @returns
              <TRUE/> if the UNO object to which this
              interface referred supports the
              interface denoted by parameter aUik.
      */
    any queryInterface( [in] type aType );
```

```
//boolean queryInterface( [in]
//com::sun::star::uno::Uik aUik,
//[out] any ifc );

//-----------------------------------------------------
    /** increases the reference counter by one.
    */
  [oneway] void acquire();

//-----------------------------------------------------
    /** decreases the reference counter by one.

    When the reference counter reaches 0, the object
    gets deleted.
    */
  [oneway] void release();

};
//=====================================================
```

One embodiment of structure Uik in interface *XInterface* is presented in Table 3.

```
            TABLE 3.:   Structure Uik
```

```
//=====================================================
/** specifies a universal interface key.

An UIK is an unambiguous 16-byte value for every
interface.
*/
struct Uik
{
```

```
//--------------------------------------------------------
// specifies a 4 byte data block.
unsigned long m_Data1;


//--------------------------------------------------------
/// specifies a 2 byte data block.
unsigned short m_Data2;


//--------------------------------------------------------
/// specifies a 2 byte data block.
unsigned short m_Data3;


//--------------------------------------------------------
/// specifies a 4 byte data block.
unsigned long m_Data4;


//--------------------------------------------------------
/// specifies a 4 byte data block.
unsigned long m_Data5;


};


//========================================================
```

Method Create in interface *XRmFrameWindow* of class *RmFrameWindow* (Fig. 6) includes as an input a reference to an event handler interface *XEventHdl* (Table 4). Class *BeanWindow* (Fig. 6) also uses event handler interface *XEventHdl.* In this embodiment, interface *XEventHdl* inherits from interface *XInterface* (Table 2) and uses a structure RmDropFileEvent (Table 5). Interface *XEventHdl* includes methods MouseButtonUp, MouseButttonDown, MouseMove, MouseWheel, KeyInput, KeyUp, Paint, Resize, GetFocus, LoseFocus, Close, QueryDropFile, DropFile, and UserEvent.

One embodiment of structure RmDropFileEvent that is passed in the call to method RmDropFileEvent is presented in Table 5.

TABLE 4.: INTERFACE *XEventHdl*

```
interface XEventHdl : com::sun::star::uno::XInterface
{
[oneway] void  MouseButtonUp( [in] short nX, [in] short
    nY, [in] unsigned short nMode, [in] unsigned short
    nCode, [in] unsigned long nSysTime );
[oneway] void  MouseButtonDown( [in] short nX, [in]
    short nY, [in] unsigned short nMode, [in] unsigned
    short nCode, [in] unsigned long nSysTime );
[oneway] void  MouseMove( [in] short nX, [in] short nY,
    [in] unsigned short nMode, [in] unsigned short
    nCode, [in] unsigned long nSysTime );
[oneway] void  MouseWheel( [in] long nX, [in] long nY,
    [in] unsigned short nCode, [in] unsigned long
    nSysTime , [in] long nDelta, [in] long
    nNotchDelta, [in] unsigned long nScrollLines, [in]
    boolean bHorz);
[oneway] void  KeyInput( [in] unsigned short nKeyCode,
    [in] unsigned short nChar, [in] unsigned short
    nCount );
[oneway] void  KeyUp( [in] unsigned short nKeyCode,
    [in] unsigned short nChar );
[oneway] void  Paint( [in] long nX, [in] long nY, [in]
    long nWidth, [in] long nHeight );
[oneway] void  Resize( [in] short nWidth, [in] short
    nHeight );
[oneway] void  GetFocus();
[oneway] void  LoseFocus();
boolean            QueryDropFile( [inout]
    RmDropFileEvent rDropFileEvent );
boolean            DropFile( [in] RmDropFileEvent
```

```
        aDropFileEvent );
[oneway] void  Close();


[oneway] void  UserEvent( [in] unsigned long EventID,
       [in] any Parameter );
};
```

TABLE 5. Structure *RmDropFileEvent*

```
typedef sequence< string > FileNameSequence;

struct RmDropFileEvent
{
       short                     nX;
       short                     nY;
       FileNameSequence       aFileNameSequence;
       unsigned short         nDropAction;
       unsigned short         nSourceOptions;
       byte                   nWindowType;
       boolean                    bIsDefault;
};
```

Structures used in interface *XRmFrameWindow* (Table 1 and Fig. 7) include structure RmFrameResolutions (Table 6) and structure IDLKeyNameInfo (Table 7).

TABLE 6.: Structure *RmFrameResolutions*

```
struct RmFrameResolutions



{
        long                DPIx;
        long                DPIy;
        long                FontDPIx;
        long                FontDPIy;
        unsigned short      Depth;
};
```

TABLE 7.: Structure *IDLKeyNameInfo*

```
struct IDLKeyNameInfo
{
        unsigned short      nCode;
        string          aName;
};
```

As illustrated in Fig. 6, class RmFrameWindow includes remote output device interface *XRmOutputDevice* (Table 8). Interface *XRmOutputDevice* inherits from interface *XInterface* (Table 2), and uses structures IDLFontMetricData, KernPair, IDLFontData, IDLFont (Table 9). In the embodiment of Table 8, interface *XRmOutputDevice* includes methods QuerySvOutputDevicePtr, SetClipRegion, ResetClipRegion, GetResolution, GetCharWidth, GetFontMetric, GetKernPairs, GetDevFontList, AddFontAtom, GetGlyphBoundRect, GetGlyphOutline, GetPixel, GetPixelArray, SetFont, SetTextColor, SetLineColor, SetFillColor, SetRasterOp, CopyArea, CopyBits, Invert, InvertPolygon, InvertTracking, InvertTrackingPolygon, DrawPixel, DrawColoredPixel, DrawPixelArray, DrawLine, DrawRect, DrawPolyLine, DrawPolygon, DrawPolyPolygon, DrawEllipse, DrawArc, DrawPie, DrawCord, DrawGradient, DrawPolyPolyGradient, DrawPolyPolyHatch, DrawText, DrawTextArray, DrawWaveLine, DrawGrid, DrawPolyPolyTransparent, and Draw2ColorFrame.

TABLE 8.: Interface *XRmOutputDevice*

```
interface XRmOutputDevice :
      com::sun::star::uno::XInterface
{
unsigned long  QuerySvOutputDevicePtr();
[oneway] void  SetClipRegion( [in] ByteSequence aData
      );
[oneway] void  ResetClipRegion();
void  GetResolution( [out] long nDPIX, [out] long
      nDPIY, [out] unsigned short nBitCount );
sequence< long >  GetCharWidth( [in] unsigned short
      nStart, [in] unsigned short nEnd );
void  GetFontMetric([out] IDLFontMetricData
      rFontMetric, [in] unsigned short nFirstChar, [in]
      unsigned short nLastCar, [in] boolean
      bGetKernPairs );
sequence< KernPair > GetKernPairs();
void  GetDevFontList( [out] sequence< string >
      FontNameAtoms, [out] sequence< string >
      StyleNameAtoms, [out] IDLFontDataSequence
      rFontData );
[oneway] void  AddFontAtom( [in] byte Type, [in] string
      Name, [in] unsigned short Atom );
boolean  GetGlyphBoundRect( [in] unsigned short cChar,
      [out] long nX, [out] long nY, [out] long nWidth,
      [out] long nHeight, [in] boolean bOptimize );
boolean  GetGlyphOutline( [in] unsigned short cChar,
      [out] ByteSequence rPoly, [in] boolean bOptimize
```

```
                    );
void   GetPixel( [in] long nX, [in] long nY, [out]
       unsigned long nColor );
void   GetPixelArray( [in] ByteSequence aData, [out]
       ULongSequence aColors );
[oneway] void   SetFont( [in] IDLFont aFont );
[oneway] void   SetTextColor( [in] unsigned long nColor
       );
[oneway] void   SetLineColor( [in] unsigned long nColor
       );
[oneway] void   SetFillColor( [in] unsigned long nColor
       );
[oneway] void   SetRasterOp( [in] unsigned short nROP );
[oneway] void   CopyArea( [in] long nSrcX, [in] long
       nSrcY,  [in] long nSrcWidth,  [in] long
       nSrcHeight, [in] long nDestX, [in] long nDestY,
       [in] unsigned short nFlags );
[oneway] void   CopyBits( [in] long nSrcX, [in] long
       nSrcY, [in] long nSrcWidth, [in] long nSrcHeight,
       [in] long nDestX, [in] long nDestY, [in] long
       nDestWidth, [in] long nDestHeight, [in]
       XRmOutputDevice xFrom );
[oneway] void   Invert( [in] long nX, [in] long nY, [in]
       long nWidth, [in] long nHeight, [in] unsigned
       short nFlags );
[oneway] void   InvertPolygon( [in] ByteSequence
       aPolygon, [in] unsigned short nFlags );
[oneway] void   InvertTracking( [in] long nX, [in] long
       nY, [in] long nWidth, [in] long nHeight, [in]
       unsigned short nFlags );
[oneway] void   InvertTrackingPolygon( [in] ByteSequence
       aPolygon, [in] unsigned short nFlags );
[oneway] void   DrawPixel( [in] long nX, [in] long nY );
[oneway] void   DrawColoredPixel( [in] long nX, [in]
       long nY, [in] unsigned long nColor );
[oneway] void   DrawPixelArray( [in] ByteSequence aData,
       [in] ULongSequence aColors );
```

23

EP 1 130 510 A2

```
[oneway] void  DrawLine( [in] long nStartX, [in] long
    nStartY, [in] long nEndX, [in] long nEndY );
[oneway] void  DrawRect( [in] long nX, [in] long nY,
    [in] long nWidth, [in] long nHeight );
[oneway] void  DrawPolyLine( [in] ByteSequence aData );
[oneway] void  DrawPolygon( [in] ByteSequence aData );
[oneway] void  DrawPolyPolygon( [in] ByteSequence aData
    );
[oneway] void  DrawRoundedRect( [in] long nX, [in] long
    nY, [in] long nWidth, [in] long nHeight, [in]
    unsigned long nHorzRound, [in] unsigned long
    nVertRound );
[oneway] void  DrawEllipse( [in] long nX, [in] long nY,
    [in] long nWidth, [in] long nHeight );
[oneway] void  DrawArc( [in] long nX, [in] long nY,
    [in] long nWidth, [in] long nHeight, [in] long
    nStartX, [in] long nStartY, [in] long nEndX, [in]
    long nEndY );
[oneway] void  DrawPie( [in] long nX, [in] long nY,
    [in] long nWidth, [in] long nHeight, [in] long
    nStartX, [in] long nStartY, [in] long nEndX, [in]
    long nEndY );
[oneway] void  DrawChord( [in] long nX, [in] long nY,
    [in] long nWidth, [in] long nHeight, [in] long
    nStartX, [in] long nStartY, [in] long nEndX, [in]
    long nEndY );
[oneway] void  DrawGradient( [in] long nX, [in] long
    nY, [in] long nWidth, [in] long nHeight, [in]
    ByteSequence aData );
[oneway] void  DrawPolyPolyGradient( [in] ByteSequence
    aPolyPolyData, [in] ByteSequence aGradientData );
[oneway] void  DrawPolyPolyHatch( [in] ByteSequence
    aPolyPolyData, [in] ByteSequence aHatchData );
[oneway] void  DrawText( [in] long nX, [in] long nY,
    [in] string aText );
[oneway] void  DrawTextArray( [in] long nX, [in] long
    nY, [in] string aText, [in] LongSequence aLongs );
```

24

```
[oneway] void  DrawWaveLine( [in] long nStartX, [in]
      long nStartY,  [in] long nEndX, [in] long nEndY,
      [in] unsigned short nStyle );
[oneway] void  DrawGrid( [in] long nMinX, [in] long
      nMaxX,  [in] sequence< long > aHorzValues, [in]
      long nMinY, [in] long nMaxY,  [in] sequence< long
      > aVertValues, [in] unsigned long nFlags );
[oneway] void  DrawPolyPolyTransparent( [in]
      ByteSequence aData, [in] unsigned short
      nTransparencyPercent );
[oneway] void  Draw2ColorFrame( [in] long x, [in] long
      y, [in] unsigned long width, [in] unsigned long
      height, [in] unsigned long leftAndTopColor, [in]
      unsigned long rightAndBottomColor );
};
```

In one embodiment, method GetFontMetric (Table 8) gets the general metrics of the current font. If the value of inputs nFirstChar and nLastChar are not equal, member maCharWidths of output structure IDLFontMetricData (Table 9) is filled as it would be in a call by method GetCharWidth and so saves one synchronous call. If the Boolean input value of variable bGetKernPairs is true, member maKerningPairs of output structure IDLFontMetricData is filled as it would be in a call to method GetKernPairs, and this saves another synchronous call.

In method AddFontAtom, Type is a FontAtomType; Name is the new atom string; and Atom the new atomic value

In Table 9, a brief description of given of the values in the various structures.

TABLE 9. Structure and Other Information Used by
Interface *XRmOutputDevice*

```
// [in] Eingabe-Parameter. Der "Server" auf dem das
Object liegt // ist der Remote-Client.
// Also "Server" eigentlich "Display"


// [oneway] => Kein warten auf Antwort


struct KernPair
{
    unsigned short      Char1;
    unsigned short      Char2;
    short               Kerning;
};


struct IDLFontMetricData
{
// these data must be set
// Durchschnittsbreite vom Font in Pixeln (must same as
by SetFont)
short               mnWidth;
// Ascent
short               mnAscent;
// Descent
short               mnDescent;
// Internal-Leading
short               mnLeading;
// Schraegstellung (bei Italic)
short               mnSlant;
// Erstes druckbare Zeichen im Font
unsigned short   mnFirstChar;
// Letztes druckbare Zeichen im Font
unsigned short   mnLastChar;
// this data should be overwritten
// Fontname: Atom
```

```
unsigned short    mnName;
// Stylename: Atom
unsigned short    mnStyleName;
// Rotation
short                    mnOrientation;
// Family vom Font
byte              meFamily;
// CharSet vom Font
byte              meCharSet;
// Weight vom Font
byte              meWeight;
// Italic vom Font
byte              meItalic;
// Pitch vom Font
byte              mePitch;
// Type vom Font
byte              meType;
// Ist es ein Device-Font
boolean           mbDevice;
// factor for charwidths
long              mnFactor;
sequence< long >      maCharWidths;
sequence< KernPair >  maKerningPairs;
};


struct IDLFontData
{
// Struktur zum Abfragen der DevFontList
// Name vom Font: Atom
unsigned short       mnName;
// StyleName vom Font: Atom
unsigned short      mnStyleName;
// Breite vom Font in Pixeln
short                    mnWidth;
// Heoehe vom Font in Pixeln
short                    mnHeight;
// Family vom Font
```

```
byte                    meFamily;
// CharSet vom Font
byte                    meCharSet;
// Pitch vom Font
byte                    mePitch;
// WidthType vom Font
byte                    meWidthType;
// Weight vom Font
byte                    meWeight;
// Italic vom Font
byte                    meItalic;
// Type vom Font
byte                    meType;
// bit0: mborientation
//bit 1: mbDevice
byte                    mnBools;


};


struct IDLFont
{
// Struktur zum Setzen eines Fonts...
unsigned short          mnName;
unsigned short          mnStyleName;
short                   mnWidth;
short                   mnHeight;
byte                    meFamily;
byte                    meCharSet;
byte                    meWidthType;
byte                    meWeight;
byte                    meItalic;
byte                    mePitch;
short                   mnOrientation;
};


typedef sequence< byte, 1 > ByteSequence;
typedef sequence< long, 1 > LongSequence;
```

```
typedef sequence< unsigned long, 1 > ULongSequence;
typedef sequence< unsigned short , 1 > UShortSequence;
typedef sequence< IDLFontData, 1 > IDLFontDataSequence;


constants FontAtomType
{
    const byte NAME = 0;
    const byte STYLE = 1;
};
```

In Figure 6, class *Clientfactory* includes interface *XMultiInstanceFactory* (Table 10 and Fig. 7). Class *Client-Factory* is called by an object BeanFrame to generate multiple instances of class *RmFrameWindow.* Interface *XMulti-InskanceFactory* inherits from interface *XInterface* (Table 2).

TABLE 10.: INTERFACE *XMultiInstanceFactory*

```
interface XMultiInstanceFactory :
    com::sun::star::uno::XInterface
{
    sequence<any> createInstances(
        [in] string aObjectName,
        [in] long nCount);
};
```

In Figure 6, class *ServiceFactory* include interface *XMultiServiceFactory* (Table 11 and Fig. 7). Class *ServiceFactory* is called by an object connector to generate objects LoginService and BeanService.
Interface *XMultiServiceFactory* inherits from interface *XInterface* (Table 2) and throws an exception Exception (Table 12).

TABLE 11.:   INTERFACE *XMultiServiceFactory*

```
interface XMultiServiceFactory:
      com::sun::star::uno::XInterface
{
com::sun::star::uno::XInterface createInstance( [in]
      string aServiceSpecifier )
      raises( com::sun::star::uno::Exception );
com::sun::star::uno::XInterface
      createInstanceWithArguments(
              [in] string ServiceSpecifier,
              [in] sequence<any> Arguments )
           raises( com::sun::star::uno::Exception );
sequence<string> getAvailableServiceNames();
};
```

The service factory objects support this interface for creating components by a specifying string, i.e. the service name. In the embodiment of Table 11, interface *XMultiServiceFackory* includes methods createInstance, createInstanceWithArguments, and getAvailableServiceNames.

Method createInstance creates an instance of a component which supports the services specified by the factory. Input parameter ServiceSpecifier is a service name that specifies the service that should be created by this factory.

Method createInstanceWithArguments creates an instance of a component which supports the services specified by the factory. Input parameter aArguments is the values of the arguments that depend on the service specification of the factory. Normally the factory delegates the arguments to the method init() of the created instance. The factory is explicitly allowed to modify, delete or add arguments. The conversion rules of the arguments are specified by a converter service. Input parameter ServiceSpecifier is a service name that specifies the service that should be created by this factory.

Method getAvailableServiceNames returns a sequence of all service identifiers, which can be instantiated.

Table 12 presents one embodiment of exception *Exception* that is used by interface *XMultiServiceFactory*.

TABLE 12.: EXCEPTION *Exception*

```
exception Exception
{
string Message;
com::sun::star::uno::XInterface Context;
};
```

In this embodiment, exception *Exception* is the basic exception from which all other exceptions are derived. Parameter Message specifies a detailed message of the exception or an empty string if the callee does not describe the exception. Context is an object that describes the reason for the exception. Object Context may be NULL if the callee does not describe the exception.

Service LoginService that is instantiated by object ServiceFactory of the daemon includes an interface *XLogin* (Table 13 and Fig. 7). Interface *XLogin* inherits from interface *XInterface* and uses an enumeration *ResultofLogin.*

TABLE 13.:   INTERFACE *XLogin*

```
enum ResultofLogin
{
      OK,
      NO_LICENSE,
      ALREADY_LOGGED_IN,
      SECURITY_VIOLATION,
      COULD_NOT_TO_FILESERVER,
      NO_CONFIGURATION,
      UNKNOWN_ERROR
      };
interface XLogin: com::sun::star::uno::XInterface
{
Boolean  installationHasBeenCompleted ( [in] string
      sNameOfUser );
void  completeInstallation ( [in] string sNameOfUser,
      [in] string sPassword );
ResultofLogin  login  ( [in] string sNameOfUser,  [in]
      string sPassword, [in] string sNameOfWorkstation,
      [in] string sParameter );
string  getQualifiedNameOfUser ( [in] string
      sNameOfUser );
};
```

In the embodiment of Table 13, interface *XLogin* includes methods installationHasBeenCompleted, completeInstallation, login, and getQualifiedNameOfUser.

Class BeanService includes an interface *XRmStarOffice* in the embodiment of Figure 6. One embodiment of interface *XRmStarOffice* is presented in Table 14. Interface *XRmStarOffice* inherits from interface *XInterface* and uses interfaces *XMultiServiceFactory* (Table 11) and *XRmFrameWindow* (Table 1). See Figure 7.

TABLE 14.:INTERFACE XRmStarOffice

```
typedef enum _StartUpError {
     SOFFICE_NO_ERROR,
     SOFFICE_WRONG_LOGIN,
     SOFFICE_SERVICE_NOT_FOUND,
     SOFFICE_CONNECTION_REFUSED,
     SOFFICE_NO_LICENSE,
     SOFFICE_UNKNOWN_ERROR,
     SOFFICE_ALREADY_STARTED
} StartUpError;


constants StarOfficeServerType
{
     const long APPSERVER     = 0;
     const long BEANSERVER    = 1;
     const long ONESERVER     = 2;
};
interface XRmStarOffice :
     com::sun::star::uno::XInterface
{
/** AppName+Params+Version+Language, weil ueber den
Demon dann spaeter auch andere Programme gestartet
werden koennen...
```

```
*/
StartUpError    Start(
     [in] com::sun::star::lang::XMultiServiceFactory
               xClientFactory,
     [in] string aConnectionName,
     [in] string aUserName,
     [in] string aPassword,
     [in] string aFileServer,
     [in] string    aClientSystemName,
     [in] string    aAppName,
     [in] string    aAppParams,
     [in] unsigned long nAppLanguage,
     [in] unsigned long nRemoteVersion,
     [in] long servertype
);
[oneway] void  SetUserInfoForPrinting(
          [in] string AuserName,
          [in] string aPassword );
void  AddRemotePrinter(
     [in] string aName,
     [in] string aServer,
     [in] boolean bSetAsDefault,
     [in] boolean bIsLocal );
com::sun::star::uno::XInterface CreateBeanWindow(
     [in] XRmFrameWindow xFrameWin,
     [in] com::sun::star::lang::XMultiServiceFactory
               xClientFactory,
     [in] any aSystemWindowToken );
};
```

In the embodiment of Table 14, interface *XRmStarOffice* includes methods Start, SetUserInfoForPrinting, AddRemotePrinter, and CreateBeanWindow. Method start receives as input a reference to object ClientFactory, a user name, a password, identification of a file server, and a specification of the application that is to be started, e.g., parameters application name, application parameters, application language, and version. Method CreateBeanWindow receives a reference to object RmFrameWindow, and object ClientFactory as inputs.

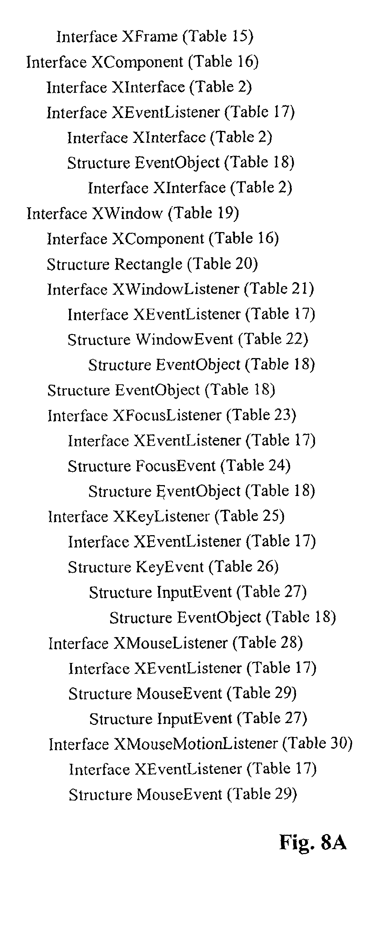

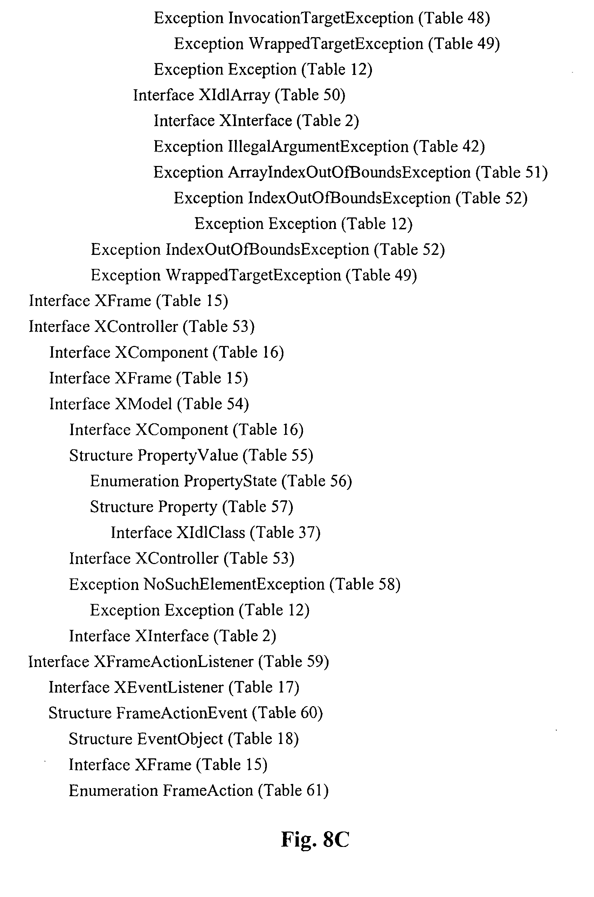

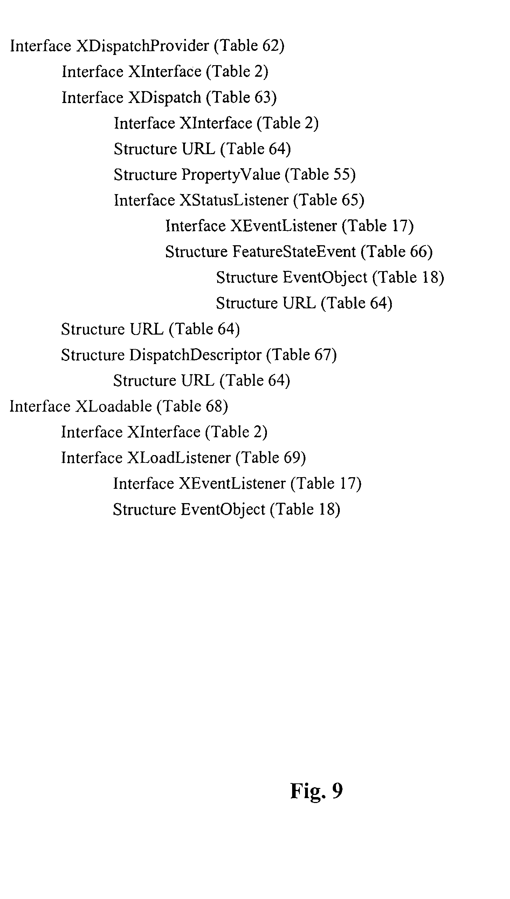

Class BeanFrame (Fig. 6) includes two interfaces, interface *XFrame* (Table 15) and interface *XDispatchProvider* (Table 62 and Fig. 9). In the embodiment of Table 15, interface *XFrame* inherits from interface *XComponent* (Table 16). Interface *XFrame* uses interfaces *XWindow* (Table 19), *XController* (Table 53 and Fig. 8C), and *XFrameActionListener* (Table 59 and Fig. 8C). As illustrated in Figures 8A to 8C, each of these interfaces uses other interfaces, structures, exceptions, and enumerations that are described more completely below.

In the embodiment of Table 15, interface *XFrame* includes methods initialize, setCreator, getCreator, getName, setName, findFrame, isTop, activate, deactivate, setComponent, getComponentWindow, getController, contextChanged, addFrameActionListener, and removeFrameActionListener

TABLE 15.:   INTERFACE *XFRAME*

```
interface XFrame: com::sun::star::lang::XComponent
{
void initialize( [in] com::sun::star::awt::XWindow
     xWindow );
com::sun::star::awt::XWindow getContainerWindow();


[oneway] void setCreator(
```

```
        [in] XFramesSupplier xCreator );

[const] XFramesSupplier getCreator();

 [const] string getName();

[oneway] void setName( [in] string aName );

com::sun::star::frame::XFrame findFrame( [in] string
      aTargetFrameName,  [in] long nSearchFlags );

boolean isTop();

[oneway] void activate();

 [oneway] void deactivate();

boolean isActive();

boolean setComponent( [in] com::sun::star::awt::XWindow
      xComponentWindow,  [in]
      com::sun::star::frame::XController xController );
 [const] com::sun::star::awt::XWindow
      getComponentWindow();
[const] XController getController();
void contextChanged();
[oneway] void addFrameActionListener(
      [in]XFrameActionListener xListener );
[oneway] void removeFrameActionListener( [in]
      XFrameActionListener xListener );
};
```

Interface *XFrame* makes it possible to control a frame. Method initialize is called to initialize the frame within a window. Method getContainerWindow provides access to the window of the frame. Normally this is used as the parent window of the controller window. Method setCreator sets the frame container that created this frame. Only the creator is allowed to call method setCreator. Method getCreator returns the frame container that created this frame. Method getName returns the programmatic name of this frame. Method setName sets the name of the frame. Normally, the name of the frame is set initially.

Method findFrame searches for a frame with the specified name. Frames may contain other frames, e.g., a frameset, and may be contained in other frames. This hierarchy is searched with this method. First some special names are taken into account, i.e. "","_self", "_top", "_active" etc., flag nSearchFlags is ignored when comparing these names with parameter aTargetFrameName, and further steps are controlled by flag nSearchFlags. If allowed, the name of the frame itself is compared with the desired one, then (again, if allowed )the method is called for all children of the frame. Finally, the method may be called for the parent frame (if allowed). If no frame with the given name is found, a new top frame is created if this is not suppressed by a special value of flag FrameSearchFlag. The new frame also gets the desired name.

Method isTop determines if the frame is a top frame. In general, a top frame is the frame which is a direct child of a task frame or which does not have a parent. If a frame returns for this method, all calls have to stop the search at such a frame unless the flag FrameSearchFlag::TASKS is set.

Method activate activates this frame and thus the component within. At first, the frame sets itself as the active frame of its creator by calling FrameAction::FRAME_ACTIVATED. The component within this frame may listen to this event to grab the focus on activation. For simple components, this can be done by a Frame Loader. Finally, most frames may grab the focus to one of its windows or forward the activation to a sub-frame.

Method deactivate is called by the creator frame when another sub-frame is activated. At first the frame deactivates its active sub-frame, if any, and then broadcasts a Frame Action Event with FrameAction:: FRAME_DEACTIVATING.

Method isActive determines if the frame is active. Method setComponent sets a new component into the frame. Method getComponentWindow returns the current visible component in this frame. The frame is the owner of the window. Method getController returns the current controller within this frame. Normally, it is set by a frame loader.

Method contextChanged notifies the frame that the context of the controller within this frame changed (i.e. the selection). According to a call to this interface, the frame calls with FrameAction::CONTEXT_CHANGED to all listeners, which are registered using this frame. For external controllers, this event can be used to requery dispatches.

Method addFrameActionListener registers an event listener, which is called when certain things happen to the components within this frame or within sub-frames of this frame. For example, it is possible to determine instantiation/destruction and activation/deactivation of components. Method removeFrameActionListener unregisters an event listener, which was registered with addFrameActionListener ().

Interface *XFrame* inherits from interface *XComponent*.

One embodiment of interface *XComponent* is presented in Table 16. Interface *XComponent* inherits from interface *XInterface* (Table 2) and uses interface *XEventListener* that in turn uses structure *EventObject.* See Figure 8A.

## TABLE 16.: INTERFACE *XComponent*

```
interface XComponent: com::sun::star::uno::XInterface
{
void dispose();
void addEventListener( [in] XEventListener xListener );
void removeEventListener(
                [in] XEventListener aListener );
};
```

Interface *XComponent* controls the lifetime of components. Actually the real lifetime of an object is controlled by references kept on interfaces of the object. There are two distinct meanings in keeping a reference to an interface: first is to own the object; and second is to know the object.

To prevent cyclic references from resulting in failure to destroy an object, references of interfaces to the object are allowed only (i) by the owner, (ii) if the reference is very temporary, or (iii) you are registered as an Event Listener at that object and cleared the reference when "disposing" is called.

An owner of an object calls method dispose to dispose of the object. Only the owner of the object calls method *dispose* if the object should be destroyed. All objects and components must release the references to the objects. If the object is a broadcaster, all listeners are removed and method *XEventListener::disposing()* is called on all listeners.

Due to the importance of the concept of method *XComponent::dispose(),* a figurative example is provided. Imagine there was a hole in the floor and some people around it were holding a box (our component). Everyone who holds the box for a longer time than just temporarily (i.e. to put something in or get something out) has to watch a light bulb, which is attached to the box (listening to event *XEventListener::disposing()).* Now, when the owner of the box switched the light on (calling method *XComponent::dispose ()*), everybody holding the box had to take their hands off (clear the interface handles). If and only if everyone did that, did the box fall (getting deleted). However, only the owner is allowed to switch the light on! After method dispose is called, the instance has to throw exception DisposedException for all non-event-method calls and event-method calls have to be ignored.

The following is an example of one embodiment.

```
void dispose()

{

// make a copy

Listener [] aTmpListeners = MyListeners.clone();


// clear all listeners (against recursion)

MyListeners.clear();


// call all listeners

EventObject aEvt = new EventObject();

aEvt.xSource = this;

for( i = 0; i &amp;lt;aTmpListeners.length; i++ )

aTmpListeners[i].disposing( aEvt );

}
```

Method addEventListener adds an event listener to the listener list for the object. The broadcaster fires the disposing method of this listener if method dispose() is called. Conversely, method removeEventListener removes an event listener from the listener list for the object.

As described above, interface *XComponent* uses interface *XEventListener* (Table 17.)

TABLE 17.: INTERFACE XEventListener

```
interface XEventListener:
      com::sun::star::uno::XInterface
{
void disposing( [in] com::sun::star::lang::EventObject
      Source );
};
```

Interface *XEventListener* (Table 17) inherits from interface *XInterface* (Table 2). Interface *XEventListener* is a tagging interface that all event listener interfaces must extend. Method disposing is called when the broadcaster is about to be disposed.

All listeners and all other objects, which reference the broadcaster should release the references. One embodiment of structure *EventObject* is presented in Table 18.

TABLE 18.: Structure *EventObject*

```
struct EventObject
{
com::sun::star::uno::XInterface Source;
};
```

Structure *EventObject* specifies the base for all event objects and identifies the source of the event. Field Source refers to the object that fired the event.

As explained above, interface *XWindow* (Table 19) is used by interface *XFrame* (Table 15). See also Fig. 8A. In the embodiment of Table 19, interface *XWindow* inherits from interface *XComponent* (Table 16) and uses interfaces *XWindowListener* (Table 21), *XFocusListener* (Table 23), *XKeyListener* (Table 25), *XMouseListener* (Table 28), *XMouseMotionListener* (Table 30), and *XPaintListener* (Table 31), and structure *Rectangle* (Table 20), each of which is described herein.

TABLE 19.: INTERFACE *XWindow*

```
interface XWindow: com::sun::star::lang::XComponent
{
[oneway] void setPosSize( [in] long X, [in] long Y,
     [in] long Width, [in] long Height, [in] short
     Flags );
[const] com::sun::star::awt::Rectangle getPosSize();
[oneway] void setVisible( [in] boolean Visible );
[oneway] void setEnable( [in] boolean Enable );
[oneway] void setFocus();
[oneway] void addWindowListener( [in]
     com::sun::star::awt::XWindowListener xListener );
[oneway] void removeWindowListener( [in]
     com::sun::star::awt::XWindowListener xListener );
[oneway] void addFocusListener( [in]
     com::sun::star::awt::XFocusListener xListener );
[oneway] void removeFocusListener( [in]
     com::sun::star::awt::XFocusListener xListener );
[oneway] void addKeyListener( [in]
     com::sun::star::awt::XKeyListener xListener );
[oneway] void removeKeyListener( [in]
     com::sun::star::awt::XKeyListener xListener );
[oneway] void addMouseListener( [in]
     com::sun::star::awt::XMouseListener xListener );
[oneway] void removeMouseListener( [in]
     com::sun::star::awt::XMouseListener xListener );
[oneway] void addMouseMotionListener( [in]
     com::sun::star::awt::XMouseMotionListener
     xListener );
[oneway] void removeMouseMotionListener( [in]
     com::sun::star::awt::XMouseMotionListener
     xListener );
[oneway] void addPaintListener( [in]
     com::sun::star::awt::XPaintListener xListener );
```

```
[oneway] void removePaintListener( [in]
      com::sun::star::awt::XPaintListener xListener );
};
```

Interface *XWindow* (Table 19) specifies the basic operations for a window component. A window is a rectangular region on an output device with a position, size, and internal coordinate system. The main sense of a window is to receive events from the user.

Method setPosSize sets the outer bounds of the window. Method getPosSize returns the outer bounds of the window. Method setVisible shows or hides the window depending on the parameter. Method setEnable enables or disables the window depending on the parameter. Method setFocus sets the focus to the window. Method addWindowListener adds the specified component listener to receive component events from this window component. Method removeWindowListener removes the specified listener so it no longer receives component events from this window component. Method addFocusListener adds the specified focus listener to receive focus events from this window component. Method removeFocusListener removes the specified focus listener so it no longer receives focus events from this component. Method addKeyListener adds the specified key listener to receive key events from this component. Method removeKeyListener removes the specified key listener so it no longer receives key events from this component. Method addMouseListener adds the specified mouse listener to receive mouse events from this component. Method removeMouseListener removes the specified mouse listener so it no longer receives mouse events from this component. Method addMouseMotionListener adds the specified mouse motion listener to receive mouse motion events from this component. Method removeMouseMotionListener removes the specified mouse motion listener so it no longer receives mouse motion events from this component. Method addPaintListener adds the specified paint listener to receive paint events from this component. Method removePaintListener removes the specified paint listener so it no longer receives paint events from this component.

Structure *Rectangle* (Table 20) specifies a rectangular area by position and size. Field Y specifies the y-coordinate. Field Width specifies the width. Field Height specifies the height.

TABLE: 20.:   STRUCTURE *Rectangle*

```
struct Rectangle
{
long X;
long Y;
long Width;
long Height;
};
```

An embodiment of interface *XWindowListener* that is used in the above embodiment of interface *XWindow* (Table 19) is presented in Table 21. Interface *XWindowListener* inherits from interface *XEventListener* (Table 17) and uses structure *WindowEvent* (Table 22.)

TABLE 21.:    INTERFACE XWindowListener

```
interface XWindowListener:
     com::sun::star::lang::XEventListener
{
[oneway] void windowResized( [in]
     com::sun::star::awt::WindowEvent e );
[oneway] void windowMoved( [in]
     com::sun::star::awt::WindowEvent e );
[oneway] void windowShown( [in]
     com::sun::star::lang::EventObject e );
[oneway] void windowHidden( [in]
     com::sun::star::lang::EventObject e );
};
```

Interface *XWindowListener* makes it possible to receive window events. Component events are provided only for notification purposes. Moves and resizes are handled internally by the window component, so that the GUI layout works properly independent of whether a program registers such a listener. Method windowResized is invoked when the window has been resized. Method windowMoved is invoked when the window has been moved. Method window-Shown is invoked when the window has been shown. Method windowHidden is invoked when the window has been hidden.
One embodiment of structure *WindowEvent* used in Table 21 is presented in Table 22.

TABLE 22.:  STRUCTURE *WindowEvent*

```
struct WindowEvent: com::sun::star::lang::EventObject
{
long X;
long Y;
long Width;
long Height;
long LeftInset;
long TopInset;
long RightInset;
long BottomInset;
};
```

Structure *WindowEvent* specifies the component-level keyboard event and inherits from structure *EventObject* (Table 18). Field X specifies the outer X-position of the window. Field Y specifies the outer Y-position of the window. Field Width specifies the outer (total) width of the window. Field Height specifies the outer (total) height of the window. Field LeftInset specifies the inset from the left. The inset is the distance between the outer and the inner window, in other words in this case it is the width of the left border. Field TopInset specifies the inset from the top. The inset is the distance between the outer and the inner window, in other words in this case it is the height of the top border. Field RightInset specifies the inset from the right. The inset is the distance between the outer and the inner window, in other words in this case it is the width of the right border. Field BottomInset specifies the inset from the bottom. The inset is the distance between the outer and the inner window, in other words in this case it is the height of the bottom border.

An embodiment of interface *XFocusListener* that is used in the above embodiment of interface *XWindow* (Table 19) is presented in Table 23. Interface *XFocusListener* inherits from interface *XEventListener* (Table 17) and uses structure FocusEvent (Table 24.)

TABLE 23.: INTERFACE *XFocusListener*

```
interface XFocusListener:
        com::sun::star::lang::XEventListener
{
[oneway] void focusGained( [in]
        com::sun::star::awt::FocusEvent e );
[oneway] void focusLost( [in]
        com::sun::star::awt::FocusEvent e );
};
```

Interface *XFocusListener* makes it possible to receive keyboard focus events. The window, which has the keyboard focus, is the window, which gets the keyboard events. Method focusGained is invoked when a window gains the keyboard focus. Method focusLost is invoked when a window loses the keyboard focus.
One embodiment of structure *FocusEvent* used in Table 23 is presented in Table 24.

TABLE 24.:  STRUCTURE *FocusEvent*

```
struct FocusEvent: com::sun::star::lang::EventObject
{
short FocusFlags;
com::sun::star::uno::XInterface NextFocus;
boolean Temporary;
};
```

Structure *FocusEvent* specifies a keyboard focus event, and inherits from structure *EventObject* (Table 18). There are two levels of focus change events: permanent and temporary. Permanent focus change events occur when focus is directly moved from one component to another, such as through calls to method requestFocus() or as the user uses the Tab key to traverse components. Temporary focus change events occur when focus is gained or lost for a component as the indirect result of another operation, such as window deactivation or a scrollbar drag. In this case, the original focus state is automatically restored once that operation is finished, or for the case of window deactivation, when the window is reactivated. Both permanent and temporary focus events are delivered using the FOCUS_GAINED and FOCUS_LOST event ids; the levels may be distinguished in the event using the method isTemporary()
Field FocusFlags specifies the reason for the focus change as an arithmetic, or combination of FocusChangeReason. Field NextFocus contains the window which gets the focus on a lose focus event. Field Temporary specifies if this focus change event is a temporary change.

An embodiment of interface *XKeyListener* that is used in the above embodiment of interface *XWindow* (Table 19) is presented in Table 25. Interface *XKeyListener* inherits from interface *XEventListener* (Table 17) and uses structure KeyEvent (Table 24.) that in turn inherits from structure *InputEvent* (Table 27).

TABLE 25.: INTERFACE *XKeyListener*

```
interface XKeyListener:
        com::sun::star::lang::XEventListener
{
[oneway] void keyPressed( [in]                 .
        com::sun::star::awt::KeyEvent e );
[oneway] void keyReleased( [in]
        com::sun::star::awt::KeyEvent e );
};
```

Interface *XKeyListener* makes it possible to receive keyboard events. Method keyPressed is invoked when a key has been pressed. Method keyReleased is invoked when a key has been released.

The embodiment of structure *KeyEvent* in Table 26 inherits from structure *InputEvent* (Table 27), as described above. Structure *KeyEvent* specifies the component-level keyboard event. Field KeyCode contains the integer code representing the key of the event.

This is a constant from the constant group Key. Field KeyChar contains the Unicode character generated by this event or 0. Field KeyFunc contains the function type of the key event. This is a constant from the constant group KeyFunction.

TABLE 26.: STRUCTURE *KeyEvent*

```
struct KeyEvent: com::sun::star::awt::InputEvent
{
short KeyCode;
char KeyChar;
short KeyFunc;
};
```

Structure *InputEvent* is the root event class for all component-level input events and inherits from structure *EventObject* (Table 18). Input events are delivered to listeners before they are processed normally by the source where they originated. Structure *InputEvent* contains the modifier keys, which were pressed while the event occurred, i.e., zero or more constants from the KeyModifier group.

TABLE 27.:  STRUCTURE *InputEvent*

```
struct InputEvent: com::sun::star::lang::EventObject
{
short Modifiers;
};
```

An embodiment of interface *XMouseListener* that is used in the above embodiment of interface *XWindow* (Table 19) is presented in Table 28. Interface *XMouseListener* inherits from interface *XEventListener* (Table 17) and uses structure *MouseEvent* (Table 29.) that in turn inherits from structure *InputEvent* (Table 27).

TABLE 28.: INTERFACE *XMouseListener*

```
{
[oneway] void mousePressed( [in]
      com::sun::star::awt::MouseEvent e );
[oneway] void mouseReleased( [in]
      com::sun::star::awt::MouseEvent e );
[oneway] void mouseEntered( [in]
      com::sun::star::awt::MouseEvent e );
[oneway] void mouseExited( [in]
      com::sun::star::awt::MouseEvent e );
};
```

Interface *XMouseListener* makes it possible to receive events from the mouse in a certain window. Method mousePressed is invoked when a mouse button has been pressed on a window. Method mouseReleased is invoked when a mouse button has been released on a window. Method mouseEntered is invoked when the mouse enters a window. Method mouseExited is invoked when the mouse exits a window.

The embodiment of structure *MouseEvent* in Table 29 inherits from structure *InputEvent* (Table 27).

TABLE 29.: STRUCTURE *MouseEvent*

```
struct MouseEvent: com::sun::star::awt::InputEvent
{
short Buttons;


long X;
long Y;
long ClickCount;
boolean PopupTrigger;
};
```

Structure *MouseEvent* specifies an event from the mouse. Field Buttons contains the pressed mouse buttons, which are zero or more constants from the group MouseButton. Field X contains the x coordinate location of the mouse. Field Y contains the y coordinate location of the mouse. Field ClickCount contains the number of mouse clicks associated with event. Field PopupTrigger specifies if this event is a popup-menu trigger event.

An embodiment of interface *XMouseMotionListener* that is used in the above embodiment of interface *XWindow* (Table 19) is presented in Table 30. Interface *XMouseMotionListener* inherits from interface *XEventListener* (Table 17) and uses structure *MouseEvent* (Table 29).

TABLE 30.: INTERFACE *XMouseMotionListener*

```
interface XMouseMotionListener:
      com::sun::star::lang::XEventListener
{
void mouseDragged( [in] com::sun::star::awt::MouseEvent
      e );
void mouseMoved( [in] com::sun::star::awt::MouseEvent e
      );
};
```

Interface *XMouseMotionListener* makes it possible to receive mouse motion events on a window. Method mouseDragged is invoked when a mouse button is pressed on a window and then dragged. Mouse drag events continue to be delivered to the window where the first event originated until the mouse button is released independent of whether the mouse position is within the bounds of the window. Method MouseMoved is invoked when the mouse button has been moved on a window with no buttons down.

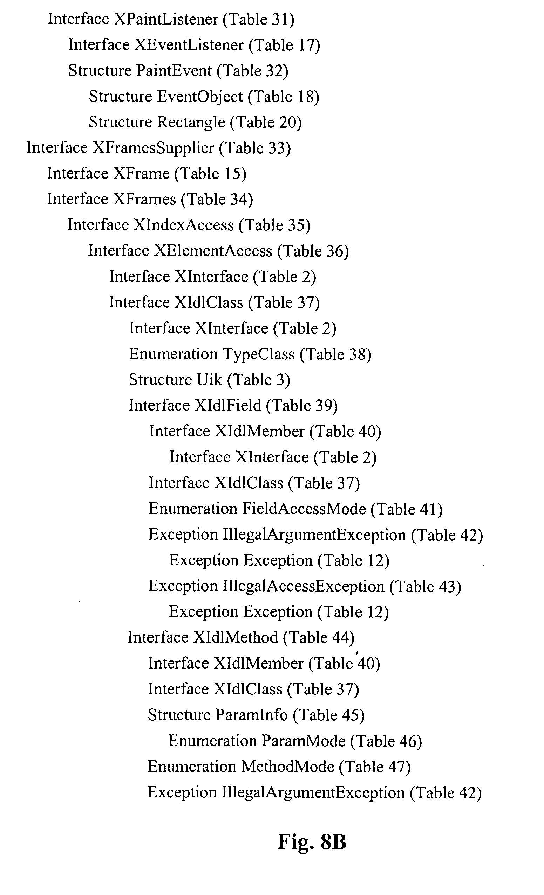

An embodiment of interface *XPaintListener* that is used in the above embodiment of interface *XWindow* (Table 19) is presented in Table 31. Interface *XPaintListener* inherits from interface *XEventListener* (Table 17) and uses structure *PaintEvent* (Table 32) that inherits from structure *EventObject* (Table 18) and structure *Rectangle* (Table 20). See Figure 8B.

TABLE 31.: INTERFACE *XPaintListener*

```
interface XPaintListener:
      com::sun::star::lang::XEventListener
{
[oneway] void windowPaint( [in]
      com::sun::star::awt::PaintEvent e );
};
```

Interface *XPaintListener* makes it possible to receive paint events. Method WindowPaint is called when a region of the window becomes invalid, for example, because another window was moved away.

TABLE 32.: STRUCTURE *PaintEvent*

```
struct PaintEvent: com::sun::star::lang::EventObject
{
com::sun::star::awt::Rectangle UpdateRect;
short Count;
};
```

Structure *PaintEvent* specifies the paint event for a component. This event is a special type, which is used to ensure that paint/update method calls are serialized along with the other events delivered from the event queue. Field UpdateRect contains the rectangle area, which needs to be repainted. Field Count contains the number of paint events that follows this event if it is a multiple PaintEvent. Paint events can be collected until Count is zero.

An embodiment of interface *XFramesSupplier* that is used in the above embodiment of interface *XWindow* (Table 19) is presented in Table 33. Interface *XFramesSupplier* inherits from interface XFrame (Table 15) and uses interface *XFrames* that in turn inherits from several other interfaces as illustrated in Figure 8B, and uses several structures, enumerations, and exceptions. One embodiment of each of these interfaces, structures, enumeration, and exceptions are described herein.

TABLE 33.: INTERFACE *XFramesSupplier*

```
interface XFramesSupplier: XFrame
{


XFrames getFrames();
[const] XFrame getActiveFrame();
void setActiveFrame( [in] XFrame xFrame );
};
```

Method getFrames returns the collection of (sub-) frames, which is represented by a container FramesContainer. Method getActiveFrame returns the sub-frame, which is active within this frame. This may be the frame itself. The active frame is defined as the frame, which contains (recursively) the window with the focus. If no window within the frame contains the focus, this method returns the last frame, which had the focus. If no containing window ever had the focus, the first frame within this frame is returned.

Method setActive Frame is called on activation of a direct sub-frame. This method is allowed to be called only by a sub-frame. After this call, the frame specified by input parameter xFrame is returned. In general this method first calls the method at the creator frame with this as the current argument. Then it broadcasts the FrameActionEvent FrameAction::FRAME_ACTIVATED.

In the embodiment of Table 34, interface *XFrames* inherits from interface *XIndexAccess* (Table 35). Interface *XFrames* manages and creates frames. Frames may contain other frames by implementing an interface *XFrames* and may be contained in other frames.

TABLE 34.: INTERFACE *XFrames*

```
interface XFrames:
     com::sun::star::container::XIndexAccess
{
void append(
     [in] com::sun::star::frame::XFrame xFrame );
sequence<com::sun::star::frame::XFrame> queryFrames(
     [in] long nSearchFlags );
void remove( [in] com::sun::star::frame::XFrame xFrame
     );
};
```

Method append appends the specified Frame to a list of sub-frames. Method queryFrames returns all child frames of the container, which are intended to be visible to other objects. The content of the sequence may be limited by the caller through the flag FrameSearchFlag.

Method remove removes the frame from its container. The creator attribute of the frame must be reset by the caller of this method.

The embodiment of interface *XIndexAccess* in Table 35 provides access to the elements of a collection through an index. This interface should only be used if the data structure itself is indexed.

```
        TABLE 35.:   INTERFACE XIndexAccess
```

```
interface XIndexAccess:
      com::sun::star::container::XElementAccess


{
[const] long getCount();
[const] any getByIndex( [in] long Index )
      raises(
      com::sun::star::lang::IndexOutOfBoundsException,
      com::sun::star::lang::WrappedTargetException );
};
```

Method getCount returns the number of elements. Method getByIndex returns the element at the specified index. Parameter Index specifies the position in the array.

The first index is 0. Method getByIndex throws com::sun::star::lang::IndexOutOfBoundsException (Table 52) if the index is not valid. Method getByIndex throws com::sun::star::lang::WrappedTargetException (Table 49), if the implementation has internal reasons for exceptions that are wrapped in exception WrappedTargetException.

In this embodiment, interface *XElementAccess* is the base interface of all collection interfaces.

TABLE 36.:  INTERFACE *XElementAccess*

```
interface XElementAccess:
     com::sun::star::uno::XInterface
{
[const] TYPE_XIDLCLASS getElementType();
[const] boolean hasElements();
};
```

Interface XElementAccess inherits from interface XInterface (Table 2). Method getElementType returns the type of the elements. Void means that the container is a multi-type container and the exact types with this interface cannot be determined with this method. Method hasElements returns <TRUE> if the object contain elements, otherwise <FALSE>.

One embodiment of interface *XIdlClass* is presented in Table 37. Interface *XIdlClass* provides information about a type or module. Every array also belongs to a type that is reflected as an XIdlClass object that is shared by all arrays with the same element type and number of dimensions. Finally, any of the primitive IDL types are also represented as XIdlClass objects. This includes "void, any, boolean, char, float, double, octet, short, long, hyper, unsigned octet, unsigned short, unsigned long" and "unsigned hyper". Interface *XIdlClass* inherits from interface *XInterface* (Table 2)

TABLE 37.:   INTERFACE *XIdlClass*

```
interface XIdlClass: com::sun::star::uno::XInterface
{
sequence<XIdlClass> getClasses();
XIdlClass getClass( [in] string aName );
boolean equals( [in] XIdlClass Type );
boolean isAssignableFrom( [in] XIdlClass xType );
com::sun::star::uno::TypeClass getTypeClass();
string getName();
[const] com::sun::star::uno::Uik getUik();
sequence<XIdlClass> getSuperclasses();
sequence<XIdlClass> getInterfaces();
XIdlClass getComponentType();
XIdlField getField( [in] string aName );
sequence<XIdlField> getFields();
XIdlMethod getMethod( [in] string aName );
```

```
sequence<XIdlMethod> getMethods();
XIdlArray getArray();
void createObject( [out] any obj );
};
```

Method getClasses returns all types and modules, which are declared in this class. Method getClass returns a type or module with the given name that is declared in this class. Method equals returns <TRUE> if the instances describe the same type, otherwise <FALSE>. Method isAssignableFrom tests if the parameter xType is a subclass of this class. Method getTypeClass returns the type that this instance represents. Method getName returns the fully qualified name of the type of object (class, interface, array, sequence, struct, union, enum or primitive) represented by this XIdlClass object. Method getUik returns the UIK from this type. If the type has no UIK, the returned UIK is zero.

If this object represents an interface or a class, the objects that represent the superclasses or superinterfaces of that class are returned by method getSuperclasses. If this object is the one that represents the topmost class or interface, an empty sequence is returned.

Method getInterfaces determines the interfaces implemented by the class or interface represented by this object. If the class or interface implements no interfaces, the method returns a sequence of length 0.

If this class represents an array or sequence type, method GetComponentType returns the XIdlClass object representing the component type of the array or sequence; otherwise it returns null. Method getField returns an XIdlField object that reflects the specified member field of the class, interface, struct, union, enum or exception represented by this XIdlClass object. If a field with the specified name is not found, 0 is returned. The field to be reflected is located by searching all the member fields of the class, interface, struct, union, enum or exception represented by this XIdlClass object for a field with the specified name or for NULL, if a field with the specified name is not found. Parameter aName specifies the simple name of the desired field.

Method getFields returns a sequence containing Field objects reflecting all the accessible fields of the class, interface, struct, union or enum represented by this XIdlClass object. Method getFields returns a sequence of length 0 if the class or interface has no accessible fields, or if it represents an array, a sequence or a primitive type. Specifically, if this XIdlClass object represents a class, this method returns the fields of this class and of all its superclasses. If this XIdlClass object represents an interface, the method returns the fields of this interface and of all its superinterfaces. If this XIdlClass object represents an array, sequence or primitive type, this method returns a sequence of length 0.

Method getMethod returns an XIdlMethod object that reflects the specified member method of the interface represented by this XIdlClass object. If a method with the specified name is not found, "0" is returned. The method to be reflected is located by searching all the member methods of the interface represented by this XIdlClass object for a method with the specified name.

Parameter aName specifies the simple name of the desired method.

Method getMethods returns a sequence containing XIdlMethod objects reflecting all the member methods of the class or interface represented by this XIdlClass object, including those declared by the class or interface and those inherited from superclasses and superinterfaces. Returns a sequence of length 0 if the class or interface has no member methods.

Method getArray returns interface *XIdlArray* (Table 50) to get and set the elements by index if the represented type is an array or sequence. Method createObject creates an instance of the type represented by this XIdlClass object if the represented type is a basic type, struct, enum, or sequence.

Enumeration *TypeClass* (Table 38) describe all type classes, which can be defined in the IDL.


TABLE 38.: Enumeration *TypeClass*

```
enum TypeClass
{
VOID,
CHAR,
BOOLEAN,
BYTE,
SHORT,
UNSIGNED_SHORT,
LONG,
UNSIGNED_LONG,
HYPER,
UNSIGNED_HYPER,
```

```
FLOAT,
DOUBLE,
STRING,
TYPE,
ANY,
ENUM,
TYPEDEF,
STRUCT,
UNION,
ARRAY,
INTERFACE,
SERVICE,
MODULE,
INTERFACE_METHOD,
INTERFACE_ATTRIBUTE,
UNKNOWN
};
```

Interface *XIdlField* (Table 39) inherits from interface *XIdlMember* (Table 40).

TABLE 39.:INTERFACE *XIdlField*

```
interface XIdlField:
     com::sun::star::reflection::XIdlMember
{
com::sun::star::reflection::XIdlClass getType();
com::sun::star::reflection::FieldAccessMode
     getAccessMode();
any get( [in] any obj )
  raises(
     com::sun::star::lang::IllegalArgumentException );
void set( [in] any obj, [in] any value )
  raises(
     com::sun::star::lang::IllegalArgumentException,
```

54

```
        com::sun::star::lang::IllegalAccessException );

};
```

Method getType returns an XIdlClass object that identifies the declared type for the field represented by this XIdlField object. Method getAccessMode returns an enumeration value, which denotes whether the field is "const", "readonly", "writeonly" or "readwrite".
Method get returns the value of the field represented by this field on the specified object. The underlying field's value is obtained as follows:

If the underlying field is a constant, the object argument is ignored; it may be NULL;

Otherwise, the underlying field is an instance field.

If the specified object argument is NULL, the method throws an "IllegalArgumentException". If the specified object is not an instance of the class, interface, struct, union or enum declaring the underlying field, the method throws an "IllegalArgumentException". Otherwise, the value is retrieved from the underlying instance or constant.
Method set sets the field represented by this XIdlField object on the specified object argument to the specified new value. The operation proceeds as follows. If the specified object argument is NULL, the method throws an exception IllegalArgumentException (Table 42). If the specified object argument is not an instance of the class or interface declaring the underlying field, the method throws an exception IllegalArgumentException. If the underlying field is constant, the method throws an exception IllegalAccessException (Table 43). If the new value cannot be converted to the type of underlying field by an identity or widening conversion, the method throws an IllegalArgumentException. The field is set to the possibly widened new value.
Interface *XIdlMember* (Table 40) inherits from interface *XInterface* (Table 2). Interface *XIdlMember* makes it possible to access members of classes dynamically.

TABLE 40.:   INTERFACE *XIdlMember*

```
interface XIdlMember: com::sun::star::uno::XInterface

{

XIdlClass getDeclaringClass();

string getName();

};
```

Method getDeclaringClass returns the XIdlClass object representing the class, interface, struct, union or enum that declares the member represented by this member. Method getName returns the fully qualified name of the type (class, interface, array, sequence, struct, union, enum or primitive) represented by this XIdlClass object, as a string.
The values in enumeration *FieldAccessMode* (Table 41) are used to specify the kind of attribute or property.

TABLE 41.:Enumeration *FieldAccessMode*

```
enum FieldAccessMode
{
//-------------------------------------------------------
/** The property is readable and writeable
 */
     READWRITE,


//-------------------------------------------------------
/** The property is readonly
 */
READONLY,                                        .


//-------------------------------------------------------
/** The property is write only
 */
WRITEONLY,


//-------------------------------------------------------
/** @deprecated
 */
CONST


};
```

Exception *IllegalArgumentException* (Table 42) is thrown to indicate that a method has passed an illegal or inappropriate argument. Exception *IllegalArgumentException* inherits from exception *Exception* (Table 12). Field ArgumentPosition identifies the position of the illegal argument. This field is -1 if the position is not known.

TABLE 42.: EXCEPTION *IllegalArgumentException*

```
exception IllegalArgumentException:
     com::sun::star::uno::Exception
{
short ArgumentPosition;
};
```

Exception *IllegalAccessException* (Table 43) is thrown when an application tries to change a constant property. Exception *IllegalAccessException* inherits from exception *Exception* (Table 12).

TABLE 43.: EXCEPTION *IllegalAccessException*

```
exception IllegalAccessException:
     com::sun::star::uno::Exception
{
};
```

Interface *XIdlMethod* (Table 44) inherits from interface *XIdlMember* (Table 40). Interface *XIdlMember* makes it possible to access the specification of a method dynamically.

TABLE 44.:  INTERFACE *XIdlMethod*

```
interface XIdlMethod:
     com::sun::star::reflection::XIdlMember
{
XIdlClass getReturnType();
```

```
sequence<XIdlClass> getParameterTypes();
sequence<ParamInfo> getParameterInfos();
sequence<com::sun::star::reflection::XIdlClass>
      getExceptionTypes();
com::sun::star::reflection::MethodMode getMode();
any invoke( [in] any obj,  [inout] sequence<any> args )
   raises(
      com::sun::star::lang::IllegalArgumentException,
   com::sun::star::reflection::InvocationTargetException
      );
};
```

Method getReturnType returns an XIdlClass object that represents the formal return type of the method represented by this method object. Method getParameterTypes returns a sequence of XIdlClass objects that represent the formal parameter types, in declaration order, of the method represented by this Method object. Method getParameterTypes returns a sequence of length 0 if the underlying method takes no parameters.

Method getParameterInfos returns a sequence of ParamInfo objects that represent all information about the formal parameter types, in declaration order, of the method represented by this Method object. Method getParameterInfos returns a sequence of length 0 if the underlying method takes no parameters.

Method getExceptionTypes returns a sequence of XIdlClass objects that represent the types of the checked exceptions thrown by the underlying method represented by this Method object. Method getExceptionTypes returns a sequence of length 0 if the method throws no checked exceptions.

Method getMode returns an enumeration value, which denotes whether the method is one-way or two-way. Method invoke invokes the underlying method represented by this method object on the specified object with the specified parameters. Individual parameters are subject to widening conversions as necessary.

Method invocation proceeds in the following order:

If the specified object argument is NULL, the invocation throws an IllegalArgumentException; and

Otherwise, if the specified object argument is not an instance of the class or interface declaring the underlying method, the invocation throws an exception IllegalArgumentException (Table 42).

If the number of actual parameters supplied via args is different from the number of formal parameters required by the underlying method, the invocation throws an Exception IllegalArgumentException. For each actual parameter in the supplied args array, if the parameter value cannot be converted to the corresponding formal parameter type by an identity or widening conversion, the invocation throws exception IllegalArgumentException. When the control transfers to the underlying method and the method stops abruptly by throwing an exception, the exception is placed in an exception InvocationTargetException (Table 48) and thrown in turn to the caller of the method. If the method completes normally, the value it returns is returned to the caller of the method. If the underlying method returns type is void, the invocation returns VOID.

Structure *ParamInfo* (Table 45) describes a formal parameter of a method.

TABLE 45.:   STRUCTURE *ParamInfo*

```
struct ParamInfo

{

/** The name of the parameter.

*/

string aName;


//-------------------------------------------------------

/** One of the values IN, OUT, INOUT from the ParamMode

enumeration.

 */

ParamMode aMode;


//-----------------------------------------------------

/** The type of the parameter.

 */

XIdlClass aType;


};
```

The values in Enumeration *ParamMode* (Table 46) are used to specify if a formal parameter of a method is used for input, output or both. If the value is an IN parameter, data can only transferred from the callee to the caller. If the value is an OUT parameter, data can only transferred from the caller to the callee. If value is an INOUT parameter, data can transferred in both directions.

TABLE 46.:   ENUMERATION *ParamMode*

```
enum ParamMode
{
IN,
OUT,
INOUT
};
```

The values in Enumeration MethodMode (Table 47) are used to specify the calling mode of a method. If the value is an ONEWAY parameter, the method call may be asynchronous. If the value is a TWOWAY parameter, the method call is synchronous.

TABLE 47.:   ENUMERATION *MethodMode*

```
enum MethodMode
{
ONEWAY,
TWOWAY
};
```

Exception *InvocationTargetException* (Table 48) is a checked exception that wraps another exception. Typically such exceptions are thrown by an invoked method or constructor. Exception *InvocationTargetException* inherits from exception *WrappedTargetException* (Table 49).

TABLE 48.:   EXCEPTION *InvocationTargetException*

```
exception InvocationTargetException:
     com::sun::star::lang::WrappedTargetException
{
};
```

Exception *WrappedTargetException* (Table 49) is a checked exception that wraps an exception thrown by the original target. Normally this exception is declared for generic methods. Exception *WrappedTargetException* inherits from exception *Exception*(Table 12).

TABLE  49.: EXCEPTION *WrappedTargetException*

```
exception WrappedTargetException:
      com::sun::star::uno::Exception
{
any TargetException;
};
```

Interface *XIdlArray* (Table 50) provides methods to dynamically access arrays. Interface *XIdlArray* inherits from interface *XInterface* (Table 2).

TABLE 50.:  INTERFACE *XIdlArray*

```
interface XIdlArray: com::sun::star::uno::XInterface
{
```

```
void realloc( [inout] any array,  [in] long length )
  raises(
      com::sun::star::lang::IllegalArgumentException );
long getLen( [in] any array )
  raises(
      com::sun::star::lang::IllegalArgumentException );
any get( [in] any aArray, [in] long nIndex )
  raises(
      com::sun::star::lang::IllegalArgumentException,
      com::sun::star::lang::ArrayIndexOutOfBoundsExcepti
          on );
void set( [inout] any aArray, [in] long nIndex, [in]
      any aNewValue )
  raises(
      com::sun::star::lang::IllegalArgumentException,
   com::sun::star::lang::ArrayIndexOutOfBoundsException
      );
};
```

Method realloc in interface *XIdlArray* changes the size of the array to the new size. If the new length is greater, the additional elements are default constructed, otherwise the elements are destructed. Method realloc throws an exception IllegalArgumentException (Table 42) if the specified object is not an array or if the specified object is null.

Method getLen in interface *XIdlArray* returns the number of elements in the array. Method getLen throws an exception IllegalArgumentException (Table 42) if the specified object is not an array or if the specified object is null.

Method get in interface *XIdlArray* returns the value of the indexed component in the specified array object. Method get throws exception IllegalArgumentException, if the specified object is not an array or if the specified object is null. Method get throws exception ArrayIndexOutOfBoundsException (Table 51), if the specified index argument is negative, or if the specified index argument is greater than or equal to the length of the specified array.

Method set in interface *XIdlArray* sets the value of the indexed component of the specified array object to the specified new value. Method set throws exception IllegalArgumentException, if the specified object is not an array or if the specified object is null. Method set throws exception ArrayIndexOutOfBoundsException (Table 51), if the specified index argument is negative, or if the specified index argument is greater than or equal to the length of the specified array.

Exception *ArrayIndexOutOfBoundsException* (Table 51) is thrown to indicate that an array has been accessed with an illegal index. The index is either negative or greater than or equal to the size of the array. Exception *ArrayIndexOutOfBoundsException* inherits from exception *IndexOutOfBoundsException* (Table 52).

TABLE 51.: EXCEPTION *ArrayIndexOutOfBoundsException*

```
exception ArrayIndexOutOfBoundsException:
    com::sun::star::lang::IndexOutOfBoundsException
{
};
```

Exception *IndexOutOfBoundsException* (Table 52) is thrown to indicate that a container has been accessed with an illegal index. The index is either negative or greater than or equal to the count of the elements. Exception *IndexOutOfBoundsException* inherits from exception *Exception* (Table 12).

TABLE  52.: EXCEPTION *IndexOutOfBoundsException*

```
exception IndexOutOfBoundsException:
    com::sun::star::uno::Exception
{
};
```

As explained above, interface *XFrame* (Table 15) uses interface *XController* (Table 53). With interface *XController*, components viewed in a frame can serve events by supplying dispatches. Interface *XController* inherits from interface *XComponent* (Table 16).

TABLE 53. :INTERFACE *XController*

```
interface XController: com::sun::star::lang::XComponent
{
void attachFrame( [in] XFrame xFrame );
boolean attachModel( [in] XModel xModel );
boolean suspend( [in] boolean bSuspend );
any getViewData();
void restoreViewData( [in] any Data );
XModel getModel();
XFrame getFrame();
};
```

Method attachFrame (Table 53) is called to attach the controller with its managing frame. Method attachModel is called to attach the controller to a new model. Method suspend is called to prepare the controller for closing the view. Method getViewData returns data that can be used to restore the current view status. Method restoreViewData restores the view status using the data gotten from a previous call. Method getModel returns the currently attached model. Method getFrame returns the frame containing this controller.

In Table 54, interface *XModel* represents a component, which is created from an URL and arguments. Interface *XModel* is a representation of a resource in the sense that the interface was created/loaded from the resource. The arguments are passed to the loader to modify its behavior. An example for such an argument is "AsTemplate", which loads the resource as a template for a new document. Models can be controlled by controller components, which are usually views of the model. If there is at least one controller, there is by definition a current controller, and if that controller supports interface XSelectionSupplier, it has a current selection too. Interface *XModel* inherits from interface *XComponent* (Table 16).

TABLE 54. : INTERFACE *XModel*

```
interface XModel: com::sun::star::lang::XComponent
{
boolean attachResource( [in] string aURL,  [in]
        sequence<com::sun::star::beans::PropertyValue>
        aArgs );
string getURL();
sequence<com::sun::star::beans::PropertyValue>
        getArgs();
[oneway] void connectController( [in]
        com::sun::star::frame::XController xController );
[oneway] void disconnectController( [in]
        com::sun::star::frame::XController xController );
[oneway] void lockControllers();
[oneway] void unlockControllers();
boolean hasControllersLocked();
 [const] com::sun::star::frame::XController
        getCurrentController();
void setCurrentController( [in]
        com::sun::star::frame::XController xController )
        raises(
                com::sun::star::container::NoSuchElementExcep
                tion );
[const] com::sun::star::uno::XInterface
        getCurrentSelection();
};
```

Method attachResource (Table 54) informs a model about its resource description. Method getURL returns the URL of the resource, which is represented by this model. Method getArgs returns the arguments with which the model was originally created or stored the last time. Method connectController is called whenever a new controller is created for this model. Interface *XComponent* of the controller must be used to recognize when the controller is deleted. Method disconnectController is called whenever a new controller is created for this model. Again, interface *XComponent* of the controller must be used to recognize when the controller is deleted.
Method lockControllers (Table 54) suspends some notifications to the controllers, which are used for display updates. The calls to this method may be nested and even overlapping, but the calls must be in pairs. While there is at least one lock remaining, some notifications for display updates are not broadcasted.

Method unlockControllers (Table 54) resumes the notifications, which were suspended by call to lockControllers. The calls to this method may be nested and even overlapping, but they must be in pairs. While there is at least one lock remaining, some notifications for display updates are not broadcasted.

Method hasControllersLocked (Table 54) determines if there is at least one lock remaining. While there is at least one lock remaining, some notifications for display updates are not broadcasted to the controllers.

Method getCurrentController (Table 54) returns the controller, which currently controls this model. If the controller, which is active, is a controller of this model, it will be returned. If not, the controller, which was the last active controller of this model, is returned. If no controller of this model ever was active, the controller first registered is returned. If no controller is registered for this model, NULL is returned.

Method setCurrentController (Table 54) sets a registered controller as the current controller. Method setCurrentController throws exception NoSuchElementException (Table 58).

Method getCurrentSelection (Table 54) returns the current selection in the current controller. If there is no current controller, the method returns NULL.

Structure *PropertyValue* (Table 55) specifies a property value. Field Name (Table 55) specifies the name of the property. The name is unique within a sequence of PropertyValues. Field Handle (Table 55) contains an implementation-specific handle for the property. The handle may be -1 if the implementation has no handle.

If available, the handle it can be used for fast lookups. Field Value contains the value of the property or void if no value is available. Field State determines if the value comes from the object itself or from a default, and if the value cannot be determined exactly

## TABLE 55. : STRUCTURE *PropertyValue*

```
struct PropertyValue
{
string Name;
long Handle;
any Value;
com::sun::star::beans::PropertyState State;
};
```

Enumeration *PropertyState* (Table 56) lists the states that a property value can have. The state consists of two aspects: whether a value is available or void; and whether the value is stored in the property set itself or is a default or ambiguous.

Value DIRECT_VALUE (Table 56) of the property is stored in the PropertySet itself. The property value must be available and of the specified type. If field PropertyAttribute in structure *Property* (Table 57) contains PropertyAttribute::MAYBEVOID, then the value may be void.

Value DEFAULT_VALUE (Table 56) of the property is available from a master (e.g. template). Field PropertyAttribute in structure *Property* (Table 57) must contain the flag PropertyAttribute::MAYBEDEFAULT. The property value must be available and of the specified type. If field PropertyAttribute in the structure *Property* contains PropertyAttribute::MAYBEVOID, the value may be void.

Value AMBIGUOUS_VALUE (Table 56) of the property is only a recommendation because there are multiple values for this property (e.g. from a multi selection). Field PropertyAttribute in structure *Property* (Table 57) must contain flag PropertyAttribute::MAYBEAMBIGUOUS. The property value must be available and of the specified type. If field Attribute in structure *Property* contains PropertyAttribute::MAYBEVOID, n the value may be void.

TABLE 56. : Enumeration *PropertyState*

```
enum PropertyState
{
DIRECT_VALUE,
DEFAULT_VALUE,
AMBIGUOUS_VALUE


};
```

Structure *Property* (Table 57) describes a property. There are three types of properties: bound properties, constrained properties and free properties. Field Name specifies the name of the property. The name is unique within an XPropertySet. Field Handle contains an implementation specific handle for the property. The handle may be -1 if the implementation has no handle. Field Type contains an object that identifies the declared type for the property. If the property has multiple types or the type is not known, but not any, void must be returned. Field Attributes may contain zero or more constants of the PropertyAttribute constants group.

TABLE 57.: Structure *Property*

```
struct Property
{
string Name;
long Handle;
TYPE_XIDLCLASS Type;
short Attributes;
};
```

Exception *NoSuchElementException* (Table 58) is thrown by the method to indicate that there are no more elements in the enumeration. Exception *NoSuchElementException* inherits from exception *Exception* (Table 12).

TABLE 58.: EXCEPTION *NoSuchElementException*

```
exception NoSuchElementException:
    com::sun::star::uno::Exception
{
};
```

As explained above, interface *XFrame* (Table 15) uses interface *XFrameActionListener* (Table 59). Interface *XFrameActionListener* has to be provided if an object wants to receive events when several things happen to components within frames of the desktop, e.g., events of instantiation/destruction and activation/deactivation of components can be received.

Interface *XFrameActionListener* inherits from interface *XEventListener* (Table 17). Method frameAction is called whenever any action occurs to a component within a frame.

TABLE 59.:   INTERFACE *XFrameActionListener*

```
interface XFrameActionListener:
    com::sun::star::lang::XEventListener
{
[oneway] void frameAction( [in]
    com::sun::star::frame::FrameActionEvent aEvent );
};
```

Event structure *FrameActionEvent* (Table 60) is broadcast for action, which can happen to components within frames. Event structure *FrameActionEvent* inherits from structure *EventObject* (Table 18).

In Table 60, field Frame contains the frame in which the event occurred. Field Action specifies the concrete event.

TABLE 60.: Structure *FrameActionEvent*

```
struct FrameActionEvent:
     com::sun::star::lang::EventObject
{
com::sun::star::frame::XFrame Frame;
com::sun::star::frame::FrameAction Action;
};
```

Enumeration *FrameAction* (Table 61) specifies the events, which can happen to components in frames. An event COMPONENT_ATTACHED is broadcast whenever a component is attached to a frame. This is almost the same as the instantiation of the component within that frame. The component is attached to the frame immediately before this event is broadcast. An event COMPONENT_DETACHING is broadcast whenever a component is detaching from a frame. This is quite the same as the destruction of the component, which was in that frame. At the moment when the event is broadcast the component is still attached to the frame but in the next moment it is not attached. An event COMPONENT_REATTACHED is broadcast whenever a component is attached to a new model. In this case the component remains the same but operates on a new model component. An event FRAME_ACTIVATED is broadcast whenever a component is activated. Activations are broadcast from the top component, which was not active before, down to the inner most component. An event FRAME_DEACTIVATING broadcast immediately before the component is deactivated. Deactivations are broadcast from the innermost component, which does not stay active up to the outer most component, which does not stay active. An event CONTEXT_CHANGED is broadcast whenever a component changed its internal context (i.e. the selection). If the activation status within a frame changes, this counts as a context change too. An event FRAME_UI_ACTIVATED is broadcast by an active frame when the active frame is getting user interface control (tool control). An event FRAME_UI_DEACTIVATING is broadcast by an active frame when the active frame is losing user interface control (tool control).

TABLE 61.:   ENUMERATION *FrameAction*

```
enum FrameAction
{
COMPONENT_ATTACHED,
COMPONENT_DETACHING,
COMPONENT_REATTACHED,
FRAME_ACTIVATED,
FRAME_DEACTIVATING,
FRAME_UI_ACTIVATED,
FRAME_UI_DEACTIVATING
};
```

As described above, interface *XDispatchProvider* (Table 62 and Fig. 9) is an interface of class BeanFrame (Fig. 6). Interface *XDispatchProvider* provides Dispatch interfaces for certain functions, which are useful at the user interface. Interface *XDispatchProvider* inherits from interface *XInterface* (Table 2), and uses interface *XDispatch* (Table 63) and structures *URL* (Table 64) and *DispatchDescriptor* (Table 67).

TABLE 62.:   INTERFACE *XDispatchProvider*

```
interface XDispatchProvider:
     com::sun::star::uno::XInterface˙
{
com::sun::star::frame::XDispatch queryDispatch( [in]
     com::sun::star::util::URL aURL,
                [in] string aTargetFrameName,
                [in] long nSearchFlags );
sequence<com::sun::star::frame::XDispatch>
```

```
queryDispatches(   [in]
sequence<com::sun::star::frame::DispatchDescriptor
> aDescripts );
};
```

Method queryDispatch (Table 62) searches for an XDispatch for the specified URL within the specified target frame. Method queryDispatches returns multiple dispatch interfaces for the specified descriptors at once. Actually this method is redundant to method DispatchProvider::queryDispatch to avoid multiple remote calls.

Interface *XDispatch* (Table 63) serves state information of objects, which can be connected to controllers (e. g. toolbox controllers). Each state change is to be broadcast to all registered status listeners. The first notification should be performed synchronously, if not, controllers may flicker. State listener must be aware of this synchronous notification. The state includes enabled/disabled and a short descriptive text of the function (e.g. "undo insert character"). The state is to be broadcast whenever this state changes or the controller should reget the value for the URL to which it is connected. Additionally, a context-switch-event is to be broadcast whenever the object may be out of scope to force the state listener to requery the XDispatch. Interface *XDispatch* inherits from interface *XInterface* (Table 2).

TABLE 63.:   INTERFACE *XDispatch*

```
interface XDispatch: com::sun::star::uno::XInterface
{
[oneway] void dispatch( [in] com::sun::star::util::URL
      aURL,   [in]
      sequence<com::sun::star::beans::PropertyValue>
      aArgs );
[oneway] void addStatusListener( [in]
      com::sun::star::frame::XStatusListener xControl,
      [in] com::sun::star::util::URL aURL );
[oneway] void removeStatusListener( [in]
      com::sun::star::frame::XStatusListener xControl,
      [in] com::sun::star::util::URL aURL );
};
```

Method dispatch (Table 63) dispatches (executes) an URL asynchronously. Method dispatch is only allowed to dispatch URLs for which the current user gets the dispatch. Additional arguments "#..." or "?..." are allowed.

The following is an example for a click-handler of a hyperlink in a view.

```
    XFrame xTargetFrame = m_xFrame-
&amp;gt;findFrame(m_aHyperlink-
&amp;gt;getTargetFrameName(), FRAME_SEARCH_STANDARD
);
    URL aURL;
    aURL.Original = m_aHyperlink-&amp;gt;getURL();
    XDispatch m_xFrame-&amp;gt;queryDispatch(
aURL, sequence&amp;lt;PropertyValue&amp;gt;() );
    xDispatch-&amp;gt;dispatch( aURL );
```

Method addStatusListener (Table 63) registers a listener of a controller for a specific URL to this object to receive status events. This method is only allowed to register for URLs for which the current user gets this dispatch. Additional arguments "#..." or "?..." are ignored. Method removeStatusListener unregisters a listener of a controller.

Structure *URL* (Table 64) represents the original and the parsed structure of a Uniform Resource Locator. It is not necessary to set all of the fields; either URL::Complete or (some of) the others are set. Additionally, most of the other fields, like URL::User, URL::Password or URL::Mark, are optional.

In Table 64, field Complete contains the unparsed original URL, for example, http://me:pass@www.stardivision.de:8080/pub/test/foo.txt ?a=b#xyz. Field Main contains the URL without a mark and without arguments, for example. http://me:pass@www.stardivision.de:8080/pub/test/foo.txt . Field Protocol contains the protocol (scheme) of the URL, for example, "http". Field User contains the user-identifier of the URL, for example, "me". Field Password contains the users password of the URL, for example, "pass". Field Server contains the server part of the URL, for example, "www. stardivision.de". Field Port contains the port at the server of the URL, for example, "8080". Field Path contains the path part of the URL without the filename, for example, "/pub/test". Field Name contains the filename part of the URL, for example, "foo.txt". Field Arguments contains the arguments part of the URL, for example, "a=b". Field Mark contains the mark part of the URL, for example "xyz".

TABLE 64.:  STRUCTURE *URL*

```
struct URL
{
string Complete;
string Main;
string Protocol;
string User;
string Password;
string Server;
short Port;
string Path;
string Name;
string Arguments;
string Mark;
};
```

As explained above, interface *XStatusListener* (Table 65) is used by interface *XDispatch* (Table 63 and Figure 9). Interface *XStatusListener* makes it possible to receive events when the state of a feature changes. Interface *XStatusListener* inherits from interface *XEventListener* (Table 17). Method statusChanged is called when the status of the feature changes.

TABLE 65.: INTERFACE *XStatusListener*

```
interface XStatusListener:
     com::sun::star::lang::XEventListener
{

[oneway] void statusChanged( [in]        ·
     com::sun::star::frame::FeatureStateEvent Event );
};
```

Structure *FeatureStateEvent* (Table 66) is broadcast by a controller, whenever the state of the feature changes. Structure *FeatureStateEvent* inherits from structure *EventObject* (Table 18).

In Table 66, field FeatureURL contains the URL of the feature. Field FeatureDescriptor contains a descriptor of the feature for the user interface. Field IsEnabled specifies whether the feature is currently enabled or disabled. Field Requery specifies whether the Dispatch has to be requeried. Field State contains the state of the feature in this dispatch. This can be, for example, simply TRUE for a Boolean feature like underline on/off. Some simple types like string or Boolean are useful here for generic user interface elements, like a checkmark in a menu.

TABLE 66.:   STRUCTURE *FeatureStateEvent*

```
struct FeatureStateEvent:
        com::sun::star::lang::EventObject
{
com::sun::star::util::URL FeatureURL;
string FeatureDescriptor;
boolean IsEnabled;
boolean Requery;
any State;
};
```

Structure *DispatchDescriptor* (Table 67) describes a feature to be retrieved by an URL that has to be loaded into a specified frame. Field FeatureURL specifies the URL of the resource/function. Field FrameName is the name of the target frame. Field SearchFlags is how the target frame is to be searched.

TABLE 67.:   STRUCTURE *DispatchDescriptor*

```
struct DispatchDescriptor
{
com::sun::star::util::URL FeatureURL;
string FrameName;
long SearchFlags;
};
```

In the embodiment of Figure 6, the component loaded is StarWriter, and class StarWriter includes interface *XLoadable* (Table 68 and Figure 9). Interface *XLoadable* provides functionality to implement objects, which may be loaded. Interface *XLoadable* inherits from interface *XInterface* (Table 2).

TABLE 68.: INTERFACE *XLoadable*

```
interface XLoadable: com::sun::star::uno::XInterface
{
[oneway] void load();
[oneway] void unload();
[oneway] void reload();
boolean isLoaded();
[oneway] void addLoadListener( [in]
      com::sun::star::form::XLoadListener aListener );


[oneway] void removeLoadListener( [in]
      com::sun::star::form::XLoadListener aListener );
};
```

Method load (Table 68) starts the data processing. Method unload stops the data processing. Method reload does a smart refresh of the object. The final state is the same as if unload and load were called, but reload is the more efficient way to do the same. If the object isn't loaded, nothing happens. Method isLoaded returns true if the object is in loaded state. Method addLoadListener adds the specified listener to receive events "loaded" and "unloaded." Method removeLoadListener removes the specified listener.

Interface *XLoadListener* (Table 69) is used in the load listener method calls in Table 68. Interface *XLoadListener* receives "loaded" and "unloaded" events posted by a loadable object. The interface is typically implemented by data-bound components, which want to listen to the data source that contains their database form. Interface *XLoadListener* inherits from interface *XEventListener* (Table 17).

TABLE 69.: INTERFACE *XLoadListener*

```
interface XLoadListener:
      com::sun::star::lang::XEventListener
{
[oneway] void loaded( [in]
      com::sun::star::lang::EventObject aEvent );
[oneway] void unloading( [in]
      com::sun::star::lang::EventObject aEvent );
[oneway] void unloaded( [in]
```

```
        com::sun::star::lang::EventObject aEvent );
[oneway] void reloading( [in]
        com::sun::star::lang::EventObject aEvent );
 [oneway] void reloaded( [in]
        com::sun::star::lang::EventObject aEvent );

};
```

Method loaded (Table 69) is invoked when the object has successfully connected to a data source. Method unloading is invoked when the object is about to be unloaded. Components may use this to stop any other event processing related to the event source before the object is unloaded. Method unloaded is invoked after the object has disconnected from a data source. Method reloading is invoked when the object is about to be reloaded. Components may use this to stop any other event processing related to the event source until they get the reloaded event. Method reloaded is invoked when the object has been reloaded.

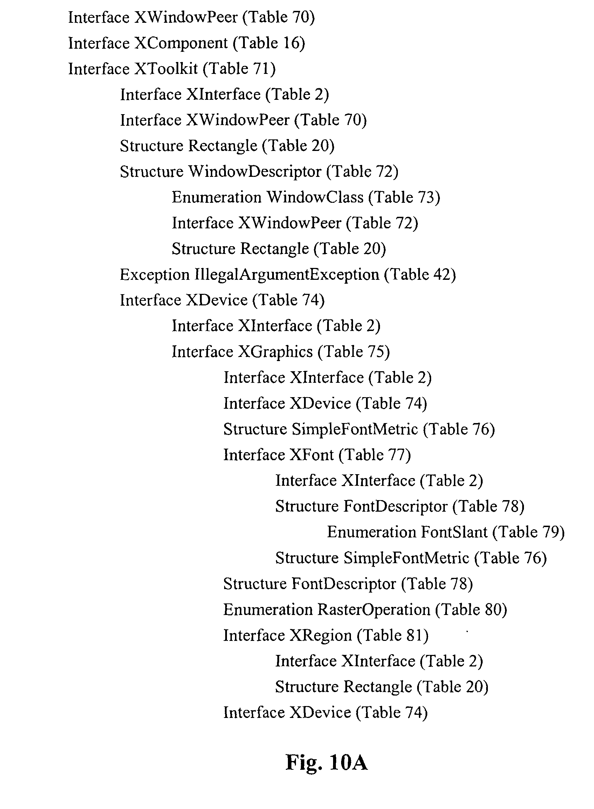

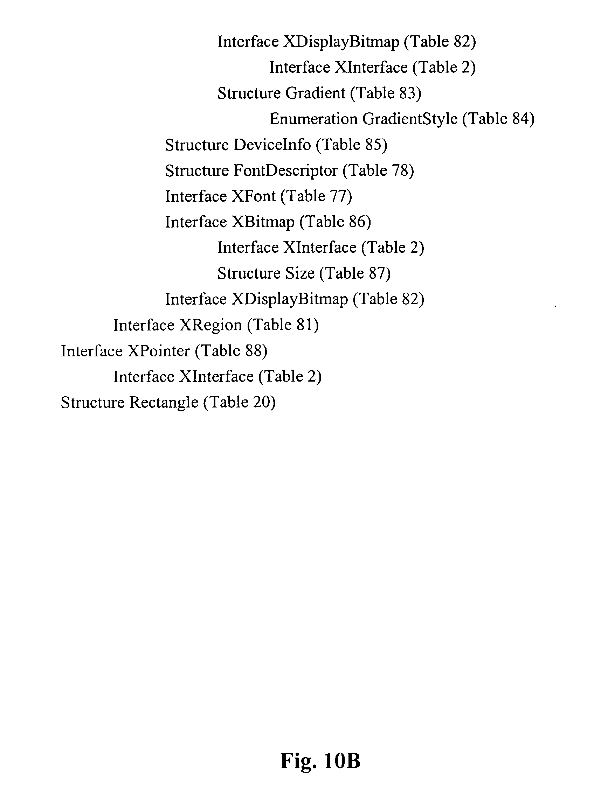

Class BeanWindow (Fig. 6) includes interfaces *XWindowPeer* (Table 70) and *XEventHdl* (Table 4). Interface *XWindowPeer* gives access to the actual window implementation on the device. Interface *XWindowPeer* inherits from interface *XComponent* (Table 16), and uses interfaces *XToolKit* (Table 71) and *XPointer* (Table 88), which are described below. See also Figures 10A and 10B.

TABLE 70.:   INTERFACE *XWindowPeer*

```
interface XWindowPeer: com::sun::star::lang::XComponent
{


XToolkit getToolkit();
[oneway] void setPointer( [in] XPointer Pointer );
[oneway] void setBackground( [in] long Color );
[oneway] void invalidate( [in] short Flags );
[oneway] void invalidateRect( [in] Rectangle Rect, [in]
        short Flags );
};
```

Method getToolkit (Table 70) returns the visual class, which created this object. Method setPointer sets the mouse pointer. Method setBackground sets the background color. Method invalidate invalidates the whole window using an InvalidateStyle. Method invalidateRect invalidates a rectangular area of the window using an InvalidateStyle.

Interface *XToolkit* (Table 71) specifies a factory interface for the windowing toolkit. This is similar to the abstract window toolkit (AWT) in JAVA. Interface *XToolkit* inherits from interface *XInterface* (Table 2).

TABLE 71.:    INTERFACE *XToolkit*

```
interface XToolkit: com::sun::star::uno::XInterface
{
com::sun::star::awt::XWindowPeer getDesktopWindow();
com::sun::star::awt::Rectangle getWorkArea();
com::sun::star::awt::XWindowPeer createWindow( [in]
      com::sun::star::awt::WindowDescriptor Descriptor )
  raises(
      com::sun::star::lang::IllegalArgumentException );
sequence<com::sun::star::awt::XWindowPeer>
      createWindows(  [in]
      sequence<com::sun::star::awt::WindowDescriptor>



      Descriptors )
  raises(
      com::sun::star::lang::IllegalArgumentException );
com::sun::star::awt::XDevice
      createScreenCompatibleDevice( [in] long Width,
                 [in] long Height );
com::sun::star::awt::XRegion createRegion();
};
```

Method getDesktopWindow (Table 71) returns the desktop window. Method getWorkArea returns the complete work area for this toolkit. Method createWindow creates a new window using the given descriptor. Method createWindow throws exception IllegalArgumentException(Table 42). Method createWindows returns a sequence of windows, which are newly created using the given descriptors. Method createWindows throws exception IllegalArgumentException Method createScreenCompatibleDevice creates a virtual device that is compatible with the screen. Method createRegion creates a region.

Structure *WindowDescriptor* (Table 72) describes a window. Field Type specifies the type of window. Field WindowServiceName specifies the name of the component service ("ListBox", "PushButton"). A zero length name means that the vcl creates a blank top, a container, or a simple window. Field Parent specifies the parent of the component. If the Parent == 0 && ParentIndex == -1, the window is on the desktop. Field ParentIndex specifies the index of the parent window, if available. If Parent == 0 and this structure is a member of an array, this is the offset from the beginning of the array to the parent. A value of -1 means desktop.
Field Bounds specifies the position and size of the window. This member is ignored if the window attribute is WA_FULLSIZE. Field WindowAttributes contains some of the WA_* attributes.

TABLE 72.:   STRUCTURE *WindowDescriptor*

```
struct WindowDescriptor
com::sun::star::awt::WindowClass Type;
string WindowServiceName;
com::sun::star::awt::XWindowPeer Parent;
short ParentIndex;
com::sun::star::awt::Rectangle Bounds;
long WindowAttributes;
};
```

Enumeration *WindowClass* (Table 73) specifies the class of a window. Value TOP specifies a top-level window on the desktop. It is also a container. Value MODALTOP is a modal top-level window on the desktop. It is also a container. Value CONTAINER is a container that may contain other components. It is not a top window. Value SIMPLE is the simplest window. It can be a container.

TABLE 73.:   ENUMERATION *WindowClass*

```
enum WindowClass
{
TOP,
MODALTOP,
CONTAINER,
SIMPLE
};
```

Interface *XDevice* (Table 74 and Figure 10A) provides information about a graphical output device and offers a factory for the graphics, which provides write operations on the device. Interface *XDevice* inherits from interface *XInterface* (Table 2).

TABLE 74.:   INTERFACE *XDevice*

```
interface XDevice: com::sun::star::uno::XInterface
{
XGraphics createGraphics();
XDevice createDevice( [in] long nWidth,  [in] long
      nHeight );
com::sun::star::awt::DeviceInfo getInfo();
sequence<FontDescriptor> getFontDescriptors();
com::sun::star::awt::XFont getFont( [in] FontDescriptor
      aDescriptor );
XBitmap createBitmap( [in] long nX,  [in] long nY,
      [in] long nWidth,  [in] long nHeight );
XDisplayBitmap createDisplayBitmap( [in] XBitmap Bitmap
      );
};
```

Method createGraphics (Table 74) creates a new graphics, which output operation direct to this device. Method createDevice creates a new device, which is compatible with this one. If the device does not support the GETBITS device capability, this method returns NULL. Method getInfo returns information about the device. Method getFontDescriptors returns the list of available font descriptors.

Method getFont (Table 74) returns information about a font offered by this device. Parameter aDescriptor specifies the description of a font, and specifies that the unit of measure is pixel for this device.

Method createBitmap (Table 74) creates a bitmap with the current device depth. If the specified area does not lie entirely in the device, the bits outside are not specified. Method createDisplayBitmap creates a device-compatible bitmap. The data of the bitmap is in process memory instead of in the device, so the output operation is fast.

Interface *XGraphics* (Table 75) provides the basic output operation of a device. Interface *XGraphics* inherits from interface *XInterface* (Table 2).

TABLE 75.: INTERFACE *XGraphics*

```
interface XGraphics: com::sun::star::uno::XInterface
{
XDevice getDevice();
SimpleFontMetric getFontMetric();
[oneway] void setFont( [in] XFont xNewFont );
[oneway] void selectFont( [in] FontDescriptor
     aDescription );
[oneway] void setTextColor( [in] long nColor );
[oneway] void setTextFillColor( [in] long nColor );
[oneway] void setLineColor( [in] long nColor );
[oneway] void setFillColor( [in] long nColor );
[oneway] void setRasterOp( [in] RasterOperation ROP );
[oneway] void setClipRegion( [in] XRegion Clipping );
[oneway] void intersectClipRegion( [in] XRegion
     xClipping );
[oneway] void push();
```

EP 1 130 510 A2

```
[oneway] void pop();
[oneway] void copy( [in] XDevice xSource, [in] long
      nSourceX, [in] long nSourceY, [in] long
      nSourceWidth, [in] long nSourceHeight, [in] long
      nDestX, [in] long nDestY, [in] long nDestWidth,
      [in] long nDestHeight );
[oneway] void draw( [in] XDisplayBitmap xBitmapHandle,
      [in] long SourceX, [in] long SourceY, [in] long
      SourceWidth, [in] long SourceHeight, [in] long
      DestX, [in] long DestY, [in] long DestWidth, [in]
      long DestHeight );
[oneway] void drawPixel( [in] long X, [in] long Y );
[oneway] void drawLine( [in] long X1, [in] long Y1,
      [in] long X2, [in] long Y2 );
[oneway] void drawRect( [in] long X, [in] long Y, [in]
      long Width, [in] long Height );
[oneway] void drawRoundedRect( [in] long X, [in] long
      Y, [in] long Width, [in] long Height, [in] long
      nHorzRound, [in] long nVertRound );
[oneway] void drawPolyLine( [in] sequence<long> DataX,
      [in] sequence<long> DataY );
[oneway] void drawPolygon( [in] sequence<long> DataX,
      [in] sequence<long> DataY );
[oneway] void drawPolyPolygon( [in] sequence<
      sequence<long> > DataX, [in] sequence<
      sequence<long> > DataY );
[oneway] void drawEllipse( [in] long X, [in] long Y,
      [in] long Width, [in] long Height );
[oneway] void drawArc( [in] long X, [in] long Y, [in]
      long Width, [in] long Height, [in] long X1, [in]
      long Y1, [in] long X2, [in] long Y2 );
[oneway] void drawPie( [in] long X, [in] long Y, [in]
      long Width, [in] long Height, [in] long X1,
      [in] long Y1, [in] long X2, [in] long Y2 );
[oneway] void drawChord( [in] long nX, [in] long nY,
      [in] long nWidth, [in] long nHeight, [in] long
      nX1, [in] long nY1, [in] long nX2, [in] long nY2
```

```
        );
[oneway] void drawGradient( [in] long nX, [in] long nY,
     [in] long nWidth, [in] long Height, [in] Gradient
     aGradient );
[oneway] void drawText( [in] long X,  [in] long Y,
     [in] string Text );
[oneway] void drawTextArray( [in] long X,  [in] long Y,
 [in] string Text,  [in] sequence<long> Longs );
};
```

Method getDevice (Table 75) returns the device of this graphics. Method getFontMetric returns the font metric of the current font. Method setFont sets the font used by text operations. Method selectFont creates a new font and sets the font. Method setTextColor sets the text color used by text operations. Method setTextFillColor sets the fill color used by text operations. Method setLineColor sets the line color. Method setFillColor sets the fill color. Method setRasterOp sets the raster operation. If the device does not support raster operations, this call is ignored. Method setClipRegion sets the clip region to specified clipping. Method intersectClipRegion builds the intersection with the current region. Method push saves all current settings (Font, TextColor, TextFillColor, LineColor, FillColor, RasterOp, ClipRegion). Method pop restores all previous saved settings. Method copy copies a rectangle of pixels from another device into this one. Method draw draws a part of the specified bitmap to the output device. Method drawPixel sets a single pixel in the output device. Method drawLine draws a line in the output device. Method drawRect draws a rectangle in the output device. Method drawRoundedRect draws a rectangle with rounded corners in the output device. Method drawPolyLine draws multiple lines in the output device at once. Method drawPolygon draws a polygon line in the output device. Method drawPolyPolygon draws multiple polygons in the output device at once. Method drawEllipse draws an ellipse in the output device. Method drawArc draws an arc (part of a circle) in the output device. Method drawPie draws a circular area in the output device. Method drawChord draws a chord of a circular area in the output device. A chord is a segment of a circle. You get two chords from a circle if you intersect the circle with a straight line joining two points on the circle. Method drawGradient draws a color dispersion in the output device. Method drawText draws text in the output device. Method drawTextArray draws texts in the output device using an explicit kerning table.

Structure *SimpleFontMetric* (Table 76) describes the general metrics of a font. Field Ascent specifies the portion of a lower case character that rises above the height of the character "x" of the font. For example, the letters 'b', 'd', 'h', 'k' and 'l' have an ascent unequal to 0. Ascent is measured in pixels, thus the font metric is device dependent. Field Descent specifies the portion of a letter falling below the baseline. For example, the letters 'g', 'p', and 'y' have a descent unequal to 0. Descent is measured in pixels, thus the font metric is device dependent. Field Leading specifies the vertical space between lines of this font, and is also called internal line spacing. The leading is measured in pixels, thus the font metric is device dependent. Field Slant specifies the slant of the characters (italic). The slant is measured in degrees from 0 to 359. Field FirstChar specifies the code of the first printable character in the font.

Field LastChar specifies the code of the last printable character in the font.

TABLE 76.: STRUCTURE *SimpleFontMetric*

```
struct SimpleFontMetric
{
short Ascent;
short Descent;
short Leading;
char FirstChar;
char LastChar;
};
```

Interface *XFont* (Table 77) describes a font on a specific device. All values are in pixels within this device. Interface *XFont* inherits from interface *XInterface* (Table 2).

TABLE 77.: INTERFACE *XFont*

```
interface XFont: com::sun::star::uno::XInterface
{
com::sun::star::awt::FontDescriptor
    getFontDescriptor();
com::sun::star::awt::SimpleFontMetric getFontMetric();
short getCharWidth( [in] char c );
sequence<short> getCharWidths( [in] char nFirst, [in]
    char nLast );
long getStringWidth( [in] string str );
long getStringWidthArray( [in] string str, [out]
    sequence<long> aDXArray );
void getKernPairs( [out] sequence<char> Chars1, [out]
```

```
        sequence<char> Chars2, [out] sequence<short> Kerns
        );
};
```

Method getFontDescriptors (Table 77) returns the description of the font. Method getFontMetric returns additional information about the font. Method getCharWidth returns the width of the specified character measured in pixels for the device. Method getCharWidths returns a sequence of the widths of subsequent characters for this font. Method getStringWidth returns the width of the specified string of characters measured in pixels for the device. Method getStringWidthArray returns the width of the specified string of characters measured in pixels for the device. In this method, parameter aDXArray receives the width of every single character measured in pixels for the device. Method getKernPairs queries the kerning pair table.

Structure *FontDescriptor* (Table 78) describes the characteristics of a font. For example, this structure can be used to select a font. Field Name specifies the exact name of the font ("Arial", "Courier", "Frutiger"). Field Height specifies the height of the font in the measure of the destination. Field Width specifies the width of the font in the measure of the destination. Field StyleName specifies the style name of the font ("Bold", "Fett", "Italic Bold"). Field Family specifies the general style of the font. Use one value out of the constant group FontFamily. Field CharSet specifies the character set, which is supported by the font. Use one value out of the constant group CharSet. Field Pitch specifies the pitch of the font. Use one value out of the constant group FontPitch. Field CharacterWidth specifies the character width. Depending on the specified width, a font that supports this width may be selected. The value is expressed as a percentage.
Field Weight specifies the thickness of the line. Depending on the specified weight, a font that supports this thickness may be selected. The value is expressed as a percentage. Field Slant specifies if there is a character slant (italic). Field Underline uses one value out of the constant group FontUnderline. Field Strikeout uses one value out of the constant group FontStrikeout. Field Orientation specifies the rotation of the font. The unit of measure is degrees; 0 is the baseline. Field Kerning, for requesting, it specifies if there is a kerning table available: for selecting, it specifies if the kerning table is to be used. Field WordLineMode specifies if only words get underlined. A value of TRUE means that only non-space characters get underlined while a value of FALSE means that the spacing also gets underlined. This property is only valid if the property FontDescriptor::Underline is not FontUnderline::NONE. Field Type specifies the technology of the font representation. One or more values out of the constant group FontType can be combined by an arithmetical or-operation.

TABLE 78.:    STRUCTURE *FontDescriptor*

```
struct FontDescriptor
{
string Name;
short Height;
short Width;
string StyleName;
```

```
short Family;
short CharSet;
short Pitch;
float CharacterWidth;
float Weight;
com::sun::star::awt::FontSlant Slant;
short Underline;
short Strikeout;
float Orientation;
boolean Kerning;
boolean WordLineMode;
short Type;
};
```

Enumeration *FontSlant* (Table 79) is used to specify the slant of a font. Value NONE specifies a font without slant. Value OBLIQUE specifies an oblique font (slant not designed into the font). Value ITALIC specifies an italic font (slant designed into the font). Value DONTKNOW specifies a font with an unknown slant. Value REVERSE_OBLIQUE specifies a reverse oblique font (slant not designed into the font). Value REVERSE_ITALIC specifies a reverse italic font (slant designed into the font).

TABLE 79.:   ENUMERATION *FontSlant*

```
enum FontSlant
{
NONE,
OBLIQUE,
ITALIC,
DONTKNOW,
REVERSE_OBLIQUE,


REVERSE_ITALIC
};
```

The values in enumeration *RasterOperation* (Table 80) are used to specify the binary pixel-operation applied when pixels are written to the device. Value OVERPAINT sets all pixels as written in the output operation. Value XOR uses the pixel written as one and the current pixel as the other operator of an exclusive or-operation. Value ZEROBITS causes all bits, which are affected by this operation, to be set to 0. Value ALLBITS causes all bits, which are affected by this operation, to be set to 1. Value INVERT causes all bits, which are affected by this operation, to be inverted.

TABLE 80.: ENUMERATION *RasterOperation*

```
enum RasterOperation
{
OVERPAINT,
XOR,
ZEROBITS,
ALLBITS,
INVERT
};
```

Interface *XRegion* (Table 81 and Figures 10A and 10B) manages multiple rectangles, which make up a region. Interface *XRegion* inherits from interface *XInterface* (Table 2).

TABLE 81.:   INTERFACE *XRegion*

```
interface XRegion: com::sun::star::uno::XInterface
{
Rectangle getBounds();
[oneway] void clear();
[oneway] void move( [in] long nHorzMove, [in] long
     nVertMove );
[oneway] void unionRectangle( [in] Rectangle Rect );
[oneway] void intersectRectangle( [in] Rectangle Region
     );
[oneway] void excludeRectangle( [in] Rectangle Rect );
[oneway] void xOrRectangle( [in] Rectangle Rect );
[oneway] void unionRegion( [in] XRegion Region );
[oneway] void intersectRegion( [in] XRegion Region );
[oneway] void excludeRegion( [in] XRegion Region );
[oneway] void xOrRegion( [in] XRegion Region );
sequence<Rectangle> getRectangles();
};
```

Method getBounds (Table 81) returns the bounding box of the shape. Method clear makes this region an empty region. Method move moves this region by the specified horizontal and vertical delta. Method unionRectangle adds the specified rectangle to this region. Method intersectRectangle intersects the specified rectangle with the current region. Method excludeRectangle removes the area of the specified rectangle from this region. Method xOrRectangle applies an exclusive-or operation with the specified rectangle to this region. Method unionRegion adds the specified region to this region. Method intersectRegion intersects the specified region with the current region. Method exclude-Region removes the area of the specified region from this region. Method xOrRegion applies an exclusive-or operation with the specified region to this region. Method getRectangles returns all rectangles, which are making up this region.
Interface *XDisplayBitmap* (Table 82) specifies an object as a bitmap for which data is formatted for a specific output device. Drawing of this bitmap is only valid on a compatible device. Interface *XDisplayBitmap* inherits from interface *XInterface* (Table 2).

TABLE 82.:   INTERFACE *XDisplayBitmap*

```
interface XDisplayBitmap:
      com::sun::star::uno::XInterface
{
};
```

Structure *Gradient* (Table 83) describes a color dispersion within an area. Field Style specifies the style of the gradient. Field StartColor specifies the color at the start point of the gradient. Field EndColor specifies the color at the end point of the gradient. Field Angle specifies the angle of the gradient in 1/10 degree. Field Border specifies the percent of the total width where just the start color is used. Field XOffset specifies the X-coordinate, where gradient begins. Field YOffset specifies the Y-coordinate, where gradient begins. Field StartIntensity specifies the intensity at the start point of the gradient. Field EndIntensity specifies the intensity at the end point of the gradient. Field StepCount specifies the number of steps of change color.

TABLE 83.:   STRUCTURE *Gradient*   .

```
struct Gradient
{
com::sun::star::awt::GradientStyle Style;
long StartColor;
long EndColor;
short Angle;
short Border;
short XOffset;
short YOffset;
short StartIntensity;
short EndIntensity;
short StepCount;
};
```

Enumeration *GradientStyle* (Table 84) specifies the style of color dispersion. Value LINEAR specifies a linear gradient. Value AXIAL specifies an axial gradient. Value RADIAL specifies a radial gradient. Value ELLIPTICAL specifies an elliptical gradient. Value SQUARE specifies a gradient in the shape of a square. Value RECT specifies a gradient in the shape of a rectangle.

TABLE 84.: ENUMERATION *GradientStyle*

```
enum GradientStyle
{
LINEAR,


AXIAL,
RADIAL,
ELLIPTICAL,
SQUARE,
RECT
};
```

Structure *DeviceInfo* (Table 85) contains information about a device. Field Width contains the width of the device in pixels. Field Height contains the height of the device in pixels. Field LeftInset contains the inset from the left. Field TopInset contains the inset from the top. Field RightInset contains the inset from the right. Field BottomInset contains the inset from the bottom. Field PixelPerMeterX contains the X-axis resolution of the device in pixel/meter. Field PixelPerMeterY contains the Y-axis resolution of the device in pixel/meter. Field BitsPerPixel contains the color-depth of the device. Field Capabilities specifies special operations, which are possible on the device.

TABLE 85.: STRUCTURE *DeviceInfo*

```
struct DeviceInfo
{
long Width;
long Height;
long LeftInset;
long TopInset;
long RightInset;
long BottomInset;
double PixelPerMeterX;
double PixelPerMeterY;
short BitsPerPixel;
```

```
long Capabilities;
};
```

Interface *XBitmap* (Table 86) provides a bitmap in the Microsoft DIB format. Interface *XBitmap* inherits from interface *XInterface* (Table 2). Method getSize returns the size of the bitmap in pixels. Method getDIB returns the device independent bitmap. Method getMaskDIB returns the transparence mask of the device independent bitmap.

TABLE 86.:   INTERFACE *XBitmap*

```
interface XBitmap: com::sun::star::uno::XInterface
{
com::sun::star::awt::Size getSize();
sequence<byte> getDIB();
sequence<byte> getMaskDIB();
};
```

Structure *Size* (Table 87) specifies the two-dimensional size of an area using width and height. Field Width specifies the width. Field Height specifies the height.

TABLE 87.:   STRUCTURE *Size*

```
struct Size
{
long Width;
long Height;
};
```

Interface *XPointer* (Table 88) gives access to the type of mouse pointer. Interface *XPointer* inherits from interface *XInterface* (Table 2). Method setType selects a SystemPointer for this mouse pointer. Method getType returns the currently set SystemPointer of this mouse pointer.

TABLE 88.:   INTERFACE *XPointer*

```
interface XPointer: com::sun::star::uno::XInterface
{
 [oneway] void setType( [in] long nType );
long getType();


};
```

Table 89 is one embodiment of a remote virtual device interface *XRmVirtualDevice* that is included in one embodiment of lightweight component 230.

TABLE 89.:   INTERFACE *XRmVirtualDevice*

```
interface XRmVirtualDevice :
      com::sun::star::uno::XInterface          `
{
[oneway] void  Create( [in] unsigned long nCompDev,
      [in] long nWidth, [in] long nHeight, [in] unsigned
      short nBitCount );
[oneway] void  SetOutputSizePixel( [in] long nWidth,
      [in] long nHeight );
[oneway] void  ResizeOutputSizePixel( [in] long nWidth,
      [in] long nHeight );


};
```

Table 90 is one embodiment of interfaces *XRmBitmap* and *XRmJavaBitmap* that are included in one embodiment of lightweight component 230. These interfaces are used when a runtime environment component on server computer system needs to display a bitmap on user device 102i.

TABLE 90.: INTERFACES *XRmBitmap* and *XRmJavaBitmap*

```
interface XRmBitmap : com::sun::star::uno::XInterface
{
/**
InitiateTransfer: initialize bitmap to empty with
     width, height and depth the next parameters
     determine the format of the scanlines transported
     by subsequent Transfer calls: palette for palette
     bitmaps, the palette entries are in the order
     blue(or index), green, red, bool.  the bool tells
     whether the first byte is an index or not.
     (implementation detail: this is a vcl BitmapColor)
     format and scanlinesize determine how to interpret
     the scanlines transported in each Transfer call.
     compressiontype marks the compression algorithm
     used on the byte sequences in Transfer call with 0
     meaning uncompressed.  InitiateTransfer with width
     and height set to 0 is legal, the bitmap data
     should be purged then.
 */
[oneway] void       InitiateTransfer( [in] long width,
     [in] long height, [in] long depth, [in] sequence<
     byte > palette, [in] long format, [in] long
     scanlinesize, [in] long compressiontype );
/**
 * Transfer: transports one or more scanlines of the
```

```
        bitmap initialized in InitiateTransfer.
     */
    [oneway] void  Transfer( [in] ByteSequence aData );
    unsigned long  QueryBitmapPtr();
    [oneway] void  Draw( [in] long nDestX, [in] long
         nDestY, [in] long nDestWidth, [in] long
         nDestHeight, [in] long nSrcX, [in] long nSrcY,
         [in] long nSrcWidth, [in] long nSrcHeight, [in]
         XRmOutputDevice xOutputDevice );
    [oneway] void  DrawEx( [in] long nDestX, [in] long
         nDestY, [in] long nDestWidth, [in] long
         nDestHeight, [in] long nSrcX, [in] long nSrcY,
         [in] long nSrcWidth, [in] long nSrcHeight, [in]
         XRmBitmap xBitmap, [in] XRmBitmap xBitmapMask,
         [in] XRmOutputDevice xOutputDevice, [in] boolean
         bAlpha );
    [oneway] void  DrawMask( [in] long nDestX, [in] long
         nDestY, [in] long nDestWidth, [in] long
         nDestHeight, [in] long nSrcX, [in] long nSrcY,
         [in] long nSrcWidth, [in] long nSrcHeight, [in]
         XRmBitmap xBitmap, [in] unsigned long nColor, [in]
         XRmOutputDevice xOutputDevice );
    [oneway] void  CreateBitmap( [in] long nX, [in] long
         nY, [in] long nWidth, [in] long nHeight, [in]
         XRmOutputDevice xOutputDevice );
    void GetBitmap( [out] ByteSequence rData );
    };


    interface XRmJavaBitmap : XRmBitmap
    {
    [oneway] void  SetImageData( [in] long nBitCount, [in]
         long nWidth,[in] long nHeight,[in] ByteSequence
         aColorMap, [in] ByteSequence aIndexData, [in]
         LongSequence aRGBData);
    void GetImageData( [out] long rBitCount, [out] long
         rWidth,[out] long rHeight, [out] ByteSequence
         rColorMap, [out] ByteSequence rBitmapData, [out]
```

```
        LongSequence rRGBData, [out] long rAlphaMask,

        [out] long rRedMask, [out] long rGreenMask, [out]

        long rBlueMask);

};
```

Table 91 is one embodiment of interfaces *XRmPrintObserver, XRmPrinterEnvironment, XRmPrinter,* and *XRmPrintSpooler* that are included in one embodiment of lightweight component 230. These interfaces are used when a runtime environment component on server computer system needs to print to a printer coupled to user device 102i.

TABLE 91.:   INTERFACES *XRmPrintObserver,*

*XRmPrinterEnvironment, XRmPrinter,* and *XRmPrintSpooler*

```
{


// [in] Eingabe-Parameter. Der "Server" auf dem das

      Object liegt ist der Remote-Client.
// Also "Server" eigentlich "Display"
// [oneway] => Kein warten auf Antwort
typedef sequence< byte, 1 > RmJobSetup;
typedef sequence< byte, 1 > RmQueueInfo;
typedef sequence< byte, 1 > RmPrinterPage;
typedef sequence< string, 1 > StringSequence;


interface XRmPrinterObserver :
      com::sun::star::uno::XInterface
{
[oneway] void  PrinterSettingsChanged();
};
interface XRmPrinterEnvironment :
      com::sun::star::uno::XInterface
```

```
{
unsigned short GetQueueCount();
void GetQueueInfo( [in] unsigned short nQueue, [out]
    RmQueueInfo rRmQueueInfo );
boolean   GetPrinterInfo( [in] string sPrinterName,
    [out] RmQueueInfo rRmQueueInfo );
void GetPrinterNames( [out] StringSequence
    rPrinterNames );
stringGetDefaultPrinterName();

void SetObserver( [in] XRmPrinterObserver rObserver );
};
interface XRmPrinter : com::sun::star::uno::XInterface
{
void Create( [in] RmQueueInfo aRmQueueInfo, [out]
    RmJobSetup rRmJobSetup );
boolean   SetJobSetup( [inout] RmJobSetup rRmJobSetup );
boolean   SetOrientation( [in] unsigned short
    nOrientation, [inout] RmJobSetup rRmJobSetup );
boolean   SetPaperBin( [in] unsigned short nPaperBin,
    [inout] RmJobSetup rRmJobSetup );
boolean   SetPaper( [in] unsigned short nPaper, [inout]
    RmJobSetup rRmJobSetup );
boolean   SetPaperSizeUser( [in] long nWidth, [in] long
    nHeight, [inout] RmJobSetup rRmJobSetup );
void  GetPageInfo( [out] long rOutWidth, [out] long
    rOutHeight, [out] long rPageOffX, [out] long
    rPageOffY, [out] long rPageWidth, [out] long
    rPageHeight );
unsigned short GetPaperBinCount();
string    GetPaperBinName( [in] unsigned short
    nPaperBin );
/** query the printer for its capabilities (mainly to
    decide whether it is possible to bring up a
    printer setup dialogue)
*/
unsigned long  GetCapabilities( [in] unsigned short
```

```
            nType );
/** brings up a UI to setup the current jobsetup.
      Returns the modified (and still current ) jobsetup
      if successful.  If not successful (e.g. user
      cancel) the return is empty.  Mote: return is
      delivered as a UserEvent on the EventListener of
      xParent
 */
[oneway] void UserSetup( [in] XRmFrameWindow xParent,
      [in] unsigned long EventID );
};
interface XRmSpoolLauncher :
      com::sun::star::uno::XInterface
{
boolean   LaunchSpooler( [in] string sUserName, [in]
      string sPassword );
};
interface XRmPrintSpooler :
      com::sun::star::uno::XInterface
{
void Create( [in] RmJobSetup jobSetup );
boolean   StartJob( [in] unsigned short nCopies, [in]
      boolean  bCollate, [in] string aJobName, [in]
      string  sFileName , [in] boolean bPrintFile);
[oneway] void  SpoolPage( [in] RmPrinterPage page );
void AbortJob();
void EndJob();
};


};
```

Table 92 is one embodiment of interface *XRmFileStream*. Table 93 is one embodiment of interface *XRmFSys*. Both of these interfaces are included in one embodiment of lightweight component 230. These interfaces are used when a runtime environment component reads or writes data on a storage medium of user device 102i, or needs to obtain information about data stored on a storage medium of user device 102i. In this embodiment, object BeanService 532 receives, as described above, a handle to object ClientFactory 515. The handle to object ClientFactory 515 to instantiate an object on the user device to access a particular capability on the user device, e.g., the file system, printing, sound, etc.

TABLE 92.:   INTERFACE *XRmFileStream*

```
{
typedef sequence< byte, 1 > RFSByteSequence;
interface XRmFileStream :
     com::sun::star::uno::XInterface
{ // interface


// param aFilename: file to open
// param nOpenMode: file mode read
// param bIsOpen: file opend successfully
// param bIsWritable: file opend writable
// param nStreamMode: stream mode
// param nError: Error Code
// returns fileHandle: handle
unsigned long  open(     [in] string  aFilename,
     [in]unsigned short nOpenMode,  [out] boolean
     bIsOpen,  [out] boolean bIsWritable,  [out]
     unsigned short nStreamMode, [out]unsigned long
     nError);
// param handle: filehandle
void close();


// param aData: data read from stream
// param nSize: number of bytes to read
// param nError: errorcode
// returns: number of bytes that were successfully read
```

```
unsigned long  getData([out] RFSByteSequence aData,
    [in] unsigned long nSize,  [out] unsigned long
    nError);
// param nData: data to write to stream
// param nSize:    number of bytes to write
// param nError: errorcode
// returns: number of bytes that were successfully
//  written
unsigned long putData([in]  RFSByteSequence aData, [in]
    unsigned long nSize, [out]  unsigned long nError);
// param nPos: desired position
// param nError: errorcode
// returns:    new position
unsigned long seekPos([in] unsigned long nPos, [out]
    unsigned long nError);
// param nSize: new filesize
// param nError: errorcode
Void setSize([in] unsigned long nSize, [out] unsigned
    long nError);
// param nByteOffset: where to start locking
// param nBytes: how many bytes to lock
// param nError: errorcode
// returns:    success
boolean  lockRange([in] unsigned long nByteOffset, [in]
    unsigned long nBytes, [out] unsigned long nError);
// param nByteOffset: where to start unlocking
// param nBytes: how many bytes to unlock
// param nError: errorcode
// returns:    success
boolean  unlockRange([in] unsigned long nByteOffset,
    [in] unsigned long nBytes, [out] unsigned
    longnError);
};};
```

TABLE 93.:   INTERFACE *XRmFSys*

```
{

struct FileStatMembers
{
unsigned long  nError;
unsigned long  nKindFlags;
unsigned long  nSize;
string         aCreator;
string         aType;
unsigned long  aDateCreated;
unsigned long  aTimeCreated;
unsigned long  aDateModified;
unsigned long  aTimeModified;
unsigned long  aDateAccessed;
unsigned long  aTimeAccessed;
};


typedef sequence< string, 1 >  DirEntrySequence;
typedef sequence< FileStatMembers, 1 >
     FileStatSequence;
typedef sequence< unsigned long, 1 > FSysSortSequence;


interface XRmFSys : com::sun::star::uno::XInterface
{ // interface
boolean isCaseSensitive  ( [in] string aDirEntry);
string tempName ([in] string aDirEntry, [in] unsigned
     long eKind);
boolean toAbs ( [in] string aDirEntry, [out] string
     aResult);
boolean toRel ( [in] string aDirEntry, [out] string
     aResult);
boolean toRelRel ( [in] string aDirEntry, [in] string
     aRelative, [out] string aResult);
```

```
boolean  makeShortName ( [inout] string aDirEntry, [in]
     string aLongName, [in] unsigned long nCreateKind,
     [in] boolean bUseTilde, [in] unsigned long
     nStyle);
unsigned short scan ( [in] string aDirEntry, [out]
     DirEntrySequence aDirEntryList, [out]
     FileStatSequence aFileStatList, [in]
     FSysSortSequence aSortLst, [in] string aNameMask,
     [in] unsigned short nAttrMask, [in] boolean
     bFillFileStatList);
boolean update ( [out] FileStatMembers aFileStat, [in]
     string aDirEntry, [in] boolean
     bAccessRemovableDevice);
unsigned long queryDiskSpace ( [in] string aPath, [out]
     unsigned long nFreeBytes, [out] unsigned long
     nTotalBytes);
string getDevice ( [in] string aDirEntry);
string getVolume ( [in] string aDirEntry);
unsigned long getPathStyle ( [in] string aDevice);
boolean hasReadOnlyFlag();
boolean getReadOnlyFlag ( [in] string aDirEntry);
boolean exists ( [in] string aDir, [in] unsigned long
     nAccess);
boolean first ( [inout] string aDir);
boolean find ( [in] string aDirEntry, [in] string
     aPfad, [in] char cDelim, [out] string aResult);
boolean setCWD ( [in] string aDir, [in] boolean
     bSloppy);
boolean makeDir ( [in] string aDir, [in] boolean
     bSloppy);
long setReadOnlyFlag ( [in] string aDirEntry,  [in]
     boolean bRO);
void setDateTime ( [in] string aFileName, [in] unsigned
     long nDate, [in] unsigned long nTime);
unsigned long moveTo ( [in] string aFromDir, [in]
     string aToDir);
unsigned long kill ( [in] string aFromDir, [in]unsigned
```

```
        long nActions);
};
        };
```

Table 94 is one embodiment of interfaces *XSoundCallBack and XRMSound* that are included in one embodiment of lightweight component 230. These interfaces are used when a runtime environment component needs to play sounds on user device 102i.

TABLE 94.:   INTERFACES *XSoundCallBack and XRMSound*

```
{
// ----------------- - SoundSequence - -----------------
     -
typedef sequence< byte, 1 > SoundSequence;
// ----------------- - SoundCallback - -----------------
     -
interface XSoundCallback :
     com::sun::star::uno::XInterface
{
[oneway] void        Notify( [in] unsigned short
     nNotification, [in] unsigned long nError );
};
// ----------- - XRmSound - ------------
interface XRmSound : com::sun::star::uno::XInterface
{
[oneway] void Create( [in] XSoundCallback
     xSoundCallback );
unsigned long Transfer( [in] unsigned long nExtraData,
     [in] SoundSequence aData, [in] string aFileName );
[oneway] void SetStartTime( [in] unsigned long
     nStartTime );
[oneway] void SetPlayTime( [in] unsigned long nPlayTime
     );
```

```
[oneway] void SetLoopMode( [in] boolean bLoop );
[oneway] void ClearError();
[oneway] void Play();
[oneway] void Stop();
[oneway] void Pause();
};


};
```

Table 95 is one embodiment of interface *XRmStatus* that is included in one embodiment of lightweight component 230. This interfaces is used when a runtime environment component needs the status of user device 102i.

TABLE 95.:  INTERFACES *XRmStatus*

```
interface XRmStatus : com::sun::star::uno::XInterface
{
unsigned long GetRemoteVersion();
unsigned long GetSystemType();
unsigned long GetSystemCharSet();
void ShowError( [in] string aMsg, [in] unsigned short
        nCode );
void ShowWarning( [in] string aMsg, [in] unsigned short
        nCode );
void ShowInfo( [in] string aMsg, [in] unsigned short
        nCode );
void Quit();
};
};
```

Those skilled in the art will readily understand that the operations and actions described herein represent actions performed by a CPU of a computer in accordance with computer instructions provided by a computer program. Therefore, lightweight component 230 may be implemented by a computer program causing the CPU of the computer to carry out instructions representing the individual operations or actions as described hereinbefore. The computer instructions can also be stored on a computer-readable medium, or they can be embodied in any computer-readable medium such as any communications link, like a transmission link to a LAN, a link to the internet, or the like.

Thus, lightweight component 230 can be implemented by a computer program comprising computer program code or application code. This application code or computer program code may be embodied in any form of a computer program product. A computer program product comprises a medium configured to store or transport this computer-readable code, or in which this computer-readable code may be embedded. Some examples of computer program products are CD-ROM discs, ROM cards, floppy discs, magnetic tapes, computer hard drives, servers on a network, and carrier waves. The computer program product may also comprise signals, which do not use carrier waves, such as digital signals transmitted over a network (including the Internet) without the use of a carrier wave.

The storage medium including the applications/services executed on a server may belong to server computer system 100 itself. However, the storage medium also may be removed from server computer system 100. The only requirement is that the applications/services are accessible by server computer system 100 so that the application/service corresponding to lightweight component 230 can be executed by server 100.

Herein, a computer memory refers to a volatile memory, a non-volatile memory, or a combination of the two in any one of these devices. Similarly, a computer input unit and a display unit refer to the features providing the required functionality to input the information described herein, and to display the information described herein, respectively, in any one of the aforementioned or equivalent devices.

While the present invention has been explained in connection with certain embodiments thereof, other embodiments will be apparent to those skilled in the art from consideration of the specification and practice of the embodiment of the present invention disclosed therein. It is intended that the specification and examples be considered as exemplary only, without limiting the spirit and scope of the invention.

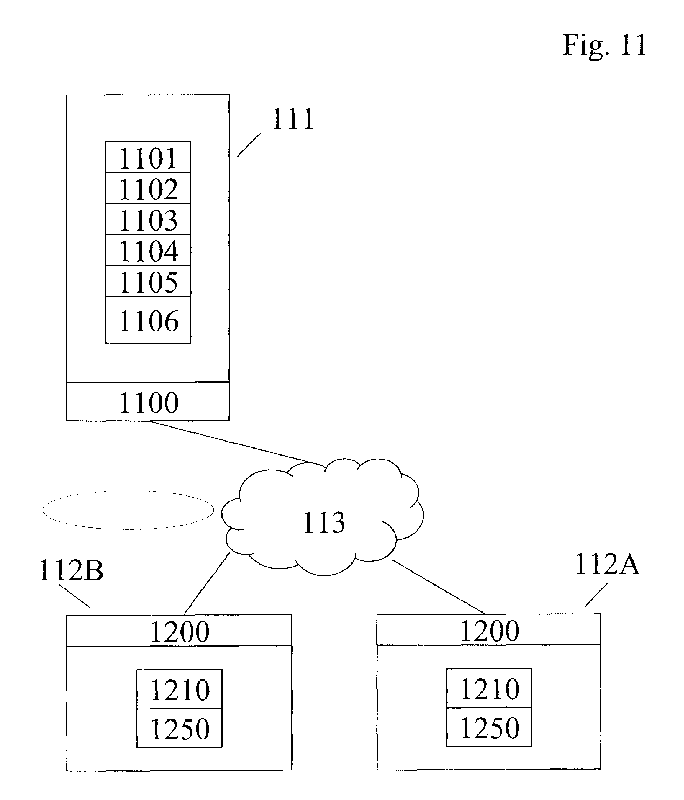

In the following, further embodiments of the invention will be described with respect to figs. 11 - 22.

The embodiments may be implemented in a software system for providing the functionality (i.e. the services) of runtime environment components from a server computer system via a network to one or several client computer systems.

The software system consists of two parts, one of them being executed on a client, the other residing and being executed on the server. The part on the server platform makes up the runtime environment comprising a plurality of runtime environment components which are able to provide services. Furthermore, the part on the server provides the necessary communication tools in order to communicate with the client. The other part, being executed on the client, performs mainly the communication between the client requesting a runtime environment component service and the part being executed on the server which renders the runtime environment component service requested. The server's part of the software system is by far larger in size than the client's part thereof. This latter part is referred to as the 'lightweight component'. A typical size of the software system's part on the server may be 50 to 100 Megabyte (e.g.: an office software package), whereas the lightweight component on the client may have a typical size of 400 Kilobyte, and may utilize only little system resources (CPU power, memory).

The small size of the lightweight component makes it attractive to download it within very short time from the server to a client when the corresponding runtime environment component service is actually needed. Then, via the lightweight component, the client has access to all the services presented by the runtime environment components hosted on the server.

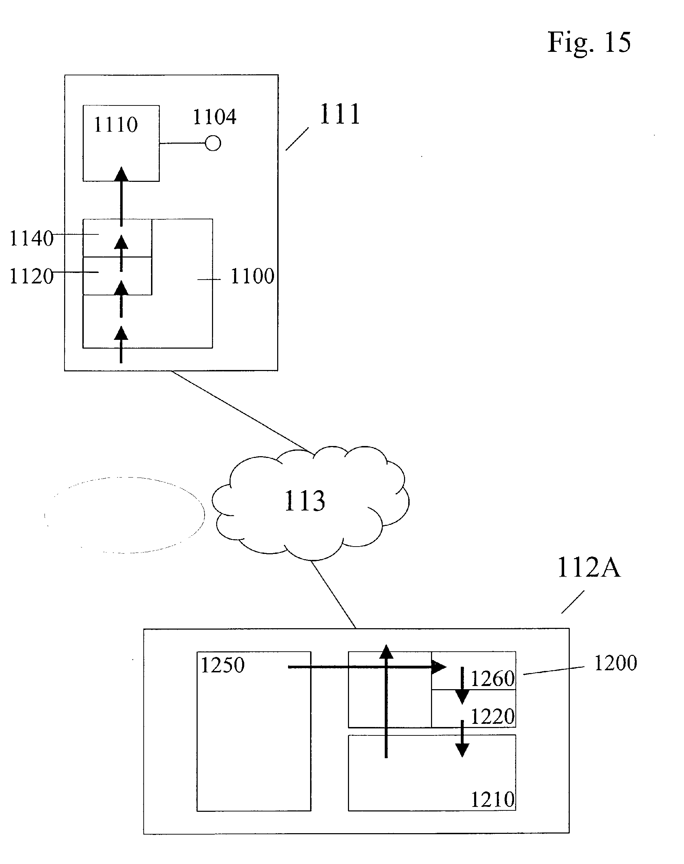

The lightweight component provides an application programming interface (API) for any application program the implementation of which on the client is allowed by an implementation framework on the server. Two types of lightweight components are explained in the following, one being a standard component (referring to Figures 11 to 14), the other being a component rendering visual functionality (referring in particular to Figures 15 to 19) .

Computer Software programs and parts thereof, which are called during execution of other computer software programs or parts thereof, are referred to as runtime environment components. The functionality provided by these runtime environment components to calling software programs or parts thereof are referred to as runtime environment component services. In many cases, runtime environment components have a very large size. For example, office suites comprising drawing programs and wordprocessors as well as other tools may have sizes of 50 to 100 Megabyte which renders a distribution over the Internet difficult. The runtime environment components may be implemented in any suitable form. They may consist of compiled software program code to be executed or of script code in any programming language to be interpreted before execution by a compiler. Runtime environment components are typically stored and administrated on a server.

The runtime environment component services, that means the functionalities provided by runtime environment components, which are, for example, stored on a server, are made available for use in software programs to be executed on, for example, clients without integrated them into these software programs and without distributing them together with these software programs to the place of execution, for example, the clients.

Further, functionality of the runtime environment components should is made available for all kinds of clients whether they are powerful enough for storing or executing the runtime environment component or not. Further, the user of a client is not charged with the problem whether a specific runtime environment component is available on his client or not.

Reference is made to Fig. 11, which illustrates the communication between the server 111 and an arbitrary number of clients 112A, 112B which are connected via communication network 113. The server 111 presents the runtime environment component services to the clients 112A, 112B. Server 111 hosts components 1101, 1102, 1103, 1104, 1105, 1106 of the runtime environment as well as a component 1100 for communication with the clients 112A, 112B via a network 113. The network 113 is here assumed to be the Internet, although any other network may be used as well. Each client 112A, 112B is adapted to execute (at least) one software program 1250.

On each of the clients 112A, 112B a lightweight component 1210 is implemented, which provides services of the runtime environment components 1101, 1102, 1103, 1104, 1105, 1106 hosted on server 111 to a software program 1250 running on the clients 112A, 112B. The communication with server 111 is performed by the communication component 1200 via the network 113. It is to be noted that the lightweight component 1210 may initially not be available on the clients 112A, 112B. In this case, the lightweight component 1210 may be downloaded on the clients 112A, 112B, for example, from the server 111 upon the first request for runtime environment component services which are accessible by means of the lightweight component 1210.

It is assumed that on the clients 112A, 112B a software program 1250 (e.g.: an Internet browser) is executed. Whenever the software program 1250 calls for a runtime environment component, for example an API 1101 for providing a mathematical function, the lightweight component 1210 receives this call. The lightweight component 1210 then transforms this call into a request and transmits it via the communication component 1200, the network 113 and the communication component 1100 to the server 111, where the API component 1101 called for is residing.

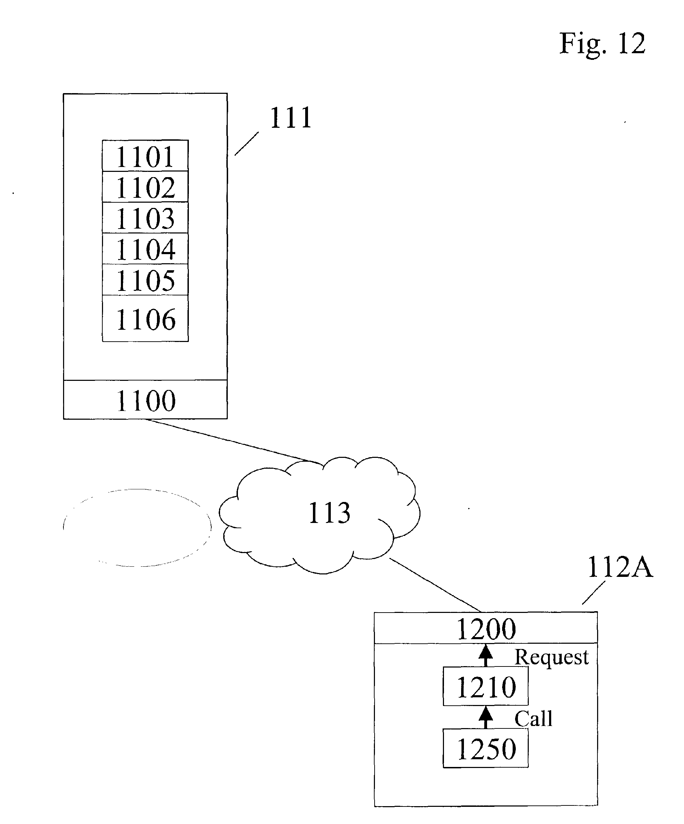

Fig. 12 to 14 now illustrate the processing for presenting / providing the runtime environment component services in more detail.

Referring to Fig. 12, the lightweight component 1210 receives a call for an API component 1101 from the software program 1250 running on the client 112A. With the call, data (e.g. arguments) necessary for performing the requested runtime environment component service of API component 1101 is received. The lightweight component 1210 transforms the received call into a request to be transmitted over the network 113 to the server 111 which actually hosts the runtime environment, including the now requested API component 1101.

The transmission of the request over the network 113 is performed according to a predetermined transmission protocol. The transmitted request contains the data (e.g. arguments) from the calling software program 1250 for being processed by the API component 1101. If the network 113 is publicly accessible, the transmission may be encrypted according to known technologies. Further, digital signatures can be used to provide certification of the request mechanism being established on the client for this runtime environment component services system.

The request is received by the server 111 on which the appropriate communication component 1100 is executed. The communication component 1100 transforms and decrypts (if necessary) the transmitted request, performs digital signature processing, and accesses the requested API component 1101 implementing the desired mathematical function. This API component 1101 is executed on the server 111, whereby the data (e.g. arguments) received with the request are processed. The result thereof is encrypted (if necessary) by the communication component 1100 and transmitted from the server 111 back to the client 112A.

The lightweight component 1210 on the client receives and re-transforms the result (and decrypts it, if necessary) and provides the result to the software program 1250 having called for the service of the API component 1101.

Thus, the lightweight component 1210 on the client 112A delegates calls to the API component 1101, which may be part of an implementation framework on the server 111. The lightweight component 1210 operates hidden to the calling software program of the client 112A. The called runtime environment component 1101 is executed on the server 111. However, the calling software program 1250 on the client 112A does not notice whether the execution of the runtime environment component 1101 is local, i.e. on the client 112A, or remote, i.e. on the server 111. The calling software program 1250 does not need to be modified for the use with the lightweight component 1210, since, the call for a runtime environment component is 'intercepted' and transformed into a suitable request to the server 111 by the lightweight component 1210, according to the invention.

On the other hand, local services available on the client 112A, including devices like printers and local storage, can also be utilized by the runtime environment components on the server 111, in a transparent manner. Transformation of the call of the software program 1250 to the lightweight component 1210 and re-transformation of the result received from the server 111 are performed "on the fly".

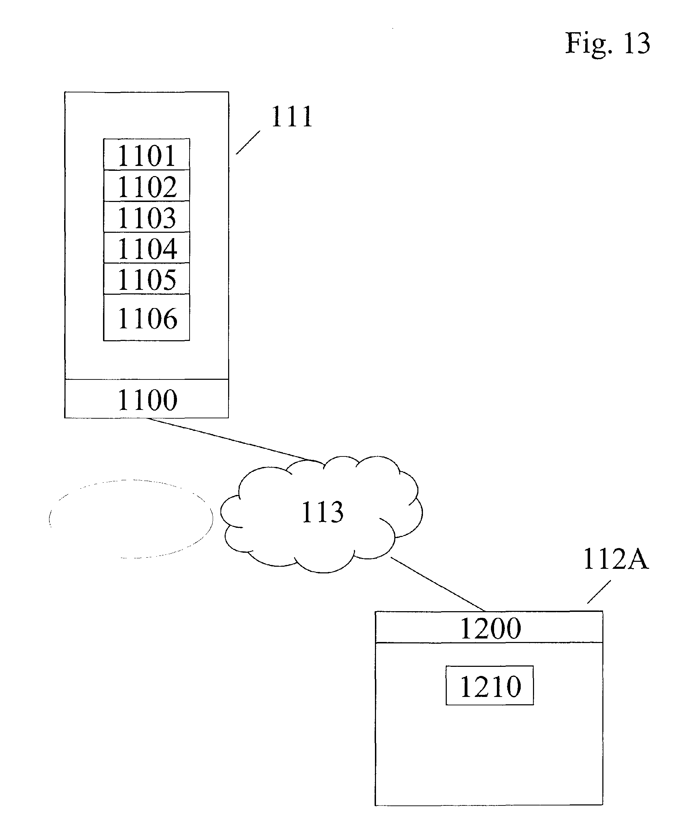

Fig. 13 illustrates the implementation of the lightweight component 1210. As mentioned above, the component 1210, which is necessary for transforming the call can be kept relatively small. It can have a small installation size and low usage of resources compared to the runtime environment components on the server 111.

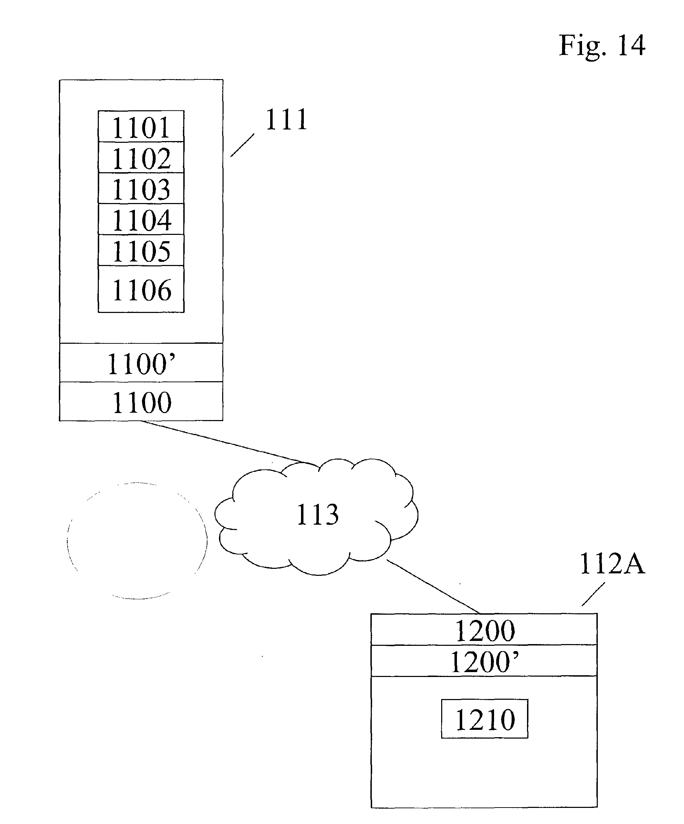

Fig. 14 exemplary illustrates the transparent access of a runtime environment component via an object component model. The object component model handles calls by marshaling requests for runtime environment component services through stub objects 1200' on the client 112A and transmitting it over the network 113 to the server 111. There, the requests are unmarshaled through proxy objects 1100'.

The stub objects 1200' and the proxy objects 1100' are generated dynamically, for example, by the communication component 1200 and by the communication component 1100, respectively. Therefore, a caller does not have to implement the stub objects 1200' and the proxy objects 1100'.

Marshalling of a request is, in the present context, understood as the process of embedding a request for a runtime environment component service in a bit stream for transmission over a network. The unmarshalling is the inverse process of the marshalling.

The transmission concept through stub and proxy objects is described in more detail in the Annex.

The stub / proxy object component model used here implies that a lightweight component is able to access any arbitrary runtime environment component 1101, 1102, 1103, 1104, 1105, 1106 available on the server 111, as if it resided locally on the client 112A.

Referring to Figures 15 to 17, a further embodiment of a lightweight component 1210 is explained. The communication between the server 111 and the client 112A is performed via the network 113 by the respective communication components 1100 on the server 111, and 1200 on the client 112A. The same encryption / decryption mechanisms as indicated above may be applied. In addition to the basic generic lightweight component 1210 as described in connection with Figures 11 to 14, the lightweight component 1210 may include the ability to perform graphic interaction and to manage user interaction. In the following, such a component is referred to as a visual lightweight component. Such a graphic interaction may comprise drawing visual contents on the client 112A, for example, on a screen of a client laptop. Again, as described above, the main part of the processing is burdened on the runtime environment component residing and running on the server 111.

The protocol which may be used for transmitting graphical requests between the client 112A and the server 111 is the Remote Visualization Process protocol (RVP). RVP is a high level definition of a graphic device defined as a set of interfaces. RVP is based completely on a component infrastructure. This gives RVP the ability to map functionality which a client system is unable to support, to a service component on the server side emulating this functionality.

The graphical environment may communicate with the lightweight component 1210 through the Java Abstract Window Toolkit layer (AWT). AWT stands for the definition of the graphic and user interface layer for the Java language. It is defined as a set of Java classes and interfaces which are mapped to the concrete implementation on different platforms. AWT is part of the standard Java environment.

The service component on the server side uses a VCL implementation as drawing engine. VCL (Visual Class Library) is a C++ class library . It provides similar to the AWT a set of classes and interfaces to build graphical applications on different platforms. For every platform there is a concrete implementation of VCL. For the lightweight visual components, VCL provides a special implementation, which transmits all graphical requests for drawing over the network to a client side, where these requests are intercepted and mapped to a platform dependent graphic layer, which is here AWT.

Again, the implementation framework on the server handles drawing and user interaction transparently to the component.

Fig. 15 illustrates RVP event processing. The visual lightweight component 1210 is embedded in a graphical environment, the graphical environment comprising a display software program 1250 with a graphical user interface (GUI). The graphical user interface is referred to as a panel. An example of an implementation is a Java bean which is embedded in an HTML page and rendered by a browser. This Java bean represents a view (in a window) of an office application component (e.g. StarOffice Writer) or another visual office component.

An event from the graphical environment is passed to the AWT 1260, and then interpreted by the RVP protocol layer, which performs communication between the client visual lightweight component 1210 and the remote office runtime environment component implementation 1110 on the server platform 111. From RVP 1220 the event is marshaled by communication component 1200 and transmitted to the server 111. There, it is unmarshaled and passed to the RVP 1120 by communication component 1100, and dispatched by the VCL layer 1140.

The runtime environment component 1110 receives the event. After the event is dispatched, the component 1110 is able to react to the event.

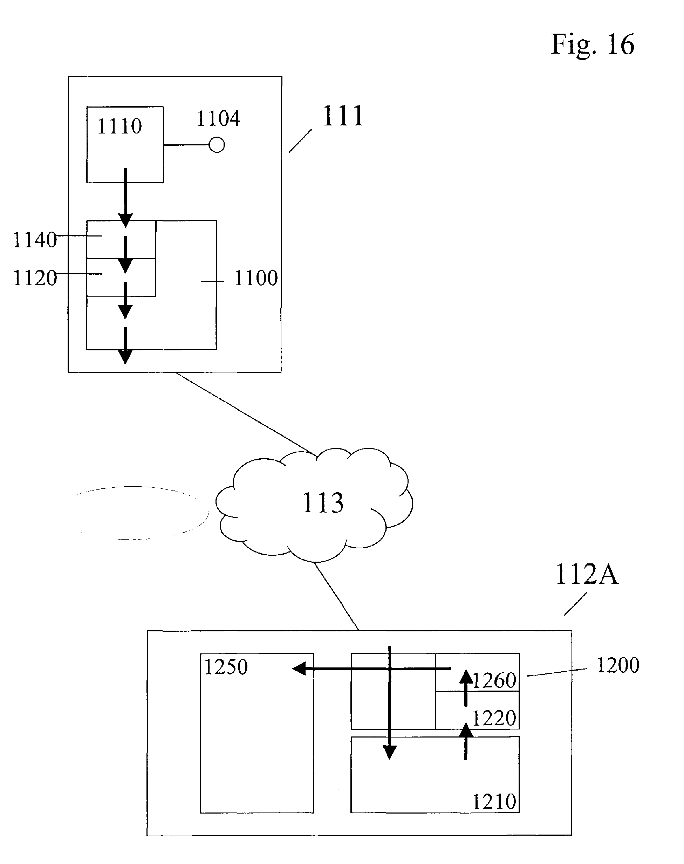

Fig. 16 illustrates the transmission of the response of the component 1110 on the server 111 back to the requesting client 112A. The requested service is here a drawing functionality which is implemented by RVP drawing. The office component (e.g. the StarOffice Writer) 1110 is able to draw on a panel within software program 1250 of the client 112A using the same mechanism as described above. The component 1110 uses the VCL 1140 as a drawing engine. The operations are transmitted through VCL 1140, RVP 1120 and communication component 1100 on the server 111 to the client 112A. Client 112A receives the operations and passes them to the AWT 1260 which is able to draw on the panel of the client 112A directly.

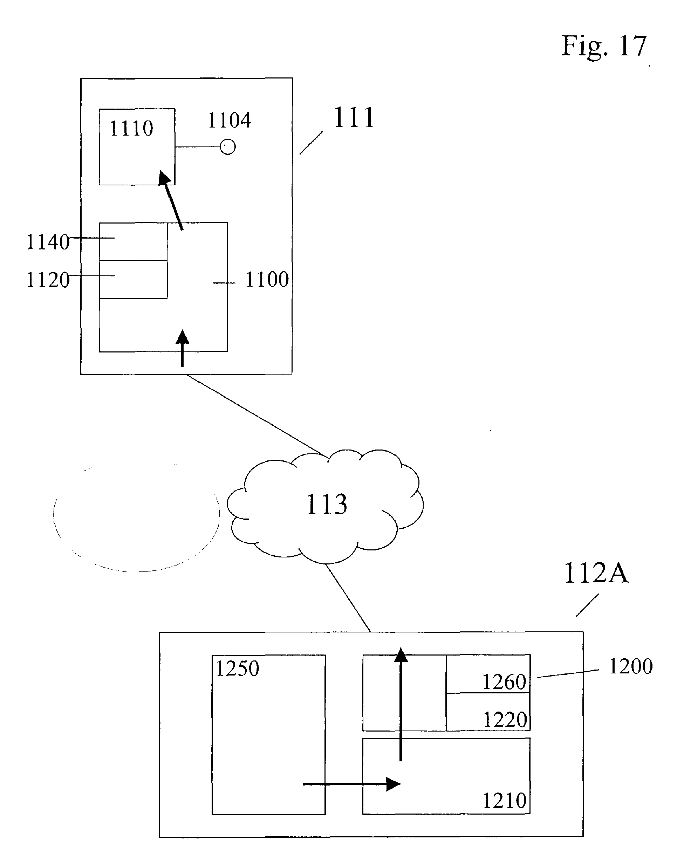

Fig. 17 illustrates accessing an API as a runtime environment component on the server 111 by the client 112A. The visual lightweight component 1210 is, in the example described in Fig. 15 and Fig. 16, still able to access transparently the full functionality of an API 1104 provided by the office component 1110. The request of the lightweight component 1210 for API 1104 is handed over to the office component 1110 through the communication component 1200 on the client 112A and the communication component 1100 of the server 111. Herein, the request for the API 1104 generated by the lightweight component 1210 may bypass RVP 1220 and AWT 1260 on the client 112A and likewise RVP 1120 and VCL 1140 on the server 111, if not drawing services are requested. The latter would be the case, for example, if API 1104 would provide calculation services. In order to have the request bypass the mentioned components the lightweight component 1210 must decide that these components shall be bypassed. This decision can be made by the lightweight component 1210 based on the call of the API 1104 received from the software program 1250 and the information that the API 1104 does not provide drawing services. This information will regularly be present in the lightweight component 1210, since it has information about all runtime environment components being available on the server 111 anyway, since it has to request their services and receive their responses. However, if necessary the office component 1110 may also react to the request for API 1104 by drawing via RVP 1220 directly on the panel of client 112A.

An exemplary scenario for the latter might be the following: a user on client 112A editing a text document displayed in his browser whishes to change the font size to 10 points throughout the whole document. For this purpose, the client 112A uses the API 1104 to change all fonts throughout the whole document to a size of 10 points. In this case, the office component 1110 running on the server 111 re-calculates the display of the document, renders the document remotely, and draws the document on the client 112A through the RVP 1120 and RVP 1220.

However, if the user on client 112A changes the font size only for newly input text lines, the currently displayed document does not change, thus there is no need to re-draw the whole document on the client 112A. The event of changing the font size is passed via RVP 1120 to the office component 1104 and forces new rendering of the document on the server 111. Since no re-drawing of the document on the client 112A is needed, the lightweight component 1210 does not have to take any further action.

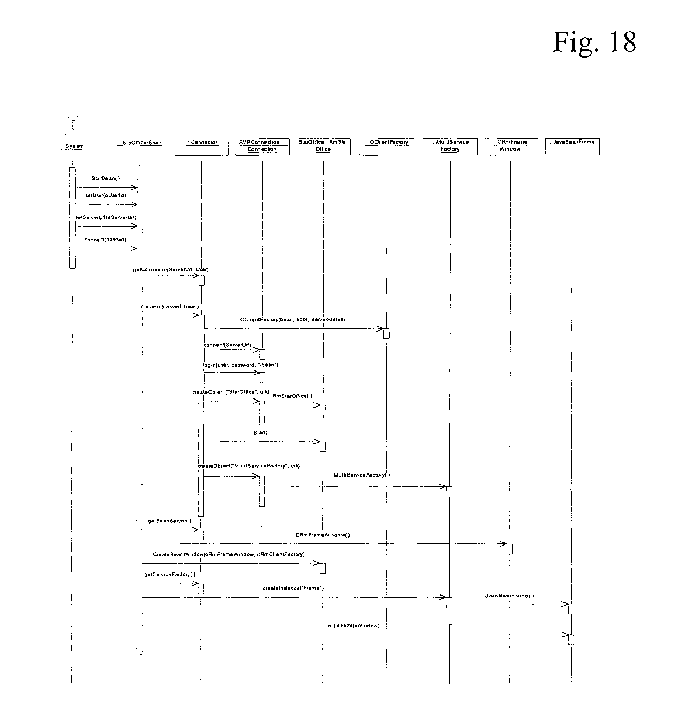

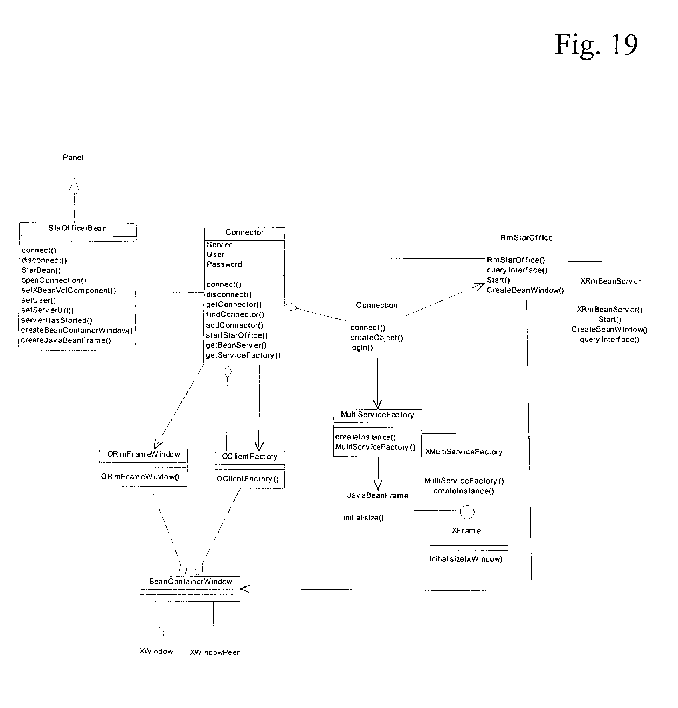

The participating components to create a Java bean lightweight component in the frame of the office application program package StarOffice used as a runtime environment component are shown in Fig. 18. An accompanying sequence diagram is supplied in Fig. 19. The figures are reduced to show only needed relations and methods to illustrate this specific process. A *StarOfficeBean* represents a common java bean which is derived from a java panel. It resides on the client as the single instance *Connector,* which is responsible for maintaining connections to the remote machine. All client beans share one connection per user and server. The *OClientFactory* created by the *Connector* is also located at the client 112A. This enables the remote Office Component to create elements which are specific to the client 112A. Examples for these items range from a simple frame window to a printer device handled locally. Next the *Connector* establishes a connection to the remote machine and starts the login process. If succeeded the server 111 starts a StarOffice session remotely and the *Connector* confirms the session with Start(). The task of the remote *MultiServiceFactory* created by the *RVP Connection* instance is to create needed instances on the remote machine. Then a local *ORmFrameWindow* is created and passed together with a reference of the *OClientFactory* to the remote StarOffice instance to be able for local dispatching and drawing. By calling *initialize()* on the remotely created *Java Bean Frame* all actions are done and the process of creating a StarOfficeBean is completed.

Unlike components like CORBA objects, lightweight components 1210 do not have any additional code for accessing the implementing object. Also the size of a lightweight component 1210 does not increase with the number of accessed runtime environment components of the implementation server framework. This introduces the ability to offer components which expose only services designed for a special purpose and hide complexity of the implementation framework.

By applying the invention, it is possible to include for example full word processing functionality provided by the server 111 into any other application program 1250 running on the client computer 112A.

Special purposes may be applications designed for being executed on particular clients like handheld computers or mobile telephones, where storage and processing capabilities are particularly limited. Nevertheless, the whole functionality of the framework is still accessible.

Furthermore, when adding new runtime environment components to the server 111, no modification on the client side is necessary. Through the concept of lightweight components, a new runtime environment component on the server is immediately callable by the client. The components are based on a generic lightweight component which is able to communicate with the implementation framework via the object component model.

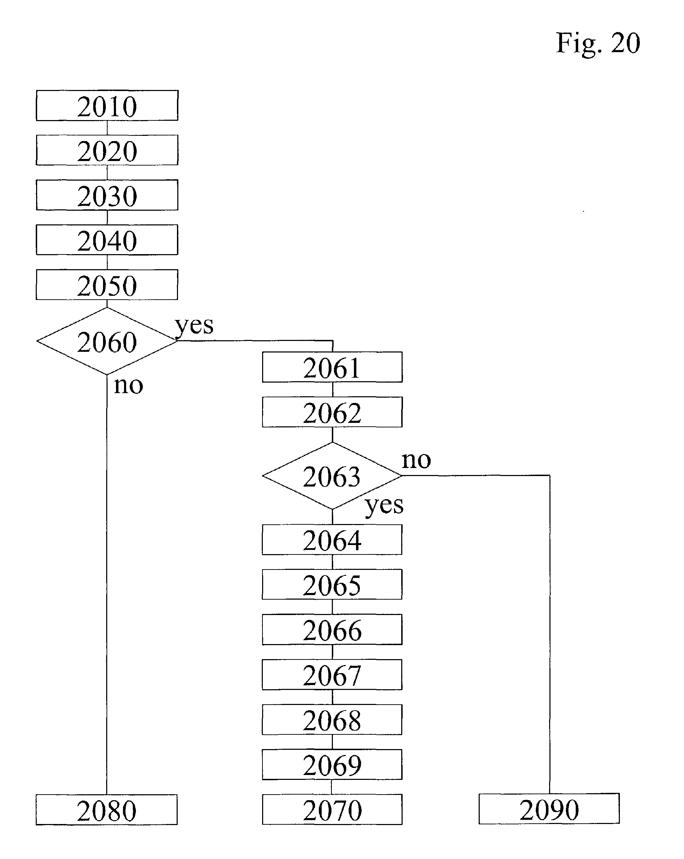

Fig. 20 refers to an example for using the present invention. In this example a setup is used as described in Fig. 15 to 17. Therefore, reference numerals also relate to components which are presented and described in more detail in connection with Fig. 15 to 17. However, the method according to Fig. 20 does not correspond to the methods described along Fig. 15 to 17.

In this example, a user utilizes his computer system as a client 112A. This client 112A includes a screen on which the user can edit and process a text document. The client 112A includes text processing software 1250 with a limited scope of functionality and a lightweight component 1210 which corresponds to comprehensive services offered by an office suite software package 1110 located as runtime environment components on a server 111 to which the client 112A is connected via a network 113.

For the purposes of this example the user edits a text document on the screen of the client 112A and changes the font size of the text. In order to do this he inputs his commands via a suitable input device of the client 112A, for example, a keyboard. In step 2010 the text processing software 1250 on the client 112A requests the service "font change" from the lightweight component 1210. The lightweight component 1210 receives this request in step 2020. In step 2030 the lightweight component 1210 marshals the request and transmits it via the communication component 1200 in client 112A to the communication component 1100 of the server 111 via the network 113.

The server 111 unmarshals the request and calls the runtime environment component 1110 in step 2040. In the next step 2050 the component 1110 starts processing the "font change" request. It will determine in step 2060 if a re-drawing of the text document on the screen of the client 112A is necessary due to the requested font change.

If not, the service component 1110 will immediately produce a result to the request in step 2080. A re-drawing may not be necessary, if the user wants the font change to be effective exclusively for further input into the text document. In this case the result to be provided by component 1110 could be a return code to the software program 1250 which tells the software program 1250 that further input into the text document will be processed with the new font on the screen of the client 112A.

If yes, for example, if the font shall be changed for the whole text document, the component 1110 renders a new graphical presentation of the text document in step 2061. Then, in step 2062, the output operations for the realization of the graphical presentation are given to the VCL 1140 by the component 1110. In step 2063 it will be decided by VCL 1140 whether the output operations have to be carried out in a visible area, e.g. on a screen.

If this is not the case, for example, if the text document with the font changed throughout its entire scope would only be stored as a data file but not shown on the screen of the client 112A, the result would be created in step 2090 by VCL 1140. This result would be the text document in the new form. No display on the screen of the client 112A would be envisaged in this case.

If this is the case, for example, if the text document shall be displayed on the screen of the client 112A, the "change font" request realized by VCL 1140 is transmitted to RVP 1120 in step 2064. This realized request is then, in step 2065, marshaled and sent via communication component 1100 of server 111, via the network 113 and via the communication component 1200 of the client 112A to the lightweight component 1210 on the client 112A. In step 2066 the lightweight component 1210 unmarshals the realized request. In step 2067 the request is translated into an AWT request. This AWT request is transmitted in step 2068 from the lightweight component 1210 via the RVP 1220 to the AWT 1260. In step 2069 the AWT 1260 executes the transmitted AWT request. Finally, in step 2070 the result will be transmitted to the software program 1250 so that the text document will be drawn on the screen of the client 112A with the new font size.

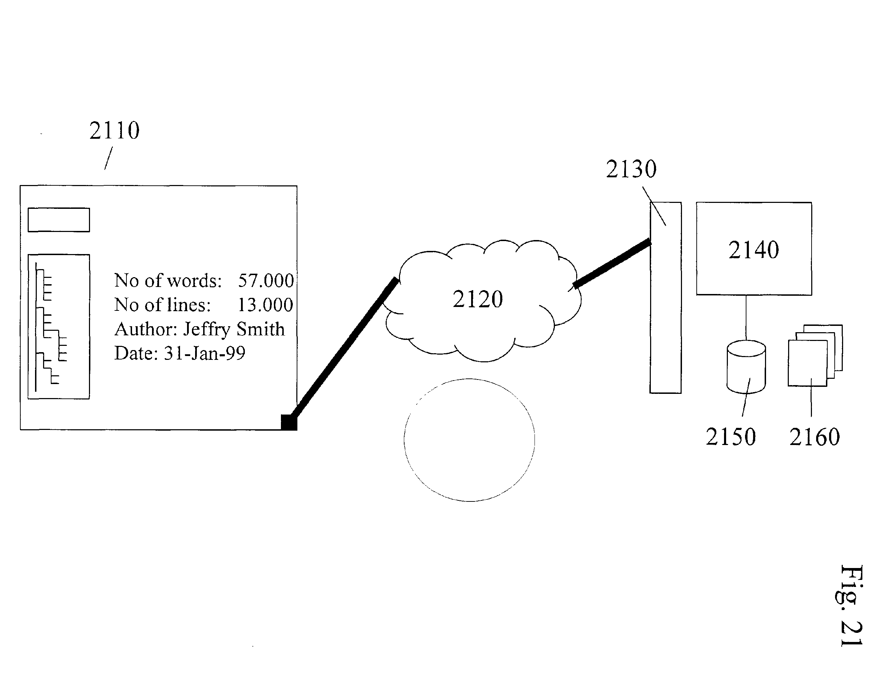

Fig. 21 illustrates a non-visual lightweight component. Non-visual means that the user of the client on which the lightweight component is located does not receive any hints as to its presence. He does not see it and he can also not interact with it directly.

In Fig. 21 a client 2110 is shown with a screen showing, on the left, a tree-like representation of data files below a window, and, on the right, information given about a certain text document which was selected by the user by means of the tree-like representation of data files. The client 2110 is connected via network 2120 to a server 2130 which has access to a text processing software program as runtime environment component 2140. This component 2140 has in turn access to a storage medium 2150 and to a library 2160.

If a user of the client 2110 wants to obtain information, for example, number of words and lines, author and date of this version, about a text document chosen from the tree-like representation of data files, he enters his request via an input device of the client 2110, for example, a keyboard of the client 2110. Then, the non-visual lightweight component on the client 2110 will contact, as described above, via the network 2120 the server 2130 and ask for the services providing the information requested by the user from the runtime environment component 2140. The result provided by the component 2140 will then be re-transmitted to the client 2110 so that the desired information - number of words and lines; author and date of this version of the selected text document - can be displayed on the screen of the client 2110. The lightweight component remains non-visual to the user of the client 2110.

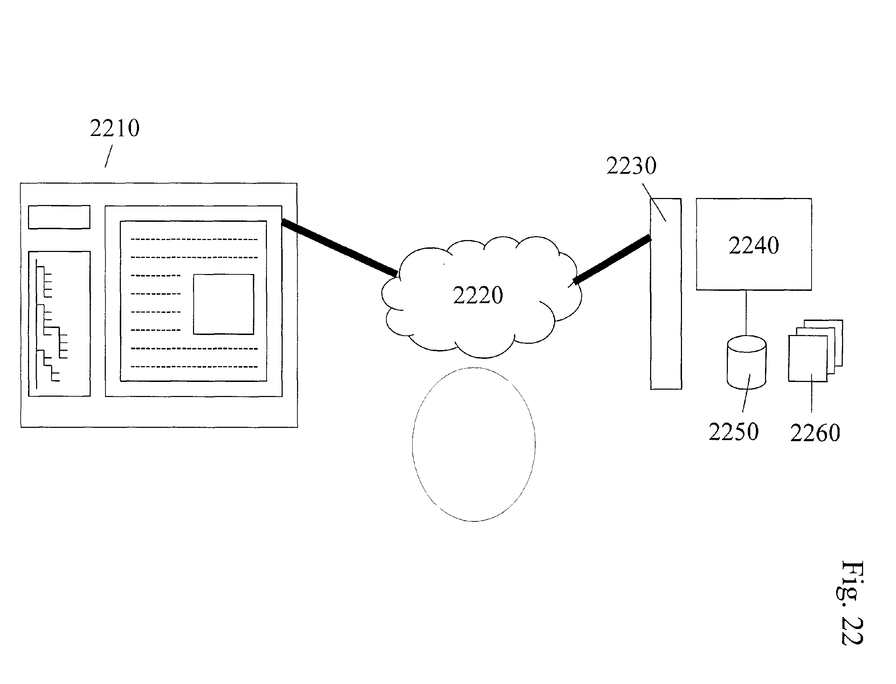

Fig. 22 in contrast shows an example of a visual lightweight component, that means a lightweight component with which the user may interact, but which will at least be recognized by the user in some situations.

A client 2210 includes a visual lightweight component. The client 2210 is connected via network 2220 with the server 2230, which in turn has access to the runtime environment component 2240 connected to storage medium 2250 and data base 2260.

In this example, a user of the client 2210 edits a text document on the screen of the client 2210, as shown in Fig. 22 on the right, besides the above described window and tree-like representation of data files. The shown screen representation of the text document shows in the right middle position a small window with which the user may manipulate the displayed text document. This window represents the lightweight component. Here, the user may directly interact, via the window presentation, with the lightweight component, which is therefore referred to as a visual lightweight component.

If the lightweight component is activated by a user interaction it may contact, as described above, the server 2230 and thereby the runtime environment 2240, which may provide a service requested by the user by his interaction from the client 2210.

Comparing a non-visual and a visual lightweight component as above described, it may be advantageous to use a non-visual lightweight component for processing requests which do not require particular operations for their fulfillment, in particular, no drawing operations on a screen of a client. In this case, the non-visual lightweight component may provide the response to the request more quickly than a visual lightweight component, since, for example, drawing operations are not processed at all; they are not only ignored by the client after having been processed with great efforts.

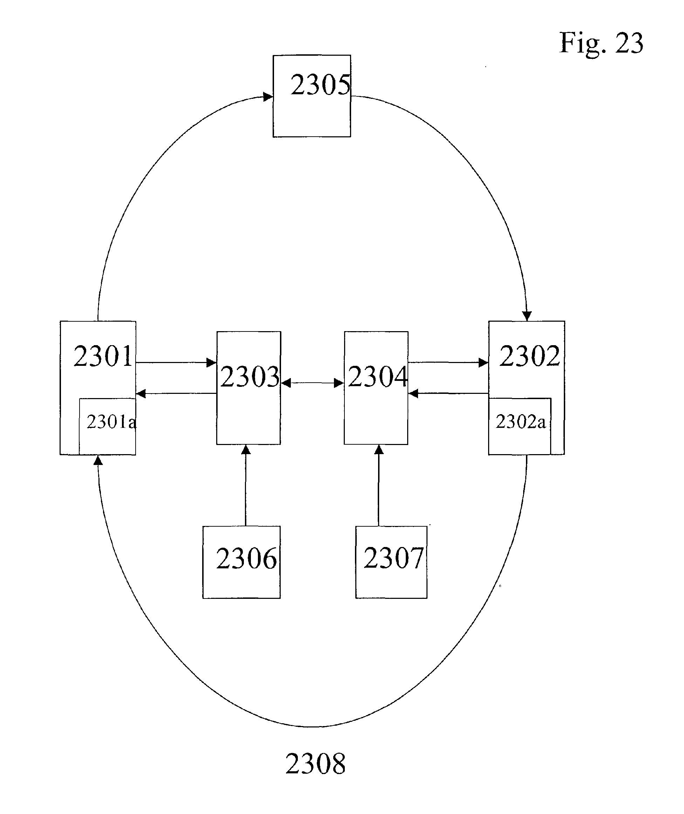

In the following, further embodiments will be described with respect to Figs. 23 - 36.

The following embodiments enable a first software program using a first binary specification to employ a limited functionality of a second software program using a second binary specification.

Many software programs, which are created in different programming languages, have to communicate with each other. For example, a first software program created in a first programming language is able to provide tables. It calls another software program created in a second programming language which is able to calculate figures which are needed in the table to be produced by the first program. The calculation program cannot be called by the table program, since these two programs use different binary specifications for the communication because of their different programming languages. The different binary specification can be caused by different programming languages as well as by different compilers for the same programming language, since the communication problems caused by a different programming language and by different compilers for the same programming language are comparable, if not identical.

The prior art solution to this problem is to provide transformer modules for each required transformation route, for example from a certain first binary specification to a certain second binary specification. Since in modern computer applications many different software programs may be called by a certain software program, the computer system requires a voluminous library of transformer modules. This extensive library needs significant storage space and regular maintenance, since for every new binary specification which shall be accessible a full new set of transformer modules must be provided, in addition to the existing transformer modules. However, most of these transformer modules are not used frequently, so that their storage is not efficient.

Furthermore, these prior art transformer modules extend to the full functionality of the software program to be translated from one binary specification to another. Due to the regularly wide functionality of software programs known transformer modules are rather voluminous and require, when they are activated, a significant amount of working memory and processor time from the computer system on which they are carried out. Furthermore, the complete translation of a software program is burdensome and time consuming, although it is in most cases unnecessary for the specific task to be accomplished.

Thus, it is desired to provide an efficient method to enable a first software program to employ certain functionalities of a second software program, wherein the first and the second software program use different binary specifications.

A first software program using a first binary specification may employ a limited functionality of a second software program using a second binary specification with the following steps:

a) initiating the creation of a stub, which is able to transform commands relating to the limited functionality of the second program between the second binary specification and an intermediate binary specification, using a second bridge, wherein the second bridge provides a mapping of the second binary specification and the intermediate binary specification,

b) initiating the creation of a proxy, which is able to transform commands relating to the limited functionality of the second program between the first binary specification and the intermediate binary specification, using a first bridge, wherein the first bridge provides a mapping of the first binary specification and the intermediate binary specification, and

c) initiating the arrangement of the proxy and the stub relatively to the first program and the second program in a manner allowing the first program to employ the limited functionality of the second program.

Software programs generally are compiled executable programs. Software programs are initially written in a programming language, for example, C++ or Java or an object model like Corba. They are compiled with compilers corresponding to the programming language. However, for each programming language several compilers may be available. The binary specification in which a software program is able to communicate with other software programs depends on both, the programming language and the compiler. This communication language of a software program is the language referred herein as the binary specification used by a software program, for example, the first, the second and the intermediate binary specification.

The intermediate binary specification serves as the binary specification into and from which the communication between the first and the second software program will be translated. This intermediate binary specification may be, for example, an existing binary specification like the binary specification of a specific compiler, but it is also possible that this intermediate binary specification is a suitable newly created binary specification, for example, a binary specification which facilitates translation into and from it.

According to the following embodiments the two transformer modules, called proxy and stub, may be created on demand, that means if and when they are needed. This creation on demand will be initiated directly that means by the first software program or by means of an initiating function. This creation on demand is considered to be dynamic, so that the commands of the first software program may be dispatched dynamically. The two transformer modules are at least able to transform commands corresponding to a limited functionality of the second software program. Since the first software program employs in most cases only a part of the functionality of the second software program, the two transformer modules need to transform only commands which correspond to this limited functionality. Here, commands may be any kind of message initiating any kind of activity of a software program and which may be transmitted between the two software programs.

It is possible to insert further modules between these two transformer modules. These modules may be able to intercept the commands. This interception may be used, for example, to add security or accounting functionality. It is also possible to use these two transformer modules to synchronize the commands or to use them for debugging.

For the creation of the proxy and the stub mappings between the basic commands, on which all other commands are based, of the two pairs of participating binary specifications are used. These pairs are the first binary specification and the intermediate binary specification and the second binary specification and the intermediate binary specification. These mappings will be provided by the bridges and may be, for example, stored in a data base. However, the bridges may also already be a part of the second software program. In case these mappings cover the complete functionality of the relevant binary specifications - which is frequently the case - only some parts of the mapping may be considered during the creation of the proxy and the stub, since they relate to the above mentioned limited functionality only.

After their creation the proxy and the stub are arranged in a manner which enables the first software program to communicate with the second software program. That means a path of communication must be arranged from the first software program to the proxy, from the proxy to the stub, and finally from the stub to the second software program. This route must regularly be accessible from both sides, that means from the side of the first software program as well as from the side of the second software program.

In order to generate the stub the second binary specification used by the second software program must be known. For this purpose, the first software program may start the second software program. This may be done by the first program by means of a loader function which loads the second software program. Loader functions are well known in the prior art. A loader function is able to initiate a software program using a certain binary specification on demand of another software program using a different binary specification. The loader function may directly initiate the creation of the required stub or it may initiate that the second software program or an auxiliary program communicating with the second software program creates the stub. This is possible, if the loader function carries or supplies by any means the information about the limited functionality of the second software program requested by the first software program.

The creation of the stub may be carried out by the second software program or by any sub-program of the second software program. It is possible that this sub-program exists already in the second software program. However, this sub-program may as well be procured or generated by the second software program in response to a request of the first software.

After the creation of the stub, the initiated second software program or its sub-program creating the stub may inform the first software program that the stub has been created. This may initiate the creation of the proxy by the first software program or any suitable sub-program, as it was described above for the creation of the stub.

The proxy may be created by the first software program or a sub-program, a function thereof. The sub-program of the first software program must consider the bridge for the transformation of the first binary specification into the intermediate binary specification and reverse and the requested limited functionality of the second software program. The information about the requested limited functionality is generally available in the first software program, because the first software program requests this limited functionality from the second software program.

In order to enable the communication between the first software program and the second software program the stub and the proxy may transform any commands or other messages between these two software programs, as far as the proxy and the stub support this functionality. This requires the above described arrangement of the proxy and the stub relatively to the first and the second software program.

A method for employing a limited functionality of a second software program using a second binary specification by a first software program using a first binary specification may include the following steps:

a) initializing the limited functionality of the second software program by the first software program,

b) creating a stub, which is able to transform commands relating to the limited functionality of the second software program between the second binary specification and an intermediate binary specification, using a second bridge, wherein the second bridge provides a mapping of the second binary specification and the intermediate binary specification,

c) creating a proxy, which is able to transform commands relating to the limited functionality of the second software program between the first binary specification and the intermediate binary specification, using a first bridge, wherein the first bridge provides a mapping of the first binary specification and the intermediate binary specification,

d) transmitting an command relating to the limited functionality from the first software program to the proxy,

e) transforming the command from the first binary specification into the intermediate binary specification by the proxy,

f) transmitting the command transformed by the proxy from the proxy to the stub,

g) transforming the transmitted command from the intermediate binary specification into the second binary specification by the stub,

h) transmitting the command transformed by the stub from the stub to the second software program,

i) carrying out the command in the second software program and generating a response for the first software program,

j) transmitting the response, being in the second binary specification, from the second software program to the stub,

k) transforming the response from the second binary specification into the intermediate binary specification by the stub,

l) transmitting the response transformed by the stub from the stub to the proxy,

m) transforming the response from the intermediate binary specification into the first binary specification by the proxy,

n) transmitting the response transformed by the proxy from the proxy to the first software program.

The transmissions between the proxy and the stub and the software programs and the proxy or the stub, respectively, may be effected by any suitable means. It is relevant, however, that these elements are arranged so as to allow the communication of the two software programs.

Furthermore, a method for using a stub, which is able to transform commands relating to a limited functionality of a second software program between a second binary specification and an intermediate binary specification, using a second bridge, wherein the second bridge provides a mapping of the second binary specification and the intermediate binary specification, is provided for enabling a first software program using a first binary specification to employ the limited functionality of the second software program by further using a proxy, which is able to transform commands relating to the limited functionality of the second software program between the first binary specification and the intermediate binary specification, using a first bridge, wherein the first bridge provides a mapping of the first binary specification and the intermediate binary specification, wherein the proxy and the stub are arranged relatively to the first software program and the second software program in a manner allowing the first software program to employ the limited functionality of the second software program.

A method for using a proxy may enable to transform commands relating to the limited functionality of the second software program between the first binary specification and the intermediate binary specification, using a first bridge, wherein the first bridge provides a mapping of the first binary specification and the intermediate binary specification, for enabling a first software program using a first binary specification to employ the limited functionality of the second software program by further using a stub, which is able to transform commands relating to a limited functionality of a second software program between a second binary specification and an intermediate binary specification, using a second bridge, wherein the second bridge provides a mapping of the second binary specification and the intermediate binary specification, wherein the proxy and the stub are arranged relatively to the first software program and the second software program in a manner allowing the first software program to employ the limited functionality of the second software program.

A computer program, also referred to as a computer program product, may carry out the above operations. A computer program product comprises a medium configured to store or transport computer readable code, or in which computer readable code may be embedded. Some examples of computer program product are: CD-ROM disks, ROM-cards, floppy disks, magnetic tapes, computer hard drives, servers on a network and carrier waves and digital signals transmitted over a telecommunication link or network connection.

Such computer program may be stored on any data carrier, such as, for example, a disk, a CD or a hard disk of a computer system. It is further provided a method for using a computer system, including standard computer systems, for carrying out the present inventive method. Finally, a computer system may comprise a storage medium on which a computer program for carrying out the above operations may be stored.

Following, reference is made to Fig. 23. A first software program 2301, created with any convenient programming language, for example C++, and compiled with a certain compiler for C++, uses a first binary specification. This first binary specification depends on both, the programming language and on the compiler. The first software program 2301 may be, for example, able to present numbers in graphical form. In order to calculate the exact dimensions of the graphs the first software program 2301 may want to employ a second software program 2302, created with another programming language, for example Java, and compiled by using a certain compiler for Java. This second software program 2302 uses the second binary specification for communication.

The use of the second software program 2302 by the first software program 2301 requires its initialization, for example, by calling a loader function 2305. The second software program 2302 may then initialize its sub-program 2302a for creating the stub 2304. The sub-program 2302a must consider the limited functionality in order to arrive at the desired stub 2304, namely a module for transforming commands and responses relating to the requested limited functionality. Based on this limited functionality, the sub-program 2302a selects the relevant mappings of the bridge 2307 between the second binary specification and the intermediate binary specification.

The first software program 2301 may correspondingly initiate a sub-program 2301a to create the proxy 2303 in a similar way, by employing the bridge 2306 between the first binary specification and the intermediate binary specification. This sub-program 2301a may be informed about the limited functionality from the first software program 2301. However, it may also know this limited functionality from the second software program 2302 by communicating via the communication channel 2308. This channel 2308 may be any suitable real or virtual connection which allows the transfer of data.

After the stub 2304 and proxy 2303 have been created they are arranged so as to allow the communication between the first software program 2301 and the second software program 2302. Once this arrangement is effected the first software program 2301 sends the command to be transformed to the proxy 2303. The proxy 2303 may transform this command from the first binary specification into the intermediate binary specification. This intermediate binary specification corresponds, for example, to the binary UNO specification. The proxy 2303 may transmit this command in the intermediate binary specification to the stub 2304. The stub 2304 may transform the command from the intermediate binary specification into the second binary specification and may transmit the command then to the second software program 2302.

The second software program 2302 may execute the command, for example, the command to calculate the dimensions of a graph and may generate a response for the first software program 2301. This response may be transformed and transmitted by the stub 2304 and the proxy 2303 from the second software program 2302 to the first software program 2301.

The arrows shown in Fig. 23 between the first software program 2301, the proxy 2303, the stub 2304, the second software program 2302 and the loader function 2305 show the possible routes of communication. The arrows between the proxy 2303 and the bridge 2306 and between the stub 2304 and the bridge 2307 represent the contribution of the bridges 2306 and 2307 to the creation of the proxy 2303 and the stub 2304, respectively.

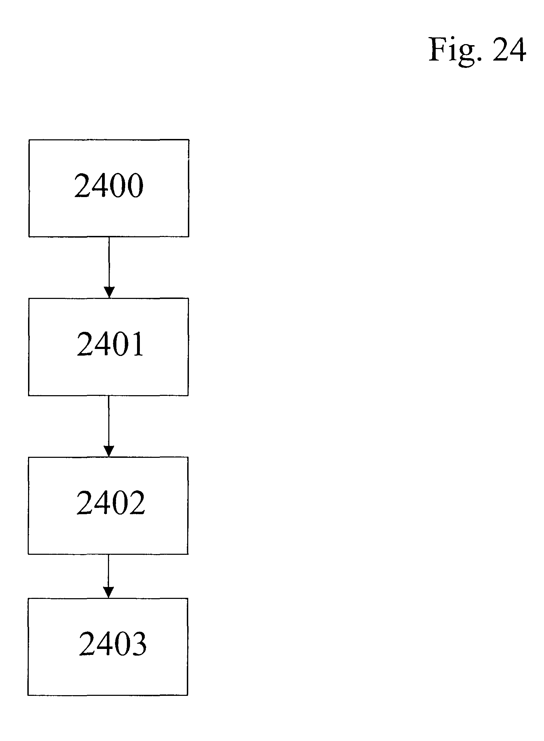

Fig. 24 represents an example for the initial communication of a first software program 2301 and a second software program 2302. The initial communication between the two software programs 2301, 2302 is carried out, before the creation of the stub 2304 and of the proxy 2303 is initiated. Due to the different binary specifications used by the two software programs 2301, 2302, namely the first and the second binary specification, this initial communication will regularly be extremely limited. It may be effected as explained exemplary in the following.

In a first step 2400 the first software program 2301 may call a loader function 2305 for the second software program 2302. The loader function 2305 may be any known loader function for this second software program 2302. A loader function for a program is a software module which "wakes up" this program so that it carries out certain functions. Herein, the loader function may be addressed in one binary specification and may wake up a program using a different binary specification. However, the loader function is not suited to provide any detailed communication between programs using different binary specifications.

The loader function 2305 may be used by the first software program 2301 from the beginning. This is the case, if the first software program 2301 knows or assumes that the second software program 2302 does not use the same binary specification as itself, namely the first binary specification. If this knowledge is not present in the first software program 2301, it may simply try to call the second software program assuming that it will understand the first binary specification. In this case, the first software program 2301 may only employ the loader function 2305 if the direct communication with the second software program 2302 fails and a corresponding message is returned to the first software program 2301.

In the calling step 2400 the first software program 2301 informs the loader function 2305 about the limited functionality requested from the second software program 2302. Therefore, the loader function 2305 must be suited to receive and carry this information. In order to provide this information to the loader function 2305 the first software program 2301 may hand over to the loader function 2305 the command to be carried out by the second software program 2302, so that the second software program 2302 may, on receipt of the call of the loader function 2305 decide itself which functionality is needed, or the first software program 2301 may provide the loader function 2305 directly with the description of a limited functionality of the second software program 2302 which will be required by the first software program 2301.

In step 2401 the loader function 2305 contacts and initializes a reception function of the second software program 2302 to be able to transmit in the next step 2402 its information about the limited functionality required from the second software program 2302. In the next step 2403 the second software program 2302 analyses the information received from the loader function 2305 regarding the required limited functionality. After the analysis of the limited functionality required the second software program 2302 initializes the creation of a stub 2304.

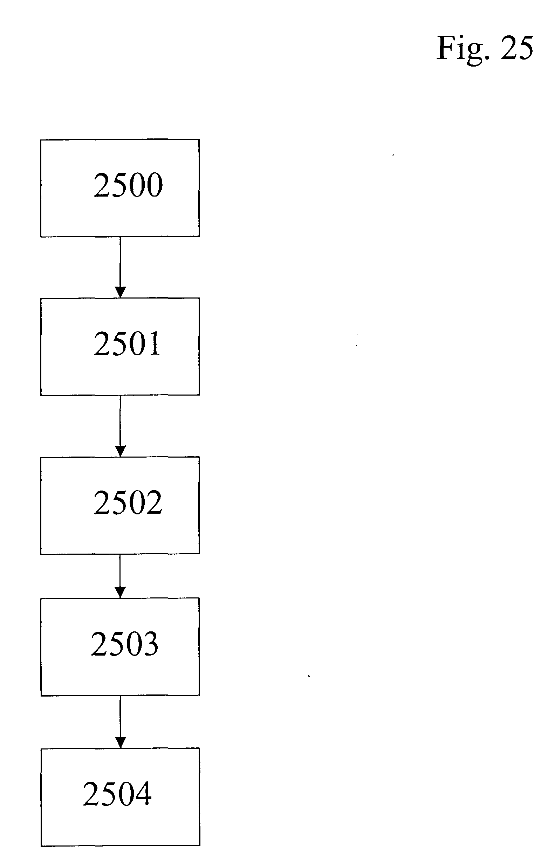

Fig. 25 shows the creation of a stub 2304. The stub 2304 has the task to transform commands sent by first software program 2301 to the second software program 2302 from the intermediate binary specification into the second binary specification used by the second software program 2302 and to transform responses sent by the second software program 2302 back to the first software program 2301 from the second binary specification into the intermediate binary specification. Furthermore, the stub 2304 may be assigned the task to transmit the transformed commands or responses to the recipients, the second software program 2302 or the proxy 2303, respectively.

In step 2500 the second software program 2302 may initialize a sub-program 2302a for creating the stub 2304. This sub-program 2302a may be an integral part of the second software program 2302 or it may be as well a separate independent software module which can be used by this and potentially any other second software program 2302. Accordingly, the sub-program 2302a may be stored on the computer system or storage device on which the second software program 2302 is stored. However, the sub-program 2302a may also be stored on another computer system or storage device to which the second software program 2302 has access.

In step 2501 the sub-program 2302a receives from the second software program 2302 a description of the limited functionality required from the second software program 2302. Then, in step 2502 the bridge 2307 between the second binary specification used by the second software program 2302 and the intermediate binary specification is contacted. This bridge 2307 provides a mapping of at least all basic commands between the mentioned two binary specifications. It may be stored at any place accessible for the sub-program 2302a. In many cases there may exist a library with bridges for a number of second binary specifications, assuming that the intermediate binary specification used would be the same for all intended operations.

From the selected bridge 2307 the sub-program 2302a chooses in step 2503 the mappings necessary to use the required limited functionality of the second software program 2302. This means all transformations, but not more than these, must be selected which are required to transform commands and responses which could arise when using the relevant functionality. Finally, in step 2504 the sub-program 2302a creates the stub 2304 based on the chosen mappings.

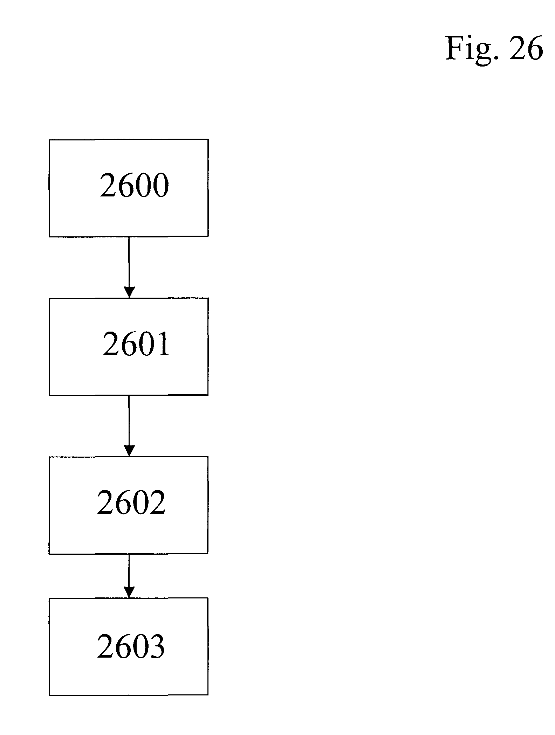

Fig. 26 represents in the form of a flow chart the creation of the proxy 2303. The proxy 2303 has the task to transform commands and responses between the first binary specification and the intermediate binary specification. It is insofar similar to the stub 2304 which has, as it was described above, the task to render these transformations between the second binary specification and the intermediate binary specification.

In step 2600 the first software program 2301 may initialize a sub-program 2301a for creating the proxy 2303. This sub-program may be an integral part of the first software program 2301, but may as well be separate and independent from it. The sub-program 2301a may be accessible for a larger number of first software programs 2301. In step 2601 the sub-program 2301a receives from the first software program 2301 information regarding the limited functionality required from the second software program 2302. This information may be provided by passing on the actual command the first software program 2301 plans to send to the second software program 2302, so that the sub-program 2301a may derive from this command the information about the limited functionality, or the first software program 2301 may provide the sub-program 2301a with a description of the limited functionality.

In an alternative embodiment the description of the limited functionality may be received from the sub-program 2302a for creating the stub 2304. The sub-program 2302a has the required description, because it has to create the stub 2304 according to the same description. The description may be exchanged between the sub-program 2302a and the sub-program 2301a by any suitable means of communication.

In yet an alternative embodiment the description of the limited functionality of the second software program 2302 may be derived directly by mapping the stub 2304 into the first binary specification, in order to create a proxy. This is possible, because the stub 2304 reflects the required limited functionality in listings between the second binary specification and the intermediate binary specification which are necessary for the transformation of commands and responses. Therefore, the intermediate binary specification side of the listings of the stub 2304 may be taken as the starting point for the creation of the proxy 2303, which is completed by adding the corresponding parts of the listing in the first binary specification, as will be explained below.

In step 2602 the sub-program 2301a contacts the bridge 2306, which provides a mapping of basic commands of the first binary specification and the intermediate binary specification, and builds, in step 2603, the desired proxy 2303.

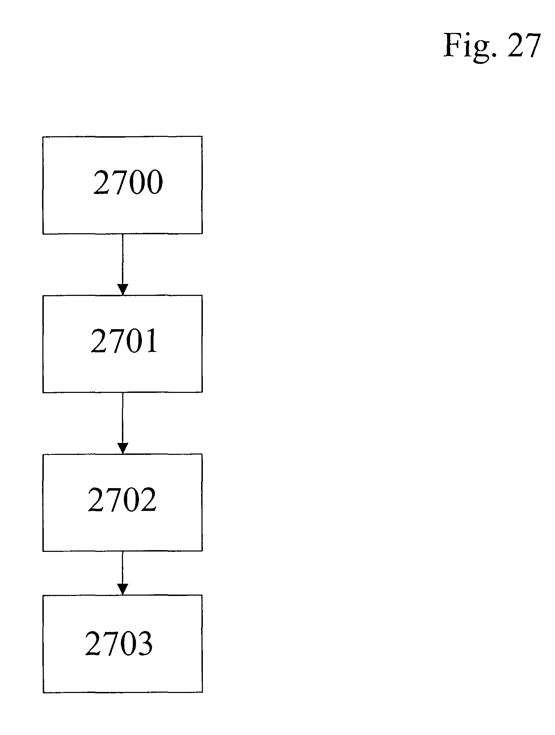

The proxy 2303 and stub 2304 are then arranged to allow the desired communication between the first software program 2301 and the second software program 2302, as it will be described in the following along the flow chart of Fig. 27. The arrangement of proxy 2303 and stub 2304 requires that the path of exchanging transformed commands and responses between the proxy 2303 and the stub 2304 is defined.

Therefore, in step 2700 the second software program 2302 informs the first software program 2301 about the address information necessary to contact the stub 2304 via the communication line 2308. The communication line 2308 may consist of a simple data line for transmitting binary address information which can be understood from the first software program 2301 without being able to use the second binary specification in which the second software program 2302 communicates.

The first software program 2301 provides, in step 2701, the sub-program 2301a with this received address information, which, in step 2702, is passed on to the proxy 2303. The proxy 2303 then contacts, for the first time in step 2703, the stub 2304, the address of which is now known. In step 2703 the proxy 2303 will also transmit its own address information to the stub 2304, thereby allowing the stub 2304 to contact the proxy 2303. Herewith, the proxy 2303 and the stub 2304 are arranged for communication, that means they can send and receive commands and responses to commands. This arranging step is also referred to as binding.

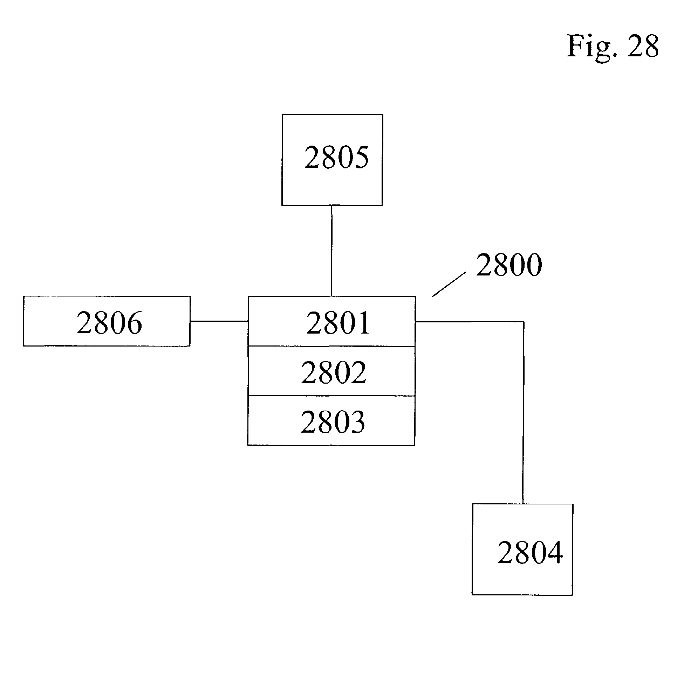

Fig. 28 shows a computer system 2800. The computer system 2800 comprises an i-/o-interface 2801, a central processing unit (CPU) 2802 and memory 2803. It is connected to an external memory 2804 on which mass data may be stored as well as software programs. Furthermore, the computer system 2800 is connected via the i-/o- interface 2801 to an output device 2805, for example, a screen, and to an input device 2806, for example, a keyboard.

The inventive method may be applied in the shown standard computer system. The first software program 2301 and the second software program 2302 may be stored in the internal memory 2803 of the computer system 2800, as well as on its external memory 2804. It is also possible that one of the programs is stored on the internal memory 2803 and the other is stored on the external memory 2804. The proxy 2303 and the stub 2304 may be created by means of the CPU 2802.

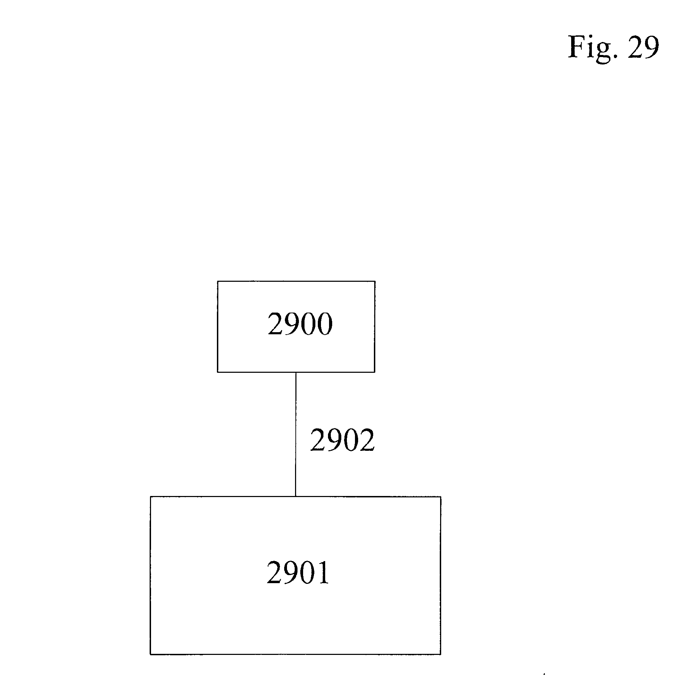

The above method may also be implemented and used on more than one computer system, for example, in a network or in a client-server system, as it is shown exemplary in Fig. 29.

Fig. 29 shows a client 2900 which is connected to a server 2901. This connection may be a data line 2902, including any kind of permanent or temporary network, like, for example, the internet. It is understood that, instead of only one client, there may be a large number of clients connected to the server. The first software program 2301 may, for example, be stored on client 2900, while the second software program 2302 may be stored on server 2901. The exchange of commands and responses may be effected via data line 2902. For example, the bridges 2306 and 2307, as well as any other potentially needed bridges may be stored in one or more libraries on the server 2901. The sub-programs 2301a and 2302a may also be stored on the server 2901. In case the sub-program 2301a is needed the client 2900 may request from the server 2901 its transmission via data channel 2902.

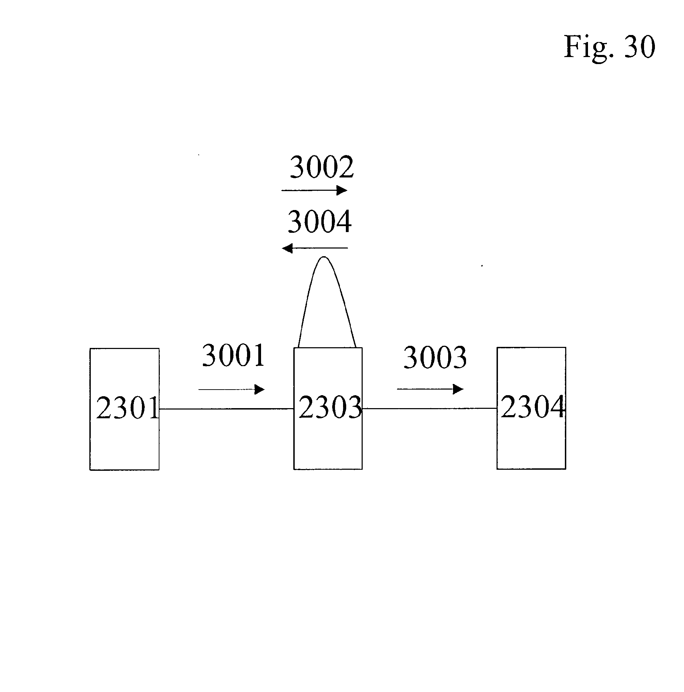

In the following further embodiment are described in more detail along Figures 30 to 33 and Tables 1 and 2.

*Creation of stub and proxy:*

In response to a call of a first software program a proxy and a stub will be created in the so-called proxy factory and the stub factory, respectively. In order to create a proxy and a stub three tasks have to be carried out. First, the first software program using the first binary specification has to be enabled to communicate with to the second software program using the second binary specification. Second, the stub factory has to create a uno_interface implementation considering the second binary specification based on the limited functionality which delivers all calls directed to the second software program to this second software program. This uno_interface is program code which is defined for the limited functionality. For the generation of the uno_interface implementation the stub factory employs information in the form of a type description. This uno interface implementation is also referred to as the stub. Third, the proxy factory has to create a uno_interface implementation for the first binary specification. The proxy factory generates its uno_interface implementation based on the information of the type description. This uno_interface implementation is referred to as the proxy.

The knowledge of the type description is necessary to create the stub and the proxy, as described. This type description is the full description of the limited functionality, also called interface. It contains the information about the required limited functionality of the second software program which shall be used by the first software program. The type description may refer to different types shown in Table 1.

Table 1:

| Type | UNO | C++ | Java |
|---|---|---|---|
| Byte | Signed 8 Bit | Signed 8 Bit | Signed 8 Bit |
| Short | Signed 16 Bit | Signed 16 Bit | Signed 16 Bit |
| Ushort | Unsigned 16 Bit | Unsigned 16 Bit | Signed 16 Bit |
| Long | Signed 32 Bit | Signed 32 Bit | Signed 32 Bit |
| Ulong | Unsigned 32 Bit | Unsigned 32 Bit | Signed 32 Bit |
| Hyper | Signed 64 Bit | Signed 64 Bit | Signed 64 Bit |
| Uhyper | Unsigned 64 Bit | Unsigned 64 Bit | Signed 64 Bit |
| Float | Processor dependent: Intel, Sparc = IEEE float | Processor dependent: Intel, Sparc = IEEE float | IEEE float |
| Double | Processor dependent: Intel, Sparc = IEEE double | Processor dependent: Intel, Sparc = IEEE double | IEEE double |
| Enum | The size of an machine word. Normally this is the size of an integer. | The size of an machine word. Normally this is the size of an integer. | All enum values of one enum declaration are static object of a class. Each object contains a 32 bit value which represents the enumeration value. |
| Boolean | 1 Byte. | 1 Byte. | Boolean |
| Char | 16 Bit on WNT, W95, W98, Os2. 32 Bit on Unix | 16 Bit on WNT, W95, W98, Os2. 32 Bit on Unix | Unsigned 16 bit (char) |
| String | A pointer to a structure which have the following members: long refCount, long length; wchar_t buffer[ ]; The string in buffer is 0 terminated. This is the rtl_wString structure in the rtl-library | A pointer to a structure which have the following members: long refCount; long length; wchar_t buffer[...]; The string in buffer is 0 terminated. This is the rtl_wString structure in the rtl-library | java.lang.String" |
| Structure | The structure contains the members in the order of the declaration. The memory layout is described at the beginning of this chapter. | The structure contains the members in the order of the declaration. The memory layout is described at the beginning of this chapter. | A class which is derived from java.lang.Object" and contains the members in the specified order. |
| Union | The size is 4 + size of the largest type. In front of the union members are a long value (nSelect) which describes the position of the valid member (0 is the first). | The size is 4 + size of the largest type. In front of the union members are a long value (nSelect) which describe the position of the valid member (0 is the first). | Not specified yet |
| Sequence | A pointer to a structure which has the following members: void pElements; long nElements; long nRefCount; The pElements are a memory area that contains nElements elements. | A pointer to a structure which has the following members: void pElements; long nElements; long nRefCount; The pElements are a memory area that contains nElements elements. | It is a normal Java array. |
| Exception | Looks like a structure | Looks like a structure | A class which is derived from java.lang.Exception" and contains the members in the specified order. |
| Interface | The interface is a pointer to a function table, which contains 3 functions. | It is a pointer to a C++-Class which implements first the virtual methods queryInterface, acquire and release. | It is a normal Java interface. |
| Any | This is a structure that contains a pointer to a type description. The second member is a pointer to the value stored in the any | This is a structure that contains a pointer to a type description. The second member is a pointer to the value stored in the any. | A class which is derived from java.lang.Object". The members are a class, which describe the type of the value. A second member which is the value of the any. |
| Void | No memory representation | No memory representation | No memory representation |

Many of these types are self-explaining and known in the art. Nevertheless, the most relevant types of the type description will be explained in more detail below. "Interfaces": All interfaces employed in connection with the present embodiment are derived from a Super-Interface. Each interface contains at least three methods. The two methods "acquire" and "release" are necessary to control the lifetime of the interface. The third method "queryInterface" is used to navigate between different Interfaces. A XInterface includes only these three methods. All other interfaces are derived from this XInterface. The methods and functionalities requested by the first software program will be part of the interface.

114

In Java, for example, interfaces are mapped to Java interfaces which could be normally implemented. The methods acquire and release are not mapped to the Java program since this methods do not exist in Java. The lifetime of the proxy, the stub and the relevant information in the second program will be controlled by a garbage collector. The programming language Java delivers basic types by value and non-basic types by reference. All calls are specified by value except interfaces. So in Java all non-basic types returned or delivered through out parameters are by value, which means that the implementation must copy it before return or deliver.

In C++, for example, interfaces are mapped to pure virtual classes. In order to automatically control the lifetime of interfaces a template called "Reference" will be used. All return, parameter and member types are "References" (e. g.: Reference< XInterface >). The "Reference" acquires the interface when it is constructed and releases the interface when it is destructed. "Structure": A structure is a collection of elements. The type of each element is fixed and it cannot be changed. The number of elements is fixed.

"Exceptions": An exception is a program control construct beside the normal control flow. One major feature of exceptions is, that it is simpler to implement the error handling. Exceptions are similar to structures since they are also a collection of elements and each type of each element is fixed and cannot be changed and the number of elements is also fixed. An additional feature of exceptions is that they can be thrown by a method. All exceptions which can be thrown by a method must be declared at the method, except for the called "RuntimeException" which always can occur. All exceptions must be derived from "Exception". If an exception is declared at a method it is allowed to throw all derived exceptions. The caller of a method must respond to this behavior.

In Java, for example, all exceptions are derived from the "java.lang.Exception". The exceptions are declared at the methods.

In C++, for example, the exceptions are generated as structures. An exception is thrown as instance (e.g.: throw RuntimeException()). At the other side the exception should be caught as reference (...catch(RuntimeException & ) { ... }).

"Union": A union contains one element. The declaration of a union specifies the possible types.

"Array": An array contains any number of elements. The type of the elements is fixed and cannot be changed. "Any": An any contains one element. All types of elements are possible. An any contains a reference to the value and the type description of the type. With the type description the bridge can transform the value, if necessary.

In Java the any is, for example, represented by the class "Any", which contains a class as type description and a "java.lang.Object", which is the value. The basic types are wrapped to their proper classes. For example, a boolean value is an object of the class "java.lang.Boolean", which contains the value.

In C++ the any is represented through the class "Any". Each type generated by a C++ codemaker implements an function "getCppuType". This function is used to implement the template access operators "«=" and "»=". These operators insert and extract the value of the any.

"Sequence": A sequence is a generic data type. It contains the number of elements and the elements. In Java the specification of an array fulfills this specification. This is not true for C++. The array in C++ does not contain the number of elements. It is not possible to return a C++-array, e.g. Char[] getName() is not possible. It is difficult to manage the lifetime between the called and the caller, if only a pointer is returned. Therefore, in C++ a sequence is a template with the name "Sequence". The implementation contains a pointer to a structure which contains a pointer to the elements, the number of elements and the reference count. So it holds the binary specification. It is cheap to copy this sequence, because only the reference count is incremented.

The type description may exist or it may be runtime created. Each existing type is stored in a type repository along with the corresponding type description. The types of the type description are accessible through the full name of each type in the type repository. For example, the full name of the type "Xinterface" may be "com.sun.star.Xinterface".

In a type repository the types needed for any type description are stored in any appropriate way. If the API (application program interface) of the type repository is c-style, it is directly, that means via a binary representation, accessible from many binary specifications and it is quickly transferable. Since the type description of each element may be used during the generic marshaling of a call, the access performance of the type repository API is critical. Therefore, it is useful to use c-style structures, which describe each type. In addition, there may be interfaces declared which specify the access to the type repository. The module of this interface is "com.sun.star.typelib".

All functions or type declarations have the prefix "typelib_". All elements are reference counted. All elements start with the structure "typelib_TypeDescription". It is possible to cast all descriptions to this type. The function typelib typedescription newInterface will be used to create an interface description. The descriptions of structures, unions and sequences are created with the function typelib_typedescription_new. The description of the base type is initially part of the type repository. The function to get a type description is typelib_typedescription_getByName.

The Java API to the type repository is different for two reasons. First, Java cannot access the binary representation of the type descriptions directly. Second, the Java runtime system provides an API (core reflection) similar to the type repository API. Unfortunately, the features "unsigned", "oneway" and "out parameters" are missing in this API. For this reason, additional information is written into the classes.

The representation of the types depends on the hardware, the language and the operating system. The base type is swapped, for example, if the processor has little or big endian format. The size of the types may vary depending on the processor bus size. The alignment is processor and bus dependent. The alignment of the data structure is defined through the following algorithm:

Structure members are stored sequentially
in the order in which they are declared.
Every data object has an *alignment
requirement.* For structures, the
requirement is the largest of its members.
Every object is allocated an *offset* so that
*offset % alignment-requirement* == 0

If it is possible that the maximum alignment can be restricted (Microsoft C/C++ compiler, IBM C/C++ compiler) than the size maximum alignment is set to eight. Under this condition the alignment is set to min( n, sizeof( item ) ). The size is round up to the largest integral base type.

For the Microsoft and IBM C/C++ compiler the alignment of structure is set to eight using the "#pragma" statement. Table 1 shows the binary UNO, C++ and the Java types.

In order to address the proxy factory to generate the proxy the first binary specification has to be denominated. This will be a string, because it is extensible and the risk of double names is low. Then a tool for selecting the desired bridge is called. The first parameter for this tool is the "first binary specification" and the second parameter is the intermediate binary specification "UNO". Then a function is called for selecting the desired mapping of the bridge. The name of the function is, in this example, "getMappingFactory". A call to create a proxy in "objective c" will be "getMappingFactory("objective_c", "uno")". The implementation of the function will search a shared library named "objective_cuno" to find the right library that contains the proxy factory. In Java the tool may search for a class of name "objective_cuno".

In order to create a stub merely the parameters of the function have to be changed, in our example to "getMappingFactory("uno", "objective_c")". A stub implements the uno_interface. In the dispatch function the stub must call the right method of the original object. This is simpler in a programming language like Java, which has a "core reflection API", than in a programming language like C++, which has no binary standard and no API to call virtual methods.

In creating a proxy the proxy factory must generate method code to implement each method specified in the interface to be created. The only information to do this is a type description of the interface. For example: In Java (1.1) a binary class file (*.class) must be generated and loaded with the class loader. In the absence of a loader which can directly load binary classes a loader has to be provided. In C++ virtual method tables must be generated which delegate each call to the uno_interface. In the absence of a binary C++ specification individual compilers (version, switch,...) may have to be explored in order to implement this.

The proxy and the stub factory employ bridges for the generation of the proxy and the stub, respectively. A bridge implements infrastructure to exchange interfaces between two environments and is bidirectional.

An environment contains all objects which suffices the same specification and lies in the same process address space. The environment is specific for a programming language and for a compiler. For example, an object resides in the "msci" environment, if it is implemented in C++ and compiled with the Microsoft Visual C++ compiler. It may also be session specific for some reason, e.g. when running multiple Java virtual machines in one process. In the latter case these virtual machines have to be distinguished. However, this case is not a common case.

Regularly, the environment is the area in which the same binary specification is employed. Therefore, the first software program and the second software program belong to different environments.

Each bridge is implemented in a separate shared library. The name of the library is a connection of two environment names with an underscore ('_') between the names. Each bridge library exports two functions called "uno_ext_getMapping" and "uno initEnvironment". The first function is called to get the mappings.

In order to get a mapping uno_getMapping() has to be called. There is also a C++ class called cppu_Bridge which can be used with the source and destination environment names. The uno ext getMapping () call then receives its source and destination environments. The bridge library cannot be unloaded while any code of it is still needed. So both mappings and any wrapped interface (proxy) that is exported needs to modify a shared library wide reference count. If the shared library can be unloaded the reference count goes to zero.

The intention of an environment structure is to provide common functions like acquireInterface() and to know all proxy interfaces and their origins. This is specifically important because of the object identity of an interface. The proxy, the stub and the second program are defined to provide the same instance of the XInterface any time it is queried for it. This is important to test, if two interfaces belong to the same object (e.g. testing the source of an incoming event).

When interfaces are mapped around some environments in space, they must provide the same XInterface in each environment (e.g. in C++, equal XInterface pointers).

It is not recommended to only keep an eye on this object identity issue. It is well recommended to reuse any interface, i.e. rejecting the production of proxy interfaces as often as possible, because each constructed proxy interface leads to another indirection when called, and there will of course be many interfaces.

So an environment knows each wrapped interface (proxy) running in it and the origin of each of these interfaces. Table 2 shows the representation of an environment.

```
Table 2:
struct uno_Environment
{
        /**
         * a name for this environment
         */
        rtl_String * pName;
        /**
         * a free context pointer, that can be used for specific classes of
environments,
         * e.g. a jvm pointer
         */
        void * pContext;
        /**
         * Acquires this environment.
         *<BR>
         * @param pAccess this access interface
         */
        void (SAL_CALL * acquire)( uno_Environment * pEnv );
        /**
         * Releases this environment;
         * last release of environment will revoke the environment from runtime.
         *<BR>
         * @param pAccess this access interface
         */
        void (SAL_CALL * release)( uno_Environment * pEnv );

        /**
         * Tests if two environments are equal.
         *<BR>
         * @param pEnv1 one environment
         * @param pEnv2 another environment
         */
        sal_Bool (SAL_CALL * equals)( const uno_Environment * pEnv1,
                                      const uno_Environment * pEnv2 );

        /**
         * You register internal and external interfaces via this method.
         * Internal interfaces are proxies that are used in an environment.
         * External interfaces are interfaces that are exported to another
         * environment, thus providing an object identifier for this task.
         * This can be called an external reference.
         * Interfaces are held weakly at an environment; they demand a final
         * revokeInterface()call for each interface that has been registered.
         *<BR>
         * @param pEnv this environment
         * @param ppInterface inout parameter for the registered interface
         * @param ppOId inout parameter for the corresponding object id
         * @param pTypeDescr type description of interface
         * @param acquire function to acquire an interface;
         * this function provides a boolean return
         * value to signal if the acquisition was successful (necessary for
         * proxy interfaces)
         */
        void (SAL_CALL * registerInterface)( uno_Environment * pEnv,
                                      void ** ppInterface,
                                      rtl_String ** ppOId,
```

```
                                            typelib_InterfaceTypeDescription *
pTypeDescr,
                                            uno_regAcquireFunc acquire );
            /**
             * You have to revoke ANY interface that has been registered via this method.
             *<BR>
             * @param pEnv this environment
             * @param pOId object id of interface to be revoked
             * @param pTypeDescr type description of interface to be revoked
             */
            void (SAL_CALL * revokeInterface)( uno_Environment * pEnv,
                                    rtl_String * pOId,
                                    typelib_InterfaceTypeDescription * pTypeDescr );


            /**
             * Retrieves an interface identified by its object id and type from
             * this environment.
             *<BR>
             * @param pEnv this environment
             * @param ppInterface inout parameter for the registered interface;
             * (0) if none was found
             * @param pOId object id of interface to be retrieved
             * @param pTypeDescr type description of interface to be retrieved
             */
            void (SAL_CALL * getRegisteredInterface)( uno_Environment * pEnv,
                                        void ** ppInterface,
                                        rtl_String * pOId,
                                        typelib_InterfaceTypeDescription * pTypeDescr
        );


            /**
             * Retrieves the object identifier for a registered interface from
             * this environment.
             *<BR>
             * @param pEnv this environment
             * @param ppOId inout parameter for object id of interface; (0) if none was
found
             * @param pInterface a registered interface
             * @param pTypeDescr type description of interface
             */
            void (SAL_CALL * getRegisteredObjectIdentifier)( uno_Environment * pEnv,
                                        rtl_String ** ppOId,
                                        void * pInterface,
                                        typelib_InterfaceTypeDescription * pTypeDescr
        );


            /**
             * Disposing callback function pointer that can be set to get signalled
before
             * the environment is destroyed.
             *<BR>
             * @param pEnv environment that is being disposed
             */
            void (SAL_CALL * environmentDisposing)( uno_Environment * pEnv );


            /**
             * Computes an object identifier for the given interface; is called by
             * the environment implementation.
             * <BR>
             * @param pEnv corresponding environment
             * @param ppOId out param: computed id
             * @param pInterface an interface
             */
            void (SAL_CALL * computeObjectIdentifier)( uno_Environment * pEnv,
                                        rtl_String ** ppOId, void * pInterface );


            /**
             * Function to acquire an interface.
             *<BR>
             * @param pEnv corresponding environment
             * @param pInterface an interface
             */
            void (SAL_CALL * acquireInterface)( uno_Environment * pEnv, void * pInterface
        );
            /**
             * Function to release an interface.
             *<BR>
             * @param pEnv corresponding environment
             * @param pInterface an interface
             */
```

```
        void (SAL_CALL * releaseInterface)( uno_Environment * pEnv, void * pInterface
);

};
```

Environments, as defined above, consist of several fields. The first fields are used for identifying the environment, for specifying the hardware, the process, and maybe a session specific ID. There is also a context pointer which can be used for specific classes of environments, e.g. when it is known that there is a Java environment the virtual machine pointer can be stored there.

In order to use environments, these environments regularly have to be registered. An existing environment may be obtained by calling uno_getEnvironment(). A new environment can be created by either implementing it directly or by using a simple default implementation, which is frequently also sufficient, by calling, in the given example, uno_createDefaultEnvironment() with the environment's name and its acquire and release function for interfaces.

In order to improve the performance the bridges should use the shortest way between two environments. Especially, if there are programs instantiated in the identical environment, the communication between them should be direct and not over a proxy and a stub.

Mapping is the direct way to publish an interface in another environment. That means an interface is mapped from a source environment to a target environment so that methods may be invoked on a mapped interface in the target environment which are delegated to the originating interface in the source environment. A mapped interface may also be called a proxy or a stub.

Mapping an interface from an environment A to an environment B requires that several steps are performed: First, the origin of the interface from environment A has to be retrieved (call getInterfaceOrigin () on environment A). For this purpose, the environment A looks into its proxy interfaces table to check if there is such an interface already known (pointer and type). If the answer is no, then this interface must originally come from environment A, or else it must originate from any other environment and its origin must be known, since each proxy interface must have been registered with its origin. Second, an existing proxy interface has to be looked for in environment B with the same origin and type (call getInterface() on environment B). If a proxy interface of that origin and type is already in use in environment B, then this interface is acquired, or else a new proxy has to be constructed wrapping the source interface from environment A. The fresh proxy interface is then to be registered via registerInterface() on its first acquire() and revoked via revokeInterface() on its last release() from its environment. This second step has to be synchronized with other threads in order to get access to mapping tables of an environment by getting an access interface (lockAccess()) from the environment. Then an unlockAccess() function has to be called.

*Function of stub and proxy:*

The stub is encapsulated in an object which delivers and transforms the binary specification adapted calls to the stub. This object is the proxy of a stub in the first binary specification. This proxy which calls and attributes access will be similar with the binary specification from which the call was made. The calling to the stub is shown in Fig. 30.

First in step 3001 a type save call (e.g. acquire, queryInterface, ...) is made at the proxy 2303. This type save call will be transformed by the proxy 2303 to a corresponding call in step 3002 and dispatched to the stub 2304 in step 3003. After that, the return value of this call is transformed in step 3004 to the type expected by the binary specification.

The proxy is binary specification specific. So it is possible to put this object seamless into the binary specification.

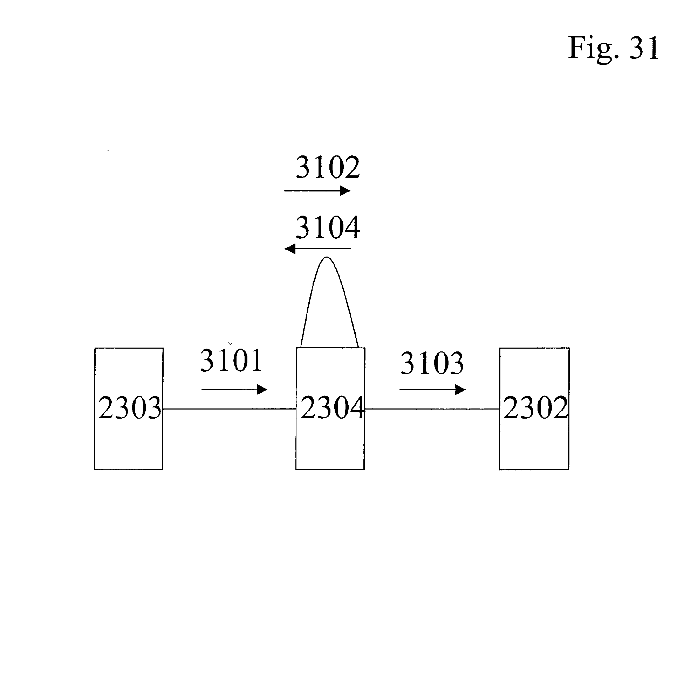

A stub object is also created which implements an uno_interface and transforms and delegates the calls to the second program implemented in a specific programming language (e.g. C++, Java,...). Fig. 31 describes a call through a stub 2304 to the second program 2302.

In a first step 3101 the dispatch function is called. If proxy and stub are running in the same process, the dispatch function of the stub is directly called by the proxy. In a distributed environment this is not possible. In this case the abstract virtual channel has to provide this functionality. On the proxy side the proxy will accept the request and transmit it to the stub side. On the stub side the stub has to call the dispatch function.

The stub 2304 detects the interface and the method which should be called at the second program 2302. Then in step 3102 the call was transformed into a specific binary specification by the stub 2304 and the second program 2302 was called in step 3103. After that, the return value was re-transformed to the other binary specification in step 3104.

The stub makes all transformations to the binary specification in which the second program is implemented. This is in this example the second binary specification. This makes it possible to implement the second program in the second binary specification. For example: In C++ exceptions, multiple inheritance and derivation can be used. In addition to the binary specification there are the type descriptions which must be mapped in the binary specification of the second program.

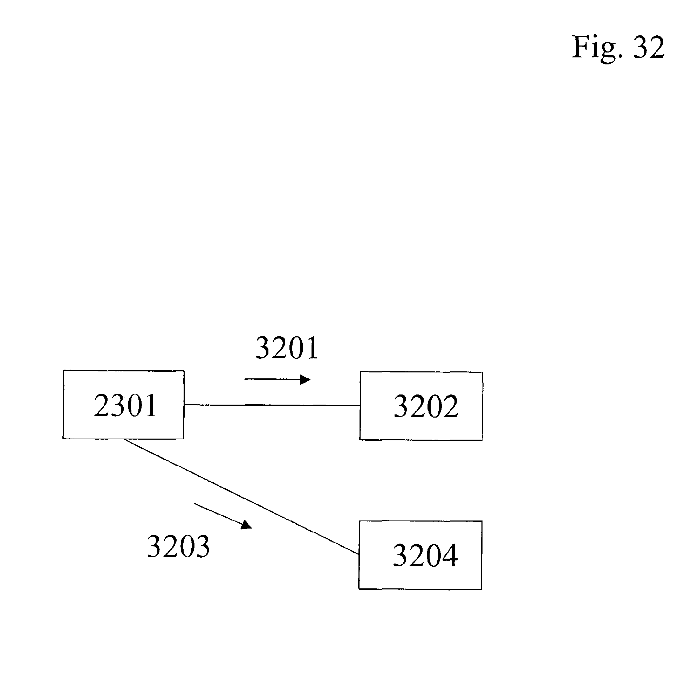

In order to enable to call from one binary specification or object model to another the stub and the proxy have to undergo a binding process. The proxy allows to call from one binary specification to the uno_interface, while the stub allows to call through the uno_interface to the second program. The binding of the stub and the proxy is initiated by the first software program 2301 and is shown in Fig. 32. In a first step 3201 the generation of a stub with the binary UNO specification in the stub factory 3202 is shown. In a second step 3203 a proxy is created based on the generated stub in the proxy factory 3204.

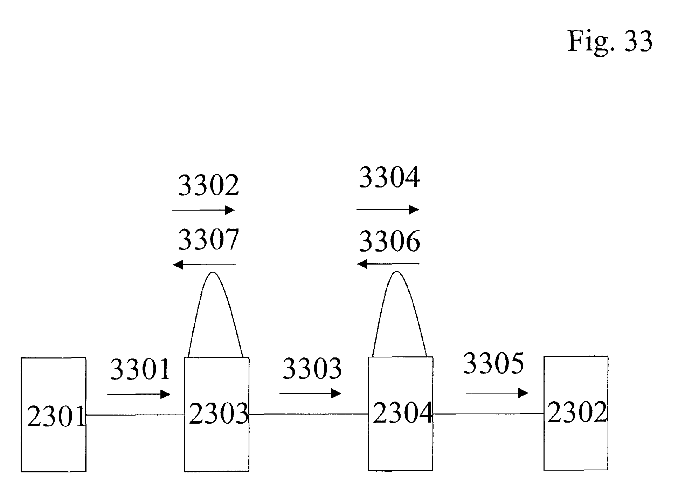

Each call to the proxy is delivered to the stub. The stub prepares the call and calls the second program in the corresponding binary specification. Fig. 33 shows exemplary the call from a first software program 2301 in a programming language like "objective c" to a second software program 2302 which may be implemented in the programming language C++.

The first software program 2301 uses the programming language "objective c". The proxy 2303 makes the interface available to the first software program 2301 in the first binary specification. This means the first software program 2301 uses the first binary specification to manipulate the second software program 2302. For example, this may be effected by the call "char * pOldText = [ myObject changeText: "test"]" in step 3301. The proxy 2303 transforms the parameter of type string to the binary specification in step 3302. Then, the proxy 2303 dispatches in step 3303 the call to the stub 2304. The necessary information, including a method type description, parameters, an address for the return value and an address for the exception, if any occurs, is delivered to the stub 2304. The stub 2304 transforms in step 3304 the string from the binary UNO specification to a second binary specification string. The stub 2304 calls the right method at the second software program 2302 in step 3305, in our example "pComponent->changeText("test")". The stub 2304 must catch all kind of exceptions thrown by the second software program 2302. If the method returns normally, the string is transformed in the step 3306 to the binary UNO specification and stored at the place given through the dispatch call. If an exception is thrown, the exception is transformed and stored at the address given through the dispatch call. After the dispatch call returns the proxy 2303 transforms in step 3307 the string to a first binary specification string and returns from the "changeText" call. If the call terminates by an exception, the exception is returned to the first software program 2301. It is up to the first binary specification in which manner the exception occurs (the "objective c" language does not support exception handling).

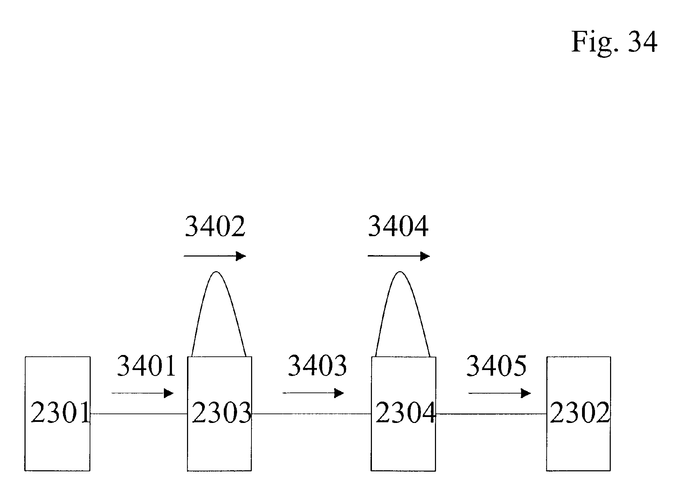

Fig. 34 shows the advantage of the binary UNO specification as an intermediate binary specification as it was described above. In a first step 3401 the first software program 2301, for example written in the programming language C++, transmits one command in a first binary specification, in this example the command "setText("a test")", to the proxy 2303. Regularly, the first software program will transmit more than one command, for example, also the acquire, the release and the queryInterface command as described above. This command will be transformed by the proxy 2303 in the next step 3402 from the first binary specification into the binary UNO specification. The command in the binary UNO specification contains the following information: the parameter "a test", the return address, an address for the exceptions, and the type description of the command "setText". The type description of this command will include, in this example, the name of the command (setText), the type of the parameter and the return type. This transformed command will be transmitted to the stub 2304 in the step 3403. Then, the stub 2304 transforms in step 3404 the command from the binary UNO specification into the second binary specification, employed by the second software program 2302 which was written, for example, in the programming language Java. The stub 2304 employs for this transforming step only one dispatch mechanism. This is a mechanism which will be employed for each command transmitted by the proxy 2303, since it is able to dispatch the name of the command and the other relevant information to the second software program 2302. In the final step 3405 the second software program 2302 executes the command "setText".

The response to this command will be transmitted and transformed in a corresponding way.

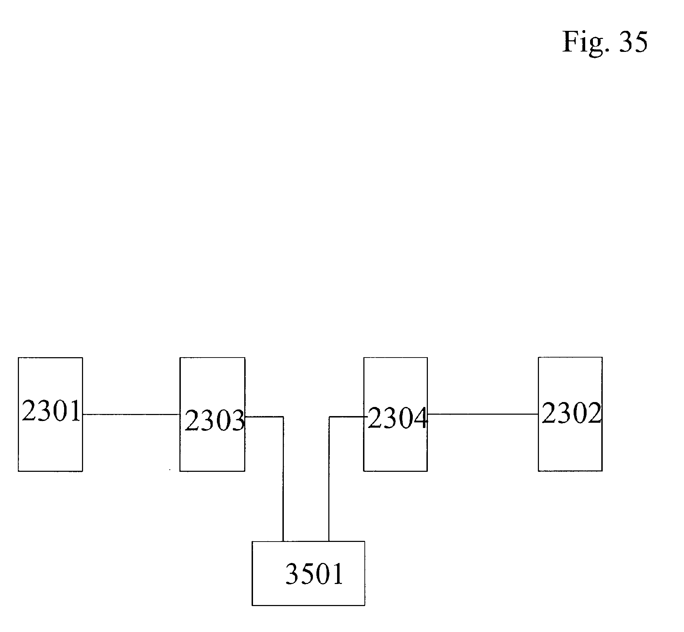

Fig. 35 shows a scenario where between the proxy 2303 and the stub 2304 an interceptor 3501 is inserted. This means, that the stub 2304 and the interceptor 3501 are created in a first step, while in a second step the stub 2303 is created based on information about the stub 2304 and the interceptor 3501. Therefore, the proxy 2303 will communicate only with the interceptor 3501 and not with the stub 2304.

Such an interceptor may be able to carry out, for example, an accounting function or a security check function. If, for example, the first software program 2301 wants to use a functionality of the second software program 2302, the interceptor may be able to discover if the user of the first software program is authorized to use this function and to debit the account of the user, if the user has to pay for this functionality. Such an interceptor may also be used, for example, to help debugging the communication between a first software program 2301 and a second software program 2302. In such a case the interceptor may provide an alarm function which will be initiated, if a predefined functionality is called. If the functions requested from the second software program 2302 may be grouped as one transaction, it may also be possible that an interceptor cancels all already executed functions of this group, if one function fails. Such an interceptor has the advantage that only one interceptor may be employed for every function or method of an interface and for all binary specifications of software programs which communicate via the intermediate binary specification used by the stub 2304 and the proxy 2303.

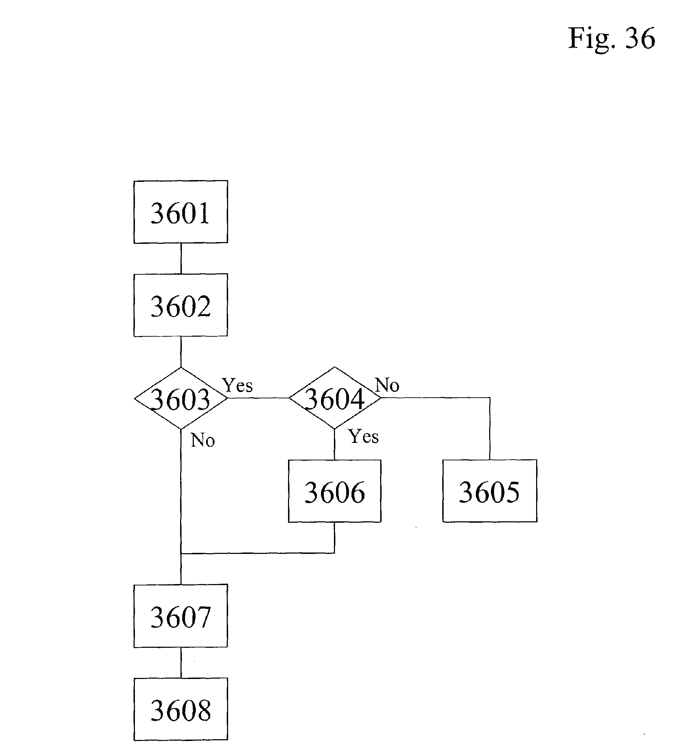

Fig. 36 shows a flow chart representing the use of an interceptor as checking and accounting function for a fax service. In this example, a user of a first software program using a first binary specification wants to use the fax service of a second software program using a second binary language. This fax service may distinguish between two kinds of users. A standard user may have to pay for each fax and a premium user may have to pay a monthly standard fee.

In order to enable the communication between the two software programs a stub and a proxy will be created and combined and arranged together with a specific interceptor in a way shown in Fig. 35. Then, the following steps may be carried out.

In step 3601 the first software program sends a command including the desired fax number, the corresponding fax file and the identity of the user to the proxy. The proxy transforms this command into the intermediate binary specification and forwards it to the interceptor in step 3602. The interceptor checks in step 3603 whether the user is a standard user.

If the answer is "Yes", that means the user is a standard user, the interceptor may deteremine in step 3604 whether the user has enough credit. If the answer to this question is "No", the user will be informed about his insufficient credit status and about the fact that the fax was yet not sent in step 3605. If the answer is "Yes", that means that the user has enough credit, the interceptor will initiate, in this example, the debiting of the user's account in step 3606 and forward the received command to the stub in step 3607.

If the answer in step 3603 is "No", that means the user is a premium user, the interceptor will forward the command received from the proxy directly to the stub in step 3607. The stub will transform this command from the intermediate binary specification into the second binary specification and forward this command to the second software program in step 3608. Then the fax may be sent.

It will be understood that the present invention is not limited to the examples given and explained in detail.

**Claims**

1. A method for presenting a runtime environment component service by a first computer system to a second computer system over a communication network, said method being performed by said first computer system and comprising:

   generating a user interface infrastructure, on said first computer system, to receive graphic user interface events from said second computer system and to send remote graphic user interface commands to said second computer system; and

   using said user interface infrastructure to initialize said runtime environment component service wherein said runtime environment component service sends graphic user interface commands to said user interface infrastructure.

2. The method of Claim 1 further comprising:
   receiving by said user interface infrastructure a remote input action event via said communication network, said remote input action event being generated in said second computer system by a lightweight component corresponding to said runtime environment component service.

3. The method of Claim 2 further comprising:
   transmitting an input event to said runtime environment component service by said user interface infrastructure in response to said remote input action event.

4. The method of Claim 3 further comprising:
   processing said input event by said runtime environment component service.

5. The method of Claim 4 further comprising:
   generating a graphic user interface command to said user interface infrastructure by said runtime environment component service.

6. The method of Claim 5 further comprising:
   transmitting a remote graphic user interface command to said lightweight component by said graphic user interface infrastructure in response to said graphic user interface command.

7. A method for presenting a runtime environment component service by a first computer system to a second computer system over a communication network, said method being performed by said first computer system and comprising:

receiving a remote input action command for a runtime environment component service via said communication network, said remote input action command being generated in said second computer system by a lightweight component corresponding to said runtime environment component service;

transmitting a local input action command to said runtime environment component service in response to said remote input action command;

processing said local input action command by said runtime environment component service;

generating a local output command by said runtime environment component service for a graphical user interface; and

transmitting a remote output command to said lightweight component in response to said local output command.

8. The method of Claim 7 wherein said runtime environment component service is in an office application suite.

9. The method of Claim 7 wherein said method further comprises:

receiving said local output command by a local window object and in response generating said remote output command by said local window object

10. The method of Claim 7 wherein said method further comprises:

receiving said remote input action command by a local window object and in response generating said local input action command by said local window object.

11. The method of Claim 9 wherein said method further comprises:

receiving said remote input action command by said local window object, and in response generating said local input action command by said local window object.

12. The method of claim 10 wherein said remote input action command is a user interface event.

13. The method of claim 11 wherein said remote input action command is a user interface event.

14. A method comprising:

receiving a command by a service executing on a computer system to create an infrastructure for executing a runtime environment component service, wherein said command is from a component executing on a user device; and

issuing an instruction to create an instance of a remote frame window on said user device.

15. The method of Claim 14 further comprising:

generating an instance of a local window on said computer system by said service, wherein said local window issues remote instructions to said remote window frame in response to instructions from said runtime environment component service.

16. The method of Claim 15 further comprising:

querying said remote frame window by said local window to determine properties of said remote frame window.

17. The method of Claim 15 further comprising:

generating, on said computer system, a local frame for said local window.

18. The method of Claim 17 further comprising:

receiving, by said local frame, a command from said user device to load a document.

19. The method of Claim 18 further comprising:

issuing, in response to said command to load a document, a command by said local frame to said runtime environment component service to create an instance of a runtime environment component service window on said computer system.

**20.** The method Claim 19 further comprising:
issuing a command by said local frame to said runtime environment component service to load said document in said runtime environment component service window.

**21.** The method of Claim 20 further comprising:
issuing a command from said runtime environment component service to said local window to display said document.

**22.** A method for enabling a user device to run a runtime environment component on another computer, said method comprising:

running a browser on said user device; and
running a lightweight component within said browser, wherein said lightweight component receives user input actions on said user device and generates corresponding user interface events to said another computer for processing by said runtime environment component.

**23.** The method of Claim 22 further comprising:
downloading lightweight component into said user device.

**24.** A computer program product comprising computer code comprising:
a remote frame window class comprising:

a remote output device interface; and
a remote frame window interface.

**25.** The computer program product of Claim 24 wherein said computer code further comprises:
a bean frame class comprising a frame interface.

**26.** The computer program product of Claim 24 wherein said computer code further comprises:
a bean window class comprising:

an event handler interface; and
an window peer interface.

**27.** The computer program product of Claim 24 wherein said computer code further comprises:
an abstract windowing toolkit.

**28.** A computer program product comprising computer code for a method for presenting a runtime environment component service by a first computer system to a second computer system over a communication network, said method being performed by said first computer system, said method comprising:

generating a user interface infrastructure, on said first computer system, to receive graphic user interface events from said second computer system and to send remote graphic user interface commands to said second computer system; and

using said user interface infrastructure to initialize said runtime environment component service wherein said runtime environment component service sends graphic user interface commands to said user interface infrastructure.

**29.** A computer program product comprising computer code for a method for presenting a runtime environment component service by a first computer system to a second computer system over a communication network, said method being performed by said first computer system and comprising:

receiving a remote input action command for a runtime environment component service via said communication network, said remote input action command being generated in said second computer system by a lightweight component corresponding to said runtime environment component service;

transmitting a local input action command to said runtime environment component service in response to said remote input action command;

processing said local input action command by said runtime environment component service;

generating a local output command by said runtime environment component service for a graphical user interface; and

transmitting a remote output command to said lightweight component in response to said local output instruction.

30. A method for presenting a runtime environment component service by a first computer system (111) to a second computer system (112A) over a communication network (113), said method being performed by said first computer system (111), and comprising the steps of:

a) receiving a request for a runtime environment component service via said communication network (113), said request being generated in said second computer system (112A) by a lightweight component (1210) corresponding to said runtime environment component service,

b) accessing a runtime environment component (1101, 1102, 1103, 1104, 1105, 1106, 1110) being able to provide said requested runtime environment component service,

c) executing said runtime environment component (1101, 1102, 1103, 1104, 1105, 1106, 1110) on said first computer system (111) for producing a result according to said received request for a runtime environment component service,

d) transmitting, over said network (113), a response comprising said result to said second computer system (112A).

31. A method for providing a runtime environment component service from a first computer system (111) over a communication network (113) to a second computer system (112A), said method being executed on said second computer system (112A), and comprising the steps of:

a) generating a request for a runtime environment component service by means of a lightweight component (1210) of said second computer system (112A), wherein said lightweight component (1210) corresponds to said runtime environment component service,

b) transmitting said request for said runtime environment component service to said first computer system (111) over said communication network (113), and

c) receiving a response comprising a result according to said requested runtime environment component service, said result being produced by a runtime environment component (1101, 1102, 1103, 1104, 1105, 1106, 1110) executed on said first computer system (111) and transmitted with said response by said first computer system (111) over said network (113).

32. A method according to any one of the claims 30, 31, wherein said lightweight component (1210) has a small size ls compared to the total size cs in bytes of the at least one runtime environment components (1101, 1102, 1103, 1104, 1105, 1106, 1110) providing a service corresponding to said lightweight component (1210) including any auxiliary software programs needed to execute said runtime environment components (1101, 1102, 1103, 1104, 1105, 1106, 1110).

33. A method according to claim 32, wherein said size ls is equal or less than ten percent of the total size cs.

34. A method according to any of the claims 30 - 33, wherein said lightweight component (1210) may be downloaded from said first computer system (111) to said second computer system (112A) over said network (113) in a time t equal or less than $(8 N / C_B) + t_1$, wherein N is the total size in bytes of the at least one runtime environment component (1101, 1102, 1103, 1104, 1105, 1106, 1110) providing a service corresponding to said lightweight component (1210), $C_B$ is the average bandwidth of the network (113), and $t_1$ is the total time needed to initialize said runtime environment components (1101, 1102, 1103, 1104, 1105, 1106, 1110) providing a service corresponding to said lightweight component (1210) in the local environment on said first computer system (111) in which it is embedded.

**35.** A method according to any of the claims 30 - 34, wherein said lightweight component (1210) is a non-visual lightweight component.

**36.** A method according to any of the claims 30 - 35, wherein said lightweight component (1210) may be downloaded from said first computer system (111) to said second computer system (112A) over said network (113) in a time t equal or less than ten seconds.

**37.** A method according to any of the claims 30 - 36, wherein said lightweight component (1210) is transmitted from said first computer system (111) over said network (113) to said second computer system (112A) prior to performing a method of any of the preceding claims.

**38.** A method according to any of the claims 30 - 37, wherein said runtime environment component services comprise at least one of the following functions: graphic functions, word processing functions, document editing functions, printing functions.

**39.** A method according to any of the claims 30 - 38, wherein said first computer system (111) is a server system, and said second computer system (112A) is a client system.

**40.** A method according to any of the claims 30 - 39, wherein said runtime environment components (1101, 1102, 1103, 1104, 1105, 1106, 1110) comprise at least one application programming interface (API).

**41.** A method according to any of the claims 30 - 40, wherein said runtime environment component services comprise output services on said second computer system (112A).

**42.** A method according to any of the claims 30 - 41, wherein said request for a runtime environment component service is transmitted by said second computer system (112A) into said network (113) by a communication component (1200) of said second computer system (112A), and wherein said response of said first computer system (111) to said request is transmitted into said network (113) by a communication component (1100) of said first computer system (111).

**43.** A method according to the preceding claim, wherein said communication component (1200) is able to generate a stub object (1200') and wherein said communication component (1100) is able to generate a proxy object (1100').

**44.** A method according to any of the claims 30 - 43, wherein said transmitted request complies with a predetermined communication protocol.

**45.** A method according to any of the claims 30 - 44, wherein said transmitted request comprises identification data of said first computer system (111), identification data of said second computer system (112A), identification data of said runtime environment component service, and input data to said runtime environment component service.

**46.** A method according to any of the claims 30 - 45, wherein said transmitted result comprises identification data of said first computer system (111), identification data of said second computer system (112A), identification data of said runtime environment component service, and output data of said runtime environment component service.

**47.** A method according to one of the claims 30 - 46, wherein said communication network (113) complies with the Internet protocol http.

**48.** A method according to any of the claims 30 - 47, wherein said request and said response are transmitted over a secure channel of said communication network (113).

**49.** A method according to any of the claims 30 - 48, wherein said first computer system (111) has access to runtime environment components (1101, 1102, 1103, 1104, 1105, 1106, 1110) which reside on a further computer system.

**50.** A method according to any of the claims 30 - 49, wherein said request for said runtime environment component service is generated in said second computer system (112A) by using a Remote Visualization Process (RVP) (1220) and a Abstract Window Toolkit (1260).

51. A method according to any of the claims 30 - 50, wherein said request for said runtime environment component service is received in said first computer system (111) by using a Remote Visualization Process (RVP) (1120) and a Visual Class Library (VCL) (1140).

52. A method according to any of the claims 30 - 51, wherein said response of said first computer system (111) is transmitted to said second computer system (112A) by using a Remote Visualization Process (RVP) (1120) and a Visual Class Library (VCL) (1140).

53. A method according to any of the claims 30 - 52, wherein said response of said first computer system (111) is received in said second computer system (112A) by using a Remote Visualization Process (RVP) (1220) and a Abstract Window Toolkit (1260).

54. A method for presenting runtime environment component services by a first computer system (111) performing the method according to claim 30, to a second computer system (112A) performing the method according to claim 31.

55. Data carrier means containing computer software for performing the method according to any of the claims 30 - 54.

56. A computer system for performing the method according to any of the claims 30 - 54.

57. A set of runtime environment components (1101, 1102, 1103, 1104, 1105, 1106, 1110) for use with a method according to any of the claims 30 - 54.

58. A data base comprising a set of runtime environment components (1101, 1102, 1103, 1104, 1105, 1106, 1110) relating to said runtime environment component services according to any of the claims 30 - 54.

Fig. 1

# Fig. 2

250

**User Device 102i**

CPU
201

Memory 210

Light Weight
Component 230

Memory 211

Light Weight
Component230

I/O Interface 202

— 103

120

Key-
Board
215

Printer
217

Mouse
218

295

Monitor
216

Network 106

100

Processor
282

Memory284

Application/
Service

112

Method
230

Network
Interface283

Start

301 — LtWt Comp  —No→  302  Device Capable?  —No→  Error

303

Yes (from LtWt Comp)

Yes (from Device Capable)  → Download Comp.

304

300

310 — Login

320

Initialize App

322 — Start App

Create UI

327 — Create Visual Infrastructure

326

328 — Create Environment Infrastructure

330 — Run App

335 — Exit App

End

**Fig. 3**

**Fig. 4**

Remote Client 102i

GUI

VCL

UNO TCP/IP

103/106

404

Application Layer

Components 120

StarOffice Desktop | StarOffice Bean | StarOffice Writer | . . .

App. Framework Library

SVX Library

Framework Layer

403

StarOffice API

402

Infrastructure Layer

UNO TCP/IP

UCB

Remote VCL

Virtual Operating System

Tools

401

System Abstraction Layer

Standard Template Library

Operating System Layer

RunTime Library

Server

Computer

System 100

Platform

Operating System

Fig. 5A

Fig. 5B

Fig. 5C

Fig. 5D

## Fig. 6

Panel
(JAVA AWT)

StarBean

Connection

Connector

ServiceFactory
(Deamon)
— XMultiServiceFactory

LoginService
— XLogin

ServiceFactory
(Application)
— XMultiServiceFactory

BeanService
— XRmStarOffice

ClientFactory
— XMultiServiceFactory

BeanFrame
— Xframe

RmFrame
Window

BeanWindow

StarWriter
— XLoadable

XDispatchProvider

XRmOutputDevice

XRmFrameWindow

XEventHdl

XWindowPeer

Interface XRmFrameWindow (Table 1)

    Interface XInterface (Table 2)

        Structure Uik (Table 3)

    Interface XEventHdl (Table 4)

        Interface XInterface (Table 2)

        Structure RmDropFileEvent (Table 5)

    Structure RmFrameResolution (Table 6)

    Structure IDLKeyNameInfo (Table 7)

Interface XRmOutputDevice (Table 8)

    Interface XInterface (Table 2)

    Structure IDLFontMetricData (Table 9)

    Structure KernPair (Table 9)

    Structure IDLFontData (Table 9)

    Structure IDLFont (Table 9)

    Interface XRmOutputDevice (Table 8)

Interface XMultiInstanceFactory (Table 10)

    Interface XInterface (Table 2)

Interface XMultiService Factory (Table 11)

    Interface XInterface (Table 2)

    Exception Exception (Table 12)

Interface XLogin (Table 13)

    Interface XInterface (Table 2)

    Enumeration ResultofLogin (Table 13)

Interface XRmStarOffice (Table 14)

    Enumeration StartUpError (Table 14)

    Interface XInterface (Table 2)

    Interface XMultiServiceFactory (Table 11)

    Interface XRmFrameWindow (Table 1)

**Fig. 7**

Interface XFrame (Table 15)

Interface XComponent (Table 16)

   Interface XInterface (Table 2)

   Interface XEventListener (Table 17)

      Interface XInterface (Table 2)

      Structure EventObject (Table 18)

         Interface XInterface (Table 2)

Interface XWindow (Table 19)

   Interface XComponent (Table 16)

   Structure Rectangle (Table 20)

   Interface XWindowListener (Table 21)

      Interface XEventListener (Table 17)

      Structure WindowEvent (Table 22)

         Structure EventObject (Table 18)

   Structure EventObject (Table 18)

   Interface XFocusListener (Table 23)

      Interface XEventListener (Table 17)

      Structure FocusEvent (Table 24)

         Structure EventObject (Table 18)

   Interface XKeyListener (Table 25)

      Interface XEventListener (Table 17)

      Structure KeyEvent (Table 26)

         Structure InputEvent (Table 27)

            Structure EventObject (Table 18)

   Interface XMouseListener (Table 28)

      Interface XEventListener (Table 17)

      Structure MouseEvent (Table 29)

         Structure InputEvent (Table 27)

   Interface XMouseMotionListener (Table 30)

      Interface XEventListener (Table 17)

      Structure MouseEvent (Table 29)

**Fig. 8A**

Interface XPaintListener (Table 31)

  Interface XEventListener (Table 17)

  Structure PaintEvent (Table 32)

    Structure EventObject (Table 18)

    Structure Rectangle (Table 20)

Interface XFramesSupplier (Table 33)

  Interface XFrame (Table 15)

  Interface XFrames (Table 34)

    Interface XIndexAccess (Table 35)

      Interface XElementAccess (Table 36)

        Interface XInterface (Table 2)

        Interface XIdlClass (Table 37)

          Interface XInterface (Table 2)

          Enumeration TypeClass (Table 38)

          Structure Uik (Table 3)

          Interface XIdlField (Table 39)

            Interface XIdlMember (Table 40)

              Interface XInterface (Table 2)

            Interface XIdlClass (Table 37)

            Enumeration FieldAccessMode (Table 41)

            Exception IllegalArgumentException (Table 42)

              Exception Exception (Table 12)

            Exception IllegalAccessException (Table 43)

              Exception Exception (Table 12)

          Interface XIdlMethod (Table 44)

            Interface XIdlMember (Table 40)

            Interface XIdlClass (Table 37)

            Structure ParamInfo (Table 45)

              Enumeration ParamMode (Table 46)

            Enumeration MethodMode (Table 47)

            Exception IllegalArgumentException (Table 42)

## Fig. 8B

Exception InvocationTargetException (Table 48)

Exception WrappedTargetException (Table 49)

Exception Exception (Table 12)

Interface XIdlArray (Table 50)

Interface XInterface (Table 2)

Exception IllegalArgumentException (Table 42)

Exception ArrayIndexOutOfBoundsException (Table 51)

Exception IndexOutOfBoundsException (Table 52)

Exception Exception (Table 12)

Exception IndexOutOfBoundsException (Table 52)

Exception WrappedTargetException (Table 49)

Interface XFrame (Table 15)

Interface XController (Table 53)

Interface XComponent (Table 16)

Interface XFrame (Table 15)

Interface XModel (Table 54)

Interface XComponent (Table 16)

Structure PropertyValue (Table 55)

Enumeration PropertyState (Table 56)

Structure Property (Table 57)

Interface XIdlClass (Table 37)

Interface XController (Table 53)

Exception NoSuchElementException (Table 58)

Exception Exception (Table 12)

Interface XInterface (Table 2)

Interface XFrameActionListener (Table 59)

Interface XEventListener (Table 17)

Structure FrameActionEvent (Table 60)

Structure EventObject (Table 18)

Interface XFrame (Table 15)

Enumeration FrameAction (Table 61)

# Fig. 8C

Interface XDispatchProvider (Table 62)

    Interface XInterface (Table 2)

    Interface XDispatch (Table 63)

        Interface XInterface (Table 2)

        Structure URL (Table 64)

        Structure PropertyValue (Table 55)

        Interface XStatusListener (Table 65)

            Interface XEventListener (Table 17)

            Structure FeatureStateEvent (Table 66)

                Structure EventObject (Table 18)

                Structure URL (Table 64)

    Structure URL (Table 64)

    Structure DispatchDescriptor (Table 67)

        Structure URL (Table 64)

Interface XLoadable (Table 68)

    Interface XInterface (Table 2)

    Interface XLoadListener (Table 69)

        Interface XEventListener (Table 17)

        Structure EventObject (Table 18)

**Fig. 9**

Interface XWindowPeer (Table 70)

Interface XComponent (Table 16)

Interface XToolkit (Table 71)

    Interface XInterface (Table 2)

    Interface XWindowPeer (Table 70)

    Structure Rectangle (Table 20)

    Structure WindowDescriptor (Table 72)

        Enumeration WindowClass (Table 73)

        Interface XWindowPeer (Table 72)

        Structure Rectangle (Table 20)

    Exception IllegalArgumentException (Table 42)

    Interface XDevice (Table 74)

        Interface XInterface (Table 2)

        Interface XGraphics (Table 75)

            Interface XInterface (Table 2)

            Interface XDevice (Table 74)

            Structure SimpleFontMetric (Table 76)

            Interface XFont (Table 77)

                Interface XInterface (Table 2)

                Structure FontDescriptor (Table 78)

                    Enumeration FontSlant (Table 79)

                Structure SimpleFontMetric (Table 76)

            Structure FontDescriptor (Table 78)

            Enumeration RasterOperation (Table 80)

            Interface XRegion (Table 81)

                Interface XInterface (Table 2)

                Structure Rectangle (Table 20)

            Interface XDevice (Table 74)

## Fig. 10A

Interface XDisplayBitmap (Table 82)

Interface XInterface (Table 2)

Structure Gradient (Table 83)

Enumeration GradientStyle (Table 84)

Structure DeviceInfo (Table 85)

Structure FontDescriptor (Table 78)

Interface XFont (Table 77)

Interface XBitmap (Table 86)

Interface XInterface (Table 2)

Structure Size (Table 87)

Interface XDisplayBitmap (Table 82)

Interface XRegion (Table 81)

Interface XPointer (Table 88)

Interface XInterface (Table 2)

Structure Rectangle (Table 20)

# Fig. 10B

Fig. 11

111

| 1101 |
|------|
| 1102 |
| 1103 |
| 1104 |
| 1105 |
| 1106 |

1100

113

112B

112A

| 1200 |
|------|
| 1210 |
| 1250 |

| 1200 |
|------|
| 1210 |
| 1250 |

Fig. 12

| 1101 |
| 1102 |
| 1103 |
| 1104 |
| 1105 |
| 1106 |

111

1100

113

112A

1200

Request

1210

Call

1250

Fig. 13

111

| 1101 |
| 1102 |
| 1103 |
| 1104 |
| 1105 |
| 1106 |

1100

113

112A

1200

1210

Fig. 14

Fig. 15

Fig. 16

Fig. 17

Fig. 18

Fig. 19

Panel

StaOfficeBean

connect()
disconnect()
StarBean()
openConnection()
setXBeanVclComponent()
setUser()
setServerUrl()
serverHasStarted()
createBeanContainerWindow()
createJavaBeanFrame()

Connector

Server
User
Password

connect()
disconnect()
getConnector()
findConnector()
addConnector()
startStarOffice()
getBeanServer()
getServiceFactory()

RmStarOffice

RmStarOffice()
queryInterface()
Start()
CreateBeanWindow()

XRmBeanServer

XRmBeanServer()
Start()
CreateBeanWindow()
queryInterface()

Connection

connect()
createObject()
login()

MultiServiceFactory

createInstance()
MultiServiceFactory()

XMultiServiceFactory

MultiServiceFactory()
createInstance()

ORmFrameWindow

ORmFrameWindow()

OClientFactory

OClientFactory()

JavaBeanFrame

initialisize()

XFrame

initialisize(xWindow)

BeanContainerWindow

XWindow    XWindowPeer

Fig. 20

```
┌──────────────┐
│     2010     │
└──────────────┘
┌──────────────┐
│     2020     │
└──────────────┘
┌──────────────┐
│     2030     │
└──────────────┘
┌──────────────┐
│     2040     │
└──────────────┘
┌──────────────┐
│     2050     │
└──────────────┘
        ◇ 2060          yes ──────┐
        │ no                      │
        │                ┌──────────────┐
        │                │     2061     │
        │                └──────────────┘
        │                ┌──────────────┐
        │                │     2062     │
        │                └──────────────┘
        │                     ◇ 2063        no ──────┐
        │                      yes                   │
        │                ┌──────────────┐            │
        │                │     2064     │            │
        │                └──────────────┘            │
        │                ┌──────────────┐            │
        │                │     2065     │            │
        │                └──────────────┘            │
        │                ┌──────────────┐            │
        │                │     2066     │            │
        │                └──────────────┘            │
        │                ┌──────────────┐            │
        │                │     2067     │            │
        │                └──────────────┘            │
        │                ┌──────────────┐            │
        │                │     2068     │            │
        │                └──────────────┘            │
        │                ┌──────────────┐            │
        │                │     2069     │            │
        │                └──────────────┘            │
┌──────────────┐   ┌──────────────┐   ┌──────────────┐
│     2080     │   │     2070     │   │     2090     │
└──────────────┘   └──────────────┘   └──────────────┘
```

2110

No of words: 57.000
No of lines: 13.000
Author: Jeffry Smith
Date: 31-Jan-99

2130

2140

2120

2150    2160

Fig. 21

EP 1 130 510 A2

Fig. 22

2240

2260

2250

2230

2220

2210

Fig. 23

2308

Fig. 24

Fig. 25

```
┌─────────────┐
│             │
│    2500     │
│             │
└──────┬──────┘
       │
       ▼
┌─────────────┐
│             │
│    2501     │
│             │
└──────┬──────┘
       │
       ▼
┌─────────────┐
│             │
│    2502     │
│             │
└──────┬──────┘
       │
       ▼
┌─────────────┐
│             │
│    2503     │
│             │
└──────┬──────┘
       │
       ▼
┌─────────────┐
│             │
│    2504     │
│             │
└─────────────┘
```

Fig. 26

```
┌─────────────┐
│             │
│    2600     │
│             │
└──────┬──────┘
       │
       ▼
┌─────────────┐
│             │
│    2601     │
│             │
└──────┬──────┘
       │
       ▼
┌─────────────┐
│             │
│    2602     │
│             │
└──────┬──────┘
       │
       ▼
┌─────────────┐
│             │
│    2603     │
│             │
└─────────────┘
```

Fig. 27

2700

2701

2702

2703

Fig. 28

```
                    ┌──────────┐
                    │          │
                    │   2805   │
                    │          │
                    └─────┬────┘
                          │
                          │              2800
                          │            /
┌──────────────┐   ┌──────┴──────┐
│              │   │     2801    │
│     2806     ├───┤─────────────┤
│              │   │     2802    │
└──────────────┘   ├─────────────┤
                   │     2803    │
                   └──────┬──────┘
                          │
                          │
                          │
                    ┌─────┴────┐
                    │          │
                    │   2804   │
                    │          │
                    └──────────┘
```

Fig. 29

2900

2902

2901

Fig. 30

3002

3004

3001

3003

2301

2303

2304

Fig. 31

Fig. 32

3201

2301

3202

3203

3204

Fig. 33

Fig. 34

Fig. 35

```
┌──────┐       ┌──────┐        ┌──────┐       ┌──────┐
│ 2301 │───────│ 2303 │        │ 2304 │───────│ 2302 │
└──────┘       └──────┘        └──────┘       └──────┘
                   │              │
                   │              │
                ┌──────────────────┐
                │      3501        │
                └──────────────────┘
```

Fig. 36